(19) Europäisches Patentamt / European Patent Office / Office européen des brevets

(11) **EP 4 697 443 A1**

(12) **EUROPEAN PATENT APPLICATION**
published in accordance with Art. 153(4) EPC

(43) Date of publication:
**18.02.2026 Bulletin 2026/08**

(21) Application number: **24822680.5**

(22) Date of filing: **11.06.2024**

(51) International Patent Classification (IPC):
**H01M 10/42** (2006.01)   **G06N 20/00** (2019.01)

(52) Cooperative Patent Classification (CPC):
**G06N 20/00; H01M 10/42**

(86) International application number:
**PCT/CN2024/098409**

(87) International publication number:
**WO 2024/255730 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.06.2023   CN 202310713474**
**03.07.2023   CN 202310812819**
**17.08.2023   CN 202311041440**
**24.05.2024   CN 202410658068**

(71) Applicant: **Nanjing Chervon Industry Co., Ltd.**
**Nanjing, Jiangsu 211106 (CN)**

(72) Inventors:
• **YUWEN, Shijiao**
**Nanjing, Jiangsu 211106 (CN)**
• **YANG, Dezhong**
**Nanjing, Jiangsu 211106 (CN)**
• **XU, Zhen**
**Nanjing, Jiangsu 211106 (CN)**
• **XU, Qiang**
**Nanjing, Jiangsu 211106 (CN)**
• **YANG, Dong**
**Nanjing, Jiangsu 211106 (CN)**
• **JI, Yongchao**
**Nanjing, Jiangsu 211106 (CN)**
• **WU, Di**
**Nanjing, Jiangsu 211106 (CN)**

(74) Representative: **Sun, Yiming**
**HUASUN Patent- und Rechtsanwälte**
**Friedrichstraße 33**
**80801 München (DE)**

(54) **BATTERY PACK, ELECTRONIC COMBINATION, BATTERY MANAGEMENT SYSTEM, POWER TOOL SYSTEM, AND CONTROL METHOD FOR POWER TOOL**

(57)     Provided is a battery pack for powering a power tool. The battery pack includes: a sensor that generates sensor data indicating an operating parameter of the battery pack; and an electronic controller including a machine learning program. The electronic controller is configured to: receive the sensor data; process the sensor data using the machine learning program, where the machine learning program includes a trained neural network model; and use the machine learning program to generate an output based on the sensor data, where the output indicates at least one of a state of charge (SOC), a state of temperature (SOT), a state of health (SOH), and a state of power (SOP) of a cell. The effective utilization of a battery is improved.

EP 4 697 443 A1

10

13

14

11

12

FIG. 1

**Description**

This application claims priority to Chinese Patent Application No. 202310713474.X filed with the China National Intellectual Property Administration (CNIPA) on Jun. 15, 2023, Chinese Patent Application No. 202310812819.7 filed with the CNIPA on Jul. 3, 2023, Chinese Patent Application No. 202311041440.7 filed with the CNIPA on Aug. 17, 2023, and Chinese Patent Application No. 202410658068.2 filed with the CNIPA on May 24, 2024, the disclosures of which are incorporated herein by reference in their entireties.

**TECHNICAL FIELD**

The present application relates to a battery pack, an electronic combination, a battery management system, a power tool system, and a control method for a power tool and belongs to the field of power tools.

**BACKGROUND**

In the related art, a battery pack and a battery management system are core technologies in the field of power tools, which are related to the life, operating capability, and user experience of a direct current power tool. In the related art, a battery pack or a power management system typically adopts a battery charging and discharging strategy generated based on laboratory data. The charging and discharging strategy is then solidified in an internal embedded software and hardware system to manage and protect a battery. After the battery pack leaves the battery assembly plant, in the event of a failure, the battery supplier is required to acquire battery data on site and perform failure analysis. In addition, the pre-formulated battery charging and discharging strategy cannot optimize the charging and discharging efficiency of the battery in different environments.

This part provides background information related to the present application, and the background information is not necessarily the existing art.

**SUMMARY**

An object of the present application is to provide a battery pack, an electronic combination, and a battery management system with higher charging and discharging efficiency and greater intelligence.

To achieve the preceding object, the present application adopts the technical solutions below.

A battery pack for powering a power tool includes: a housing; a cell accommodated in the housing; a sensor electrically connected to the cell, where the sensor is configured to generate sensor data indicating an operating parameter of the battery pack; and an electronic controller electrically connected to the sensor, where the electronic controller includes an electronic processor and a memory, the memory includes a machine learning program for execution by the electronic processor, and the electronic controller is configured to: receive the sensor data; process the sensor data using the machine learning program, where the machine learning program includes a trained neural network model; and use the machine learning program to generate an output based on the sensor data, where the output indicates at least one of a state of charge (SOC), a state of temperature (SOT), a state of health (SOH), and a state of power (SOP) of the cell.

In some examples, the neural network model is a physics-informed neural network (PINN) model.

In some examples, the physics-informed neural network (PINN) model uses a heat transfer partial differential equation as a constraint of a neural network.

In some examples, the sensor data includes at least one of current data, voltage data, temperature data, and time data.

In some examples, the neural network model is a deep neural network.

In some examples, the electronic controller resamples a preset raw data set to create an augmented sample and trains a series of extreme learning machines based on the sample.

In some examples, the neural network model is a recurrent neural network.

In some examples, the battery pack for powering a power tool further includes a communication module, where a machine learning control program is generated outside the battery pack by being trained on preset sensor data and a related output, and is received by the communication module.

In some examples, the battery pack is a detachable battery pack.

In some examples, the battery pack is a rechargeable battery pack.

A battery pack for powering a power tool includes: a housing; a cell accommodated in the housing; a power tool interface disposed on the housing and configured to be coupled to the power tool; a discharging circuit electrically connected to the cell and the power tool interface separately, where the discharging circuit is configured to transfer electrical energy to the power tool via the power tool interface; a sensor electrically connected to the cell, where the sensor is configured to generate sensor data indicating an operating parameter of the battery pack; and a first electronic controller at least configured to control the discharging circuit, where the electronic controller includes an electronic processor and a memory, the memory includes a machine learning program for execution by the electronic processor, and the electronic controller is configured to: receive the sensor data; process the sensor data using the machine learning program; and use the machine learning program to generate an output based on the sensor data and adjust a protection threshold of the battery pack based on the generated output.

In some examples, the first electronic controller further includes a second machine learning program, and the second machine learning program controls the discharging circuit based on the protection threshold of the battery pack.

In some examples, the sensor data includes current data, voltage data, temperature data, and time data.

In some examples, the protection threshold includes at least one of an over-temperature protection threshold, an under-temperature protection threshold, an overvoltage protection threshold, an undervoltage protection threshold, and an overcurrent protection threshold.

In some examples, the electronic controller controls power supply from the battery pack to the power tool based on the protection threshold.

In some examples, the protection threshold is sent to the power tool via the power tool interface, and the power tool controls power consumption of the power tool based on the protection threshold.

In some examples, the battery pack for powering a power tool further includes a second electronic controller, where the second electronic controller is at least configured to control the discharging circuit, and the second electronic controller controls the discharging circuit based on the protection threshold of the battery pack.

In some examples, the second electronic controller includes a machine learning program.

In some examples, the second electronic controller and the first electronic controller are disposed on the same circuit board.

In some examples, the second electronic controller and the first electronic controller are disposed on different circuit boards.

A battery pack for powering a power tool includes: a housing; a cell accommodated in the housing; a power tool interface disposed on the housing and configured to be coupled to the power tool and communicate with the power tool; a discharging circuit electrically connected to the cell and the power tool interface separately, where the discharging circuit is configured to transfer electrical energy to the power tool via the power tool interface; and an electronic controller including an electronic processor and a memory, where the memory includes a machine learning program for execution by the electronic processor, and the electronic controller is configured to: collect operating data from the power tool through the power tool interface; process the operating data using the machine learning program; and use the machine learning program to generate an output based on the operating data and select a discharging mode and control the discharging circuit based on the generated output.

In some examples, the discharging mode includes a performance mode, a power consumption mode, and a balancing mode.

In some examples, the discharging mode includes a series mode and a parallel mode.

In some examples, the machine learning program identifies the type of the power tool according to the operating data.

In some examples, the machine learning program identifies a use habit of a user of the power tool according to the operating data.

In some examples, the electronic controller controls power supply from the battery pack to the power tool based on the discharging mode.

In some examples, the discharging mode is sent to the power tool via the power tool interface, and the power tool controls power consumption of the power tool based on the discharging mode.

In some examples, the battery pack for powering a power tool further includes a communication module, where a machine learning control program is generated outside the battery pack by being trained on preset sensor data and a related output, and is received by the communication module.

In some examples, a machine learning control program is generated outside the battery pack by being trained on preset sensor data and a related output, and is sent to the battery pack by the power tool via the power tool interface.

In some examples, each discharging mode predefines parameter information such as a discharging voltage, a discharging current, a maximum discharging current, and a discharging cutoff voltage, and a combination thereof.

A battery pack includes: a housing; a cell group accommodated in the housing, where the cell group includes multiple single cells; a display apparatus disposed on the housing and configured to indicate a state of the battery pack; a sensor electrically connected to the cell group, where the sensor is configured to generate sensor data indicating an operating parameter of the battery pack; a circuit board electrically connected to the cell group and the sensor, where multiple electronic elements are disposed on the circuit board; and an electronic controller disposed on the circuit board and electrically connected to the sensor, where the electronic controller includes an electronic processor and a memory, the memory includes a machine learning program for execution by the electronic processor, and the electronic controller is configured to: receive the sensor data; process the sensor data using the machine learning program; use the machine learning program to generate an output based on the sensor data, where the generated output indicates failures of the multiple single cells or failures of the multiple electronic elements; and control, according to the generated output, the display apparatus to display an abnormal state.

In some examples, the battery pack further includes a communication module, where the communication module is configured to be communicatively connected to a remote device, and the electronic controller is further configured to control, according to the generated output, the communication module to send the failures to the remote device.

In some examples, the remote device is at least one selected from the following groups: a server, a smartphone, a tablet computer, and a laptop computer.

In some examples, the communication module includes at least one device selected from the following groups: Bluetooth, a local area network, a wireless network, and a cellular network.

In some examples, the output includes cell impedance data, cell temperature data, a life warning, an aging warning, or an installation failure warning.

In some examples, the display apparatus receives a control signal through a device that generates a visual signal or an auditory signal and communicates state information to a user.

In some examples, the display apparatus includes an indicator light, a buzzer, or a display screen.

In some examples, the battery pack further includes a power tool interface, where the power tool interface is disposed on the housing and configured to be coupled to the power tool and communicate with the power tool, and the electronic controller is further configured to send the failures to the power tool through the power tool interface according to the generated output.

In some examples, the battery pack further includes a power tool interface for charging, where the power tool interface for charging is disposed on the housing and configured to be coupled to a charger and cause the charger to charge the battery pack, and the electronic controller is further configured to send the failures to the charger through the power tool interface according to the generated output.

In some examples, the electronic controller predicts lithium plating, folding, and a structural change of a battery by implementing a neural network.

A battery pack includes: a housing; a cell group accommodated in the housing, where the cell group includes multiple single cells; a communication module configured to be communicatively connected to a remote device; a sensor electrically connected to the cell group, where the sensor is configured to generate sensor data indicating an operating parameter of the battery pack; a circuit board electrically connected to the cell group and the sensor, where multiple electronic elements are disposed on the circuit board; and an electronic controller disposed on the circuit board and electrically connected to the sensor, where the electronic controller includes an electronic processor and a memory, the memory includes a machine learning program for execution by the electronic processor, and the electronic controller is configured to: receive the sensor data; process the sensor data using the machine learning program; use the machine learning program to generate an output based on the sensor data, where the generated output indicates failures of the multiple single cells or failures of the multiple electronic elements; and control, according to the generated output, the communication module to send the failures to the remote device.

In some examples, the remote device is at least one selected from the following groups: a server, a smartphone, a tablet computer, and a laptop computer.

In some examples, the communication module includes at least one device selected from the following groups: Bluetooth, a local area network, a wireless network, and a cellular network.

An electronic combination includes: a battery pack which includes a housing, a cell group accommodated in the housing, where the cell group includes multiple single cells, and a sensor, where the sensor is supported by the housing and configured to generate sensor data indicating an operating parameter of the battery pack; a switching element configured to control an input current of the battery pack or an output current of the battery pack; and an electronic controller communicatively connected to the sensor, where the electronic controller includes an electronic processor and a memory, the memory includes a first machine learning program and a second machine learning program for execution by the electronic processor, and the electronic controller is configured to: receive the sensor data; process the sensor data using the first machine learning program and generate a first output based on the sensor data; process the sensor data using the second machine learning program and generate a second output based on the sensor data; and generate a third output based on the first output and the second output and control the switching element based on the generated third output.

In some examples, the electronic controller is further configured to adjust a protection threshold based on the first output and determine, based on a comparison result of the second output and the protection threshold, whether to charge the cell group.

In some examples, the electronic controller is further configured to adjust a protection threshold based on the first output and adjust a charging state of the cell group based on a calculation result of the second output and the protection threshold.

In some examples, the electronic controller is further configured to adjust a protection threshold based on the first output and determine, based on a comparison result of the second output and the protection threshold, whether to cause the cell group to discharge electricity.

In some examples, the electronic controller is further configured to adjust a protection threshold based on the first output and adjust a discharging state of the cell group based on a calculation result of the second output and the protection threshold.

In some examples, the protection threshold is at least one of an overvoltage protection threshold, an undervoltage protection threshold, an overcurrent protection threshold, or an over-temperature protection threshold.

In some examples, the switching element and the electronic controller are disposed in the battery pack.

In some examples, the electronic controller is disposed in the battery pack.

In some examples, the switching element and the electronic controller are disposed outside the battery pack.

In some examples, the electronic controller is disposed outside the battery pack.

A battery management system includes: a wireless communication apparatus configured to support at least one wireless communication protocol; an electronic controller electrically connected to the wireless communication apparatus, where the electronic controller includes an electronic processor and a memory, and the memory includes a machine learning program for execution by the electronic processor; multiple groups of cell modules, where each group of cell modules includes at least one cell, a slave controller, a sensor, a wireless communication module, and a bypass circuit. The slave controller is electrically connected to the sensor and the wireless communication module separately and is configured to: receive sensor data that is generated by the sensor and indicates an operating parameter of each of the at least one cell and send the sensor data to the electronic controller through the wireless communication module; and acquire returned information from the electronic controller through the wireless communication module and control the bypass circuit based on the returned information. The electronic controller is configured to: receive sensor data of the multiple groups of cell modules from the multiple groups of cell modules through the wireless communication apparatus; process the sensor data of the multiple groups of cell modules using the machine learning program, where the machine learning program is a trained machine learning model; use the machine learning program to generate the returned information based on the sensor data of the multiple groups of cell modules; and send the returned information to the slave controller through the wireless communication apparatus.

In some examples, the bypass circuit is turned on or off such that a current is controlled to pass through a cell module or not.

In some examples, the wireless communication apparatus and the wireless communication module support a Bluetooth communication protocol, infrared communication, or near-field communication (NFC).

In some examples, the wireless communication apparatus further supports a wireless fidelity (Wi-Fi) network or a cellular network.

In some examples, a machine learning control program is trained based on preset sensor data and a related output to be generated outside a battery pack and is received by the wireless communication apparatus.

In some examples, the wireless communication apparatus is configured to wirelessly receive a machine learning program update from an external system apparatus, the machine learning program is an adjustable machine learning program, and a machine learning controller is configured to update the machine learning program based on the machine learning program update.

In some examples, the wireless communication apparatus, the electronic controller, and the multiple groups of cell modules are disposed in a housing of a battery pack.

In some examples, the wireless communication apparatus and the electronic controller are disposed in a housing of a power tool, the multiple groups of cell modules are disposed in a housing of a battery pack, and the battery pack powers the power tool.

In some examples, the multiple groups of cell modules are disposed in a housing of a battery pack, the wireless communication apparatus and the electronic controller are disposed in a housing of a charger, and the charger charges the battery pack.

In some examples, the multiple groups of cell modules are disposed in a housing of a battery pack, the wireless communication apparatus and the electronic controller are disposed in an external device, and the external device is communicatively connected to the battery pack.

A charger includes: a housing; a battery pack interface disposed on the housing and configured to be coupled to a battery pack; a charging circuit configured to be electrically connected to the battery pack interface and charge the battery pack; and an electronic controller including an electronic processor and a memory, where the memory stores a machine learning program executable by the electronic processor, and the machine learning program includes a vector model and multiple reference vectors. The electronic controller is configured to: record charging data of the battery pack generated when the battery pack is charged by the charging circuit; vectorize the charging data using the vector model to obtain a charging feature vector of the battery pack; calculate the distances between the charging feature vector and the multiple reference vectors separately; and select an aging parameter corresponding to a reference vector with the minimum distance as an aging evaluation value for the battery pack.

In some examples, the charging data includes at least one of charging time, an ambient temperature, a charging voltage, a charging current, a charging temperature, and a state of charge (SOC) of the battery pack, a cell voltage, a cell voltage mean, a cell voltage standard deviation, the maximum cell voltage, the minimum cell voltage, and the difference between the maximum cell voltage and the minimum cell voltage of each cell in the battery pack, and a measured temperature, a measured temperature mean, a measured temperature standard deviation, the maximum measured temperature, the minimum measured temperature, and the difference between the maximum measured temperature and the minimum measured temperature at each temperature measurement point in the battery pack.

In some examples, the aging parameter is a state of health (SOH) of the battery pack.

In some examples, the electronic controller is further configured to use the mean of multiple charging feature vectors in the same SOH interval as a reference vector corresponding to the SOH interval.

In some examples, the aging parameter is a remaining maximum capacity of the battery pack and/or a direct current internal resistance value of the battery pack.

In some examples, the battery pack interface includes a positive terminal, a negative terminal, and a communication terminal.

In some examples, the electronic controller is further configured to transmit the aging evaluation value for the battery pack to the battery pack through the communication terminal.

In some examples, the battery pack is detachably connected to a power tool and powers the power tool.

In some examples, the charger further includes a communication module communicatively connected to a remote device and electrically connected to the electronic controller, where the electronic controller is further configured to transmit the aging evaluation value for the battery pack to the remote device or the power tool through the communication module.

In some examples, the vector model includes a Siamese network model.

A battery pack for powering a power tool includes: a housing; a cell accommodated in the housing; a sensor assembly electrically connected to the cell, where the sensor assembly is configured to generate sensor data indicating an operating parameter of the battery pack; an electronic controller electrically connected to the sensor assembly and including an electronic processor and a memory, where the memory stores a machine learning program executable by the electronic processor. The electronic controller is configured to: receive the sensor data, where the sensor data includes first-type sensor data and second-type sensor data; use the machine learning program to generate a predicted temperature change rate of the battery pack based on the first-type sensor data; calculate a measured temperature change rate of the battery pack based on the second-type sensor data; and issue an alert of a thermal runaway risk of the battery pack when the measured temperature change rate is greater than the predicted temperature change rate.

In some examples, the electronic controller is configured to issue an alert of a highlevel thermal runaway risk of the battery pack when the difference between a real-time temperature change rate and the predicted temperature change rate is greater than or equal to a first temperature difference threshold.

In some examples, the electronic controller is configured to issue an alert of a mediumlevel thermal runaway risk of the battery pack when the difference between the real-time temperature change rate and the predicted temperature change rate is less than the first temperature difference threshold but greater than or equal to a second temperature difference threshold.

In some examples, the electronic controller is configured to issue an alert of a low-level thermal runaway risk of the battery pack when the difference between the real-time temperature change rate and the predicted temperature change rate is less than the second temperature difference threshold.

In some examples, the first-type sensor data includes at least one of a voltage, a current, a temperature, and a state of charge (SOC) of the battery pack and an operating state, a running duration, a rotational speed of an electric motor, and output power of the power tool.

In some examples, the second-type sensor data includes measured temperatures at one or more temperature measurement points in the battery pack.

In some examples, the first-type sensor data is partially coincident with the second-type sensor data.

In some examples, the machine learning program includes a random forest model.

In some examples, the battery pack further includes one or more risk indicator lights, where the electronic controller is further electrically connected to the one or more risk indicator lights and is configured to turn on, based on a current thermal runaway risk level of the battery pack, a risk indicator light that corresponds to the current thermal runaway risk level.

In some examples, the battery pack further includes a communication module communicatively connected to a remote device and electrically connected to the electronic controller, where the electronic controller is further configured to transmit a current thermal runaway risk level of the battery pack to the remote device through the communication module.

A method for constructing a failure prediction model for a battery pack is provided, where the battery pack is configured to power a power tool, and the method for constructing a failure prediction model for a battery pack includes: acquiring data, where use data of the battery pack and operating data of the power tool are acquired; preprocessing the data, where at least one of data cleaning, data integration, and data correction is performed on the use data and the operating data so that streaming data based on a time series is obtained; performing feature extraction, where the streaming data is extracted and reprocessed through a sliding window so that corresponding feature data is obtained; constructing the model, where based on a failure prediction target, a corresponding machine learning model is used to establish a corresponding failure prediction model for the battery pack; and performing training and validation, where the failure prediction model for the battery pack is trained with the corresponding feature data, and validation, evaluation, and optimization are performed on the trained failure prediction model for the battery pack.

In some examples, before preprocessing the data, the method further includes performing data analysis, where feature analysis is performed on use data and operating data before and after a battery pack failure occurs to determine a potential factor related to the battery pack failure, and the subsequent data preprocessing and the subsequent feature extraction are performed based on the potential factor.

In some examples, constructing the model includes using a regression model to establish the failure prediction model for the battery pack in the case where he failure prediction target is to predict the remaining time before a failure of the battery pack occurs.

In some examples, constructing the model includes using a classification model to establish the failure prediction model for the battery pack in the case where the failure prediction target is to predict the category of a failure of the battery pack that is to occur.

In some examples, constructing the model includes using a regression model to establish the failure prediction model for the battery pack in the case where the failure prediction target is to predict the probability of a failure of the battery pack that is to occur.

In some examples, the classification model includes a logistic regression model, a boosted decision tree, a decision forest, a neural network model, a support vector machine, and a k-nearest neighbor model, and the regression model includes a Poisson regression model, a boosted decision tree regression model, a decision forest regression model, and a neural network regression model.

In some examples, performing the training and validation includes using the corresponding feature data to perform cross-validation on the failure prediction model for the battery pack so as to optimize the failure prediction model for the battery pack.

In some examples, performing the training and validation includes determining accuracy, precision, and a recall rate of each failure prediction model for the battery pack and determining an optimal failure prediction model for the battery pack based on the accuracy, the precision, and the recall rate, so as to subsequently use the optimal failure prediction model for the battery pack.

In some examples, the use data of the battery pack includes at least one of a voltage, a current, a state of charge (SOC), and a full-charge voltage difference of the battery pack, a cell voltage of each cell in the battery pack, and a measured temperature at each temperature measurement point in the battery pack.

In some examples, the operating data of the power tool includes at least one of an operating state, a running duration, a rotational speed of an electric motor, and output power of the power tool.

A method for constructing a life evaluation model for a battery pack is provided, where the battery pack is configured to power a power tool, and the method for constructing a life evaluation model for a battery pack includes: acquiring data, where use data of the battery pack is acquired; preprocessing the data, where at least one of data cleaning, data integration, and data correction is performed on the use data; performing feature engineering processing, where the preprocessed use data is extracted and reprocessed through a sliding window so that a related feature sequence is obtained; and constructing the model, where an appropriate machine learning model is used to fit the related feature sequence with a target state of health (SOH), and an evaluation index is created and a current state of health (SOH) and a future state of health (SOH) are predicted.

In some examples, the machine learning model includes a linear model, a decision tree model, a support vector machine model, a Bayesian model, a clustering model, a neural network model, a dimensionality reduction and metric learning model, an ensemble learning model, a reinforcement learning model, and a deep learning model.

In some examples, the use data of the battery pack includes at least one of a voltage, a current, and a state of charge (SOC) of the battery pack, a cell voltage of each cell in the battery pack, and a measured temperature at each temperature measurement point in the battery pack.

In some examples, the data cleaning includes data deduplication, outlier elimination, missing value filling, and noise reduction and conversion.

In some examples, performing the feature engineering processing further includes: dividing the use data into multiple charging processes; calculating a capacity change process of the battery pack in each charging process for a fixed voltage interval by using an ampere-hour integration method; and converting the capacity change process into a change process of the target SOH and determining a correspondence between the use data and the target SOH.

In some examples, constructing the model includes: using a linear regression model to fit the related feature sequence with the corresponding target SOH to obtain a machine learning model for predicting the current SOH of the battery pack.

In some examples, constructing the model includes: determining a historical SOH sequence and a future SOH sequence according to the change process of the target SOH; and using a Long Short-Term Memory (LSTM) model to fit the historical SOH sequence with the future SOH sequence to obtain a machine learning model for predicting the future SOH of the battery pack.

In some examples, performing the feature engineering processing includes: generating a temperature difference sequence of a temperature measurement point based on measured temperatures at the same temperature measurement point; generating a temperature difference sequence between temperature measurement points based on measured temperatures at different temperature measurement points; and generating, based on measured temperatures at each temperature measurement point, a temperature increment sequence corresponding to a unit SOC.

In some examples, constructing the model includes: using an LSTM model or an XGBoost model to fit at least one of the temperature difference sequence of the temperature measurement point, the temperature difference sequence between the temperature measurement points, and the temperature increment sequence with the target SOH, so as to obtain a machine learning model for predicting the current SOH of the battery pack.

In some examples, the method further includes: performing validation, evaluation, and optimization on the life evaluation model for the battery pack based on the evaluation index and at least one of accuracy, precision, and a recall rate of the model.

A power tool system includes a first power tool and a second power tool. The first power tool includes: an electric motor; and an electronic controller including an electronic processor and a memory, where the memory includes a first machine learning control program for execution by the electronic processor, the first machine learning control program is a trained first machine learning model, and the electronic controller is configured to control the electric motor through the first machine learning control program.

The second power tool includes: an electric motor; and an electronic controller including an electronic processor and a memory, where the memory includes a second machine learning control program for execution by the electronic processor, the second machine learning control program is a trained second machine learning model, and the electronic controller is configured to control the electric motor through the second machine learning control program. The first machine learning model is trained and generated based on a first data set related to operation of the first power tool, and the second machine learning model is trained and generated based on the first machine learning model and a second data set related to operation of the second power tool.

In some examples, each of the first machine learning model and the second machine learning model is one or a combination of more of a linear model, a decision tree model, a neural network model, a support vector machine model, a Bayesian classification model, an ensemble learning model, a clustering model, a dimensionality reduction and metric learning model, a reinforcement learning model, and a deep learning model.

In some examples, a sample size of the first data set is greater than or equal to N times a sample size of the second data set, where N is greater than or equal to 2.

In some examples, action objects of the first power tool and the second power tool are the same.

In some examples, action objects of the first power tool and the second power tool are different.

In some examples, the first power tool is an electric drill, and the second power tool is an electric screwdriver.

In some examples, the first power tool is a handheld sander, and the second power tool is a sanding robot.

In some examples, the first power tool is a handheld building construction power tool, and the second power tool is a building construction robot.

In some examples, the first power tool and the second power tool have the same electric motors.

**In** some examples, the first power tool and the second power tool have different electric motors.

A power tool system includes a first power tool and a second power tool. The first power tool includes: an electric motor; a wireless communication module configured to wirelessly transmit data with another device; and an electronic controller including an electronic processor and a memory, where the memory includes a first machine learning control program for execution by the electronic processor, and the electronic controller is configured to control the electric motor through the first machine learning control program.

The second power tool includes: an electric motor; a wireless communication module configured to wirelessly transmit data with another device; and an electronic controller including an electronic processor and a memory and at least configured to control the electric motor. The wireless communication module of the first power tool sends the first machine learning control program to the wireless communication module of the second power tool, and the electronic controller of the second power tool is configured to train and generate a second machine learning control program based on a first machine learning model and data related to operation of the second power tool and store the second machine learning control program in the memory.

**In** some examples, each of the first machine learning model and a second machine learning model is one or a combination of more of a linear model, a decision tree model, a neural network model, a support vector machine model, a Bayesian classification model, an ensemble learning model, a clustering model, a dimensionality reduction and metric learning model, a reinforcement learning model, and a deep learning model.

In some examples, the electronic controller of the second power tool is further configured to control the electric motor through the second machine learning control program.

In some examples, action objects of the first power tool and the second power tool are the same.

In some examples, action objects of the first power tool and the second power tool are different.

In some examples, the first power tool is an electric drill, and the second power tool is an electric screwdriver.

In some examples, the first power tool is a push mower, and the second power tool is a riding mower or a robotic mower.

In some examples, the first power tool is a mower, and the second power tool is a snow thrower.

In some examples, the first power tool and the second power tool have the same electric motors.

In some examples, the first power tool and the second power tool have different electric motors.

A control method for a power tool includes: a sampling step in which raw data related to an operating parameter of the power tool is collected through multiple sensors while the power tool operates based on an initial machine learning model; a processing step in which the raw data is cropped or compressed and processed target data is obtained; a transmission step in which the target data is transmitted to a cloud server so that the initial machine learning model is trained and updated through the cloud server based on the target data; and an acquisition step in which the updated machine learning model on the cloud server is acquired and the power tool is controlled, based on the updated machine learning model, to operate.

In some examples, the step in which the raw data related to the operating parameter of the power tool is collected through the multiple sensors includes: determining, according to a current running state of the power tool, a sampling stage corresponding to the multiple sensors; and collecting the raw data related to the operating parameter of the power tool through the multiple sensors in the sampling stage.

In some examples, the step in which the raw data is cropped or compressed and the processed target data is obtained includes: identifying and extracting similar sampled data, sampled data with a missing value, and abnormal sampled data in the raw data; cropping the similar sampled data, the sampled data with the missing value, and the abnormal sampled data to obtain corresponding candidate data; identifying and extracting associated sampled data and sampled data whose current byte exceeds a byte threshold in the candidate data; and compressing the associated sampled data and the sampled data whose current byte exceeds the byte threshold to obtain the corresponding target data.

In some examples, the method further includes: a monitoring step in which a current error rate of the machine learning model is monitored; a retraining step in which a model warning alert is issued when the current error rate reaches a first error rate threshold and retraining of the machine learning model is synchronously triggered; and a switching step in which switching to a new machine learning model is performed when the current error rate reaches a second error rate threshold, where the second error rate threshold is greater than the first error rate threshold.

In some examples, an actual distance difference of the similar sampled data is less than a first distance difference threshold.

In some examples, the capacity of a main memory of the power tool is at least 16 M bytes.

In some examples, the machine learning model is a linear model, a decision tree model, a neural network model, a support vector machine model, a Bayesian classification model, an ensemble learning model, a clustering model, a dimensionality reduction and metric learning model, a reinforcement learning model, or a deep learning model.

In some examples, the multiple sensors include a temperature sensor and a current detection element.

In some examples, the multiple sensors include an image acquisition apparatus.

A control method for a power tool includes: collecting operating data of the power tool to form a training data set; selecting a machine learning model; using the training data set to train the machine learning model to generate a machine learning control program; storing the machine learning control program in a memory of the power tool; and executing the machine learning control program and controlling an electric motor of the power tool according to an output of the machine learning control program.

An operating condition distribution of data samples in the training data set is consistent with an operating condition proportion actually required by the power tool.

In some examples, the training data set includes at least 10,000 samples.

In some examples, operating modes of the power tool include at least a first operating mode and a second operating mode, where the control method further includes: using data of m dimensions in the training data set to generate a first machine learning control program, where the first operating mode is controlled through the first machine learning control program; and using data of n dimensions in the training data set to generate a second machine learning control program, where the second operating mode is controlled through the second machine learning control program; where m is less than n, and m and n are each positive integers.

In some examples, in the second operating mode, at least one feature of an operating environment of the power tool is used as an input parameter of the second operating mode.

In some examples, the at least one feature of the operating environment includes one of the following selections: humidity, a temperature, and an environmental image.

In some examples, a penalty coefficient of the first machine learning control program is less than a penalty coefficient of the second machine learning control program.

In some examples, a model of a penalty coefficient includes one of the following: a support vector machine (SVM) model, a neural network model, a clustering model, a deep learning model, or a reinforcement learning model.

In some examples, complexity of the operating condition distribution of the power tool is proportional to a penalty coefficient.

In some examples, a sample size of the training data set of the power tool is proportional to a penalty coefficient.

In some examples, complexity of an environment where the power tool is located is proportional to a penalty coefficient.

**BRIEF DESCRIPTION OF DRAWINGS**

FIG. 1 is a view showing examples of a controlled apparatus in an example of the present application.

FIG. 2 is a schematic diagram of an exemplary battery management system in the present application.

FIG. 3 is a schematic diagram of a structure of a battery management system in the present application.

FIGS. 4A to 4C are schematic diagrams of a second structure of a battery management system in the present application.

FIGS. 5A to 5C are schematic diagrams of a third structure of a battery management system in the present application.

FIG. 6 is a schematic diagram of a fourth structure of a battery management system in the present application.

FIG. 7 is a schematic diagram of a fifth structure of a battery management system in the present application.

FIG. 8 is a schematic diagram of a sixth structure of a battery management system in the present application.

FIG. 9 is a schematic view of a structure of a battery pack in the present application.

FIG. 10 is a schematic view of a structure of a cell group of a battery pack in the present application.

FIG. 11 is a schematic view of a structure of a charger in the present application.

FIG. 12 is a schematic view of another structure of a charger in the present application.

FIG. 13 is a schematic view of another structure of a battery pack in the present application.

FIG. 14 is a schematic view of a third structure of a charger in the present application.

FIG. 15 is a diagram showing a control framework of a cell module as a controlled apparatus.

FIG. 16 is a structural view of a cell module.

FIG. 17A is a schematic diagram showing the state of a half-bridge output terminal when a bypass circuit is inserted.

FIG. 17B is a schematic diagram showing the state of a half-bridge output terminal when a bypass circuit is bypassed.

FIG. 18 shows a method for establishing and implementing a machine learning program.

FIG. 19 is an exemplary block diagram of a power management system.

FIG. 20 is an exemplary block diagram of a control assembly.

FIG. 21 is a flowchart showing that a machine learning program applied to a battery management system is configured to control an output of a use state of the battery pack.

FIG. 22 is a diagram of a PINN framework for estimating a temperature distribution of a battery.

FIG. 23 shows a general framework for data cleaning, partial charge separation, feature extraction, SOH estimation, post-processing, SOH prediction, and RUL prediction.

FIG. 24 is a flowchart showing that a machine learning program applied to a battery management system is configured to control charging and discharging management of a battery pack.

FIG. 25 is a block diagram of discharging management.

FIG. 26 is a block diagram of charging management.

FIG. 27 is a flowchart of a method for constructing a life evaluation model for a battery pack.

FIG. 28 is a flowchart showing that a machine learning program applied to a battery management system is configured to control aging management of a battery pack.

FIG. 29 is a block diagram of aging management.

FIG. 30 is a flowchart of a method for constructing a failure prediction model for a battery pack.

FIG. 31 is a flowchart showing that a machine learning program applied to a battery management system is configured to control thermal runaway risk management of a battery pack.

FIG. 32 is a block diagram of thermal runaway risk management.

FIG. 33 is a block diagram of a power tool system according to an example of the present application.

FIG. 34 is another block diagram of a power tool system according to an example of the present application.

FIG. 35 is a block diagram of the implementation of a conventional machine learning model according to an example of the present application.

FIG. 36 is a block diagram of the implementation of a machine learning model based on a transfer learning technique according to an example of the present application.

FIG. 37 is a flowchart of a control method for a power tool according to an example of the present application.

FIG. 38 is another flowchart of a control method for a power tool according to an example of the present application.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

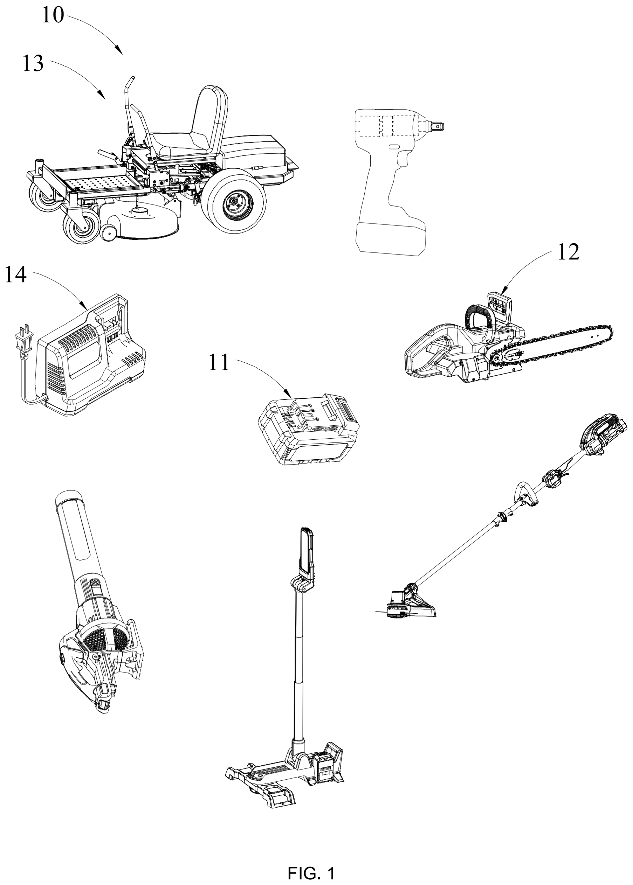

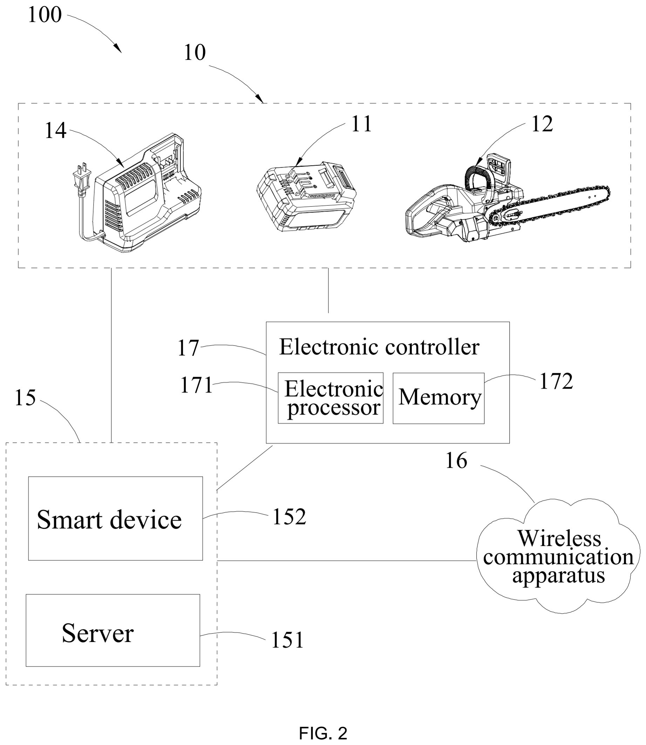

As shown in FIGS. 1 and 2, a battery management system 100 is provided and applied in power tools and off-road traveling devices. The battery management system 100 is configured to perform discharging management when the battery pack 11 powers a power tool or a traveling device using the battery pack 11 and perform charging management when a charging apparatus charges the battery pack 11.

In this example, the power tool is a chainsaw 12. In some examples, the power tool may be a garden tool, such as a pruner, a blower, a mower, a snow thrower, or a cleaning machine. Alternatively, the power tool may be a decorating tool, such as a screwdriver, a wrench, an electric hammer, a nail gun, or a sander. Alternatively, the power tool may also be a sawing tool, such as a reciprocating saw or a jigsaw. Alternatively, the power tool may be a table tool, for example, a table saw, a metal cutter, or a router. Alternatively, the power tool may be a sanding tool, for example, an angle grinder or a sander. Alternatively, the power tool may be another power tool, for example, a lamp or a fan. It is to be understood that the power tool may be a powerhead, and the powerhead includes an electric motor. The powerhead is configured to be adapted to some output assemblies to implement functions of the tool.

In some examples, the battery pack 11 powers the traveling device 13 that uses the battery pack. The traveling device 13 is a riding mower, which can travel outdoors and mow grass. It is to be understood that the traveling device 13 may be another vehicle that only travels outdoors such as a utility vehicle and may be a dune buggy, a farmer's vehicle (Utility Vehicle, UTV), a golf cart, or an all-terrain vehicle (ATV). The traveling device 13 may be a vehicle that can implement another function in addition to the traveling function, like the riding mower shown in this example, such as a snow thrower that can not only travel outdoors but also implement the snow removal function. The traveling device 13 may be an agricultural machinery vehicle, such as a harvester or a pesticide spraying vehicle. Of course, it is to be understood that the traveling device may be a cleaning machine.

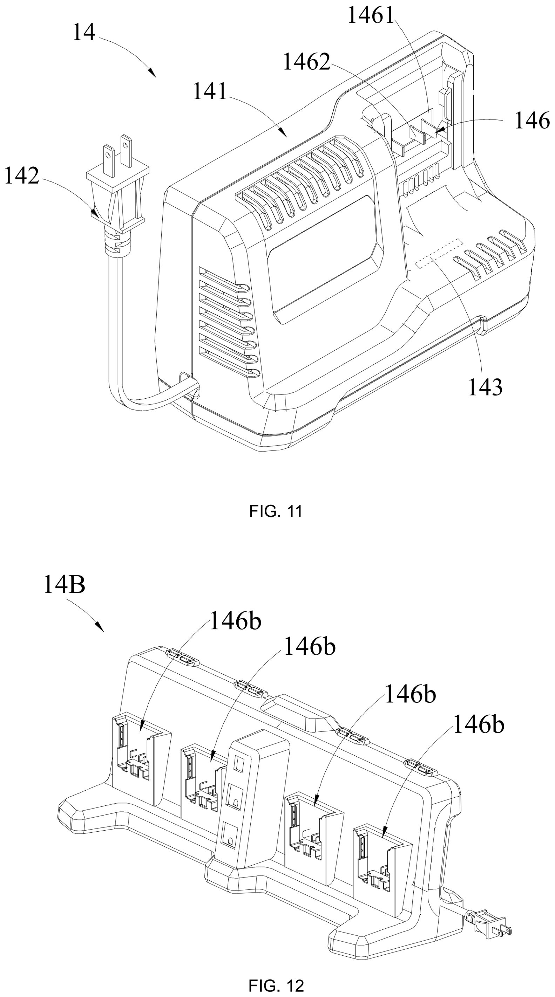

As shown in FIG. 11, the charging device is a charger 14 that can charge different types of rechargeable battery packs. The charger 14 includes a housing 141, a battery pack interface 146, a power interface 142, a communication module 143, a communication protection module 144, and a power conversion circuit 145. The battery pack interface 146 includes a charging terminal 1461 and a communication terminal 1462. The battery pack interface 146, the power interface 142, the communication module 143, the communication protection module, and the power conversion circuit are disposed on the housing 141. The battery pack interface 142 is configured to be coupled to the battery pack 11. The communication module is coupled to the communication terminal 1462, disposed in the housing, and configured to receive, analyze, and process communication information of the battery pack sent by the battery pack. In this example, 1-wire bus communication is performed between the communication terminal of the charger and a communication terminal of the battery pack.

The power interface 142 is configured to be connected to a power supply. In this example, an alternating current power supply may be selected as the power supply, and the power interface 142 is connectable to alternating current utility power of 120 V or 220 V. The power interface 142 is connected to the power conversion circuit so that a received alternating current is converted into charging electrical energy suitable for charging the battery pack 11 and auxiliary electrical energy for powering components in the charger 14, for example, electrical energy for powering the communication module. It is to be understood that the power conversion circuit may include at least an alternating current (AC)/direct current (DC) module. In an alternative implementation, the power interface may be connected to a photovoltaic panel, and the power conversion circuit may convert light energy into charging electrical energy suitable for charging the battery pack and auxiliary electrical energy for powering the components in the charger. It is to be understood that the power conversion circuit may include a maximum power point tracking (MPPT) module, that is, a module converting the light energy into the electrical energy. In this example, the plug of a power cord is connected to the housing 141 and used as the power interface 142. In an alternative implementation, the power interface may be another form of interface, which is not limited herein.

The charging terminal 1462 is disposed on the housing and detachably connected to a terminal of the battery pack 11. The communication terminal 1462 may be configured to be adjacent to the charging port 1461 and is detachably connected to the communication terminal of the battery pack 11.

As shown in FIG. 12, a charger 14B includes multiple battery pack interfaces 146b. That is to say, the charger 14B can charge multiple battery packs 11 simultaneously.

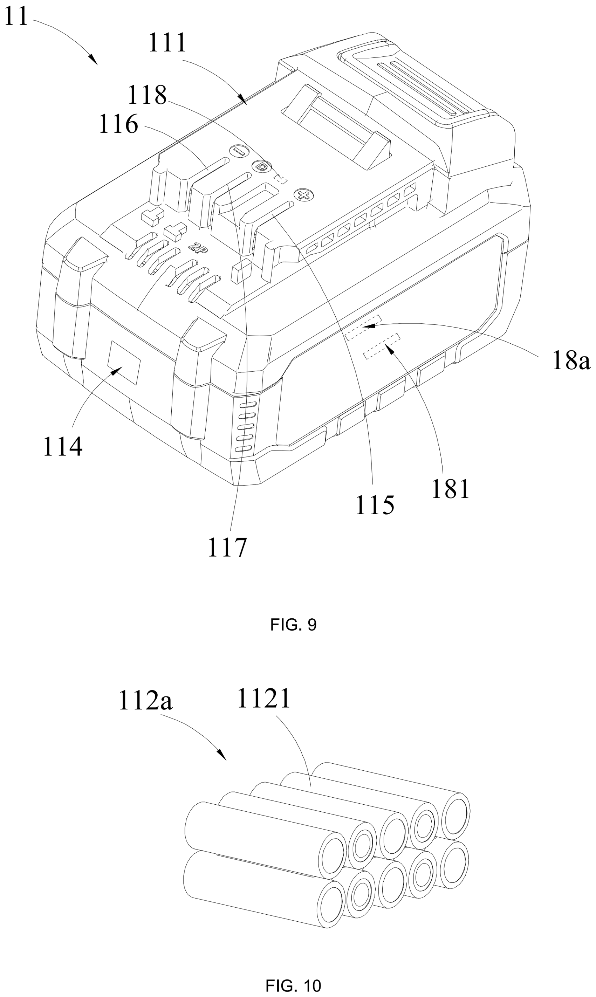

As shown in FIGS. 9 and 10, the battery pack 11 includes a housing 111, a cell group 112a, a sensor 18a, a display apparatus 114, an interface, and a battery pack controller 181. The housing 111 is assembled to form an accommodation space for fixing the cell group 112a. The cell group 112a includes one or more single cells 1121 for storing energy. The interface is configured to implement electrical connection to an external circuit. In this example, the interface includes a battery pack positive terminal 115 and a battery pack negative terminal 116 for implementing the electrical connection. The battery pack 11 is coupled to the power tool through the interface to power the power tool. The battery pack 11 is coupled to the charger through the interface to cause the charger to charge the battery pack.

The battery pack 11 further includes a communication terminal 117 that communicates with the power tool. The communication terminal 117 is connected to a communication module 118. The battery pack 11 is detachably connected to the power tool to provide electrical energy for the power tool. When the battery pack needs to be charged, the battery pack is detachably connected to the charger. The positive terminal 115, the negative terminal 116, and the communication terminal 117 of the battery pack are coupled to the battery pack interface 146 of the charger 14 separately to charge the battery pack through a charging circuit.

As shown in FIG. 2, the battery management system 100 manages the operation of the battery pack 11, the operation between the battery pack 11 and the power tool 12 or the traveling device 13, and the operation between the battery pack 11 and the charger 14 based on a machine learning program. In the battery management system, the battery pack and a component coupled thereto constitute a controlled apparatus 10. Optionally, the controlled apparatus 10 includes the battery pack 11, the power tool powered by the battery pack 11, such as the chainsaw 12 or the traveling device 13, and the charger 14 for charging the battery pack 11. Optionally, an electronic combination is constituted by the battery pack 11 and an electronic circuit or an electrical element that cooperates with the battery pack 11, for example, the battery pack, a battery pack charging circuit, and a battery pack discharging circuit, or the battery pack and a switching element that controls the battery pack.

Sensor data includes sensor data collected by one or more sensors 18 disposed in the controlled apparatus 10. The sensors 18 include a voltage sensor, a current sensor, a temperature sensor, an inertial sensor, and a location sensor.

The sensor data includes an operating parameter of the battery pack, for example, a performance parameter of the battery pack, current data, voltage data, temperature data, or internal resistance data. The sensor data also includes, for example, a current charging capacity (for examples, a charging state of the battery pack) of the battery pack, the number of charging cycles experienced by the battery pack, an estimated remaining useful life of the battery pack, removal time (for example, time related to the speed at which the battery pack is removed from a battery charger of the power tool), and operating time related to the battery pack.

The charging state of the battery pack may be, for example, a one-dimensional charging state (for example, a charging percentage, a voltage, a coulomb, and an ampere-hour ("Ah")).

The sensor data also includes operation time of the battery pack, for example, the duration for which the battery pack is used in each use period, and the amount of time between two times that the battery pack is used and operates. The sensor data also includes, for example, frequency with which the battery pack is used, frequency with which the battery pack is used with a specific power tool or a specific type of power tool, frequency with which the battery pack is used, and frequency with which the battery pack is charged by a specific charger or a specific type of charger.

In some examples, the operating parameter may include data indicating use of a specific battery. The operating parameter also includes, for example, another parameter of the battery pack, such as maintenance data of the battery pack.

In some examples, the sensor data also includes data about an input type of a charging power supply, such as an AC power supply, a DC power supply, or a battery power supply. Other examples are listed as follows: a wall outlet of 120 V, an electric outlet of 220 V, solar energy, a gas inverter, a wireless charger, another battery pack for a power tool, another battery charger for a power tool, a built-in battery, a supercapacitor, a built-in energy storage device, and a vehicle. The sensor 18 data may also include characteristics of a power grid or circuit associated with a charging power supply or data about the electrical characteristics, for example, data indicating whether the charging power supply frequently trips or is powered off associatively.

The sensor data also includes environmental data. The environmental data includes data indicating characteristics or aspects of the environment in which the charger, the battery pack, the power tool, or the traveling device is located. For example, the environmental data may include data associated with weather, data associated with a temperature (for example, an external temperature) of a surrounding environment, and data associated with humidity of the surrounding environment.

The sensor data also includes operator data. The operator data may include data indicating an operator and/or owner of the charger, the battery pack, the power tool, or the traveling device. For example, a carrier data may include an carrier identifier (ID), an owner ID, or both.

The sensor data also includes location data. The location data may include data indicating the location of the charger, the battery pack, the power tool, or the traveling device. In some examples, the location data may indicate the physical location of the charger, the battery pack, the power tool, or the traveling device. For example, the physical location may be represented through geospatial coordinates, such as those determined via a Global Navigation Satellite System (GNSS) or the like. As another example, the physical location may be represented as the location of a construction site (for example, an address or a mark of the location of the construction site) and may include a location (for example, a skyscraper or a specific floor in another building under construction) within the construction site. In some other examples, the location data may indicate the location of the battery charger for the power tool, the battery pack, and/or the power tool to be used for inventory management and tracking.

In some examples, the battery management system includes a cell module 112. The cell module 112 includes a sensor 18b. The sensor 18b is configured to collect an operating parameter of the cell module 112 during use of the cell module 112. The sensor 18b generates sensor data indicating the operating parameter of the cell module, which is described in detail below.

As shown in FIG. 2, an exemplary battery management system 100 is shown. The battery management system 100 includes the controlled apparatus 10, a remote device 15, and a wireless communication apparatus 16. For example, the controlled apparatus is the battery pack 11, and the battery pack 11 includes the sensor 18a. The sensor 18a is configured to collect data about the operating parameter of the battery pack during use of the battery pack 11. The sensor 18a generates sensor data indicating the operating parameter of the battery pack.

In some examples, the remote device 15 includes, for example, a server 151 and a smart device 152. The smart device 152 includes a smartphone, a tablet computer, a cellphone, a laptop computer, and a smart watch.

The wireless communication apparatus 16 may be a remote wireless network. The wireless communication apparatus 16 performs communication using other protocols (such as Wireless Fidelity (Wi-Fi), cellular protocols, and proprietary protocols) on different types of wireless networks. For example, the wireless communication apparatus 16 may be configured to communicate via Wi-Fi over the Internet, a local area network (LAN), a wide area network (WAN), or a combination thereof or to communicate through a piconet (such as infrared communication or near-field communication (NFC)). In other examples, the wireless communication apparatus 16 may be a short-range communication protocol (such as Bluetooth). In other examples, the wireless communication apparatus 16 may be a wired network using, for example, a serial protocol (such as USB, USB-C, or FireWire).

In some examples, the server 151 may send information to the smart device 152 to forward the information to the battery pack 11. In some examples, the communication module 118 of the battery pack 11 is equipped with a long-range transceiver instead of or in addition to a short-range transceiver. In such examples, the battery pack 11 communicates directly with the server 151. In some examples, the battery pack 11 may communicate directly with the server 151 and the smart device 152. In such examples, the smart device 152 may, for example, generate a graphical user interface to facilitate control and programming of the battery pack 11, and the server 151 may store and analyze a greater amount of data about the operating parameter for future programming or operation of the battery pack 11. However, in other examples, the battery pack 11 may communicate directly with the server 151 without using a short-range communication protocol with the smart device 152.

**EP 4 697 443 A1**

An electronic controller 17 for implementing a machine learning program is disposed in the battery management system 100. The electronic controller 17 includes an electronic processor 171 and a memory 172, and the memory 172 includes the machine learning program for execution by the electronic processor 171.

The electronic controller 17 is configured to provide a desired output from a given set of input data or data sets. Optionally, the machine learning program is trained through a data set and provides an output for test data. Learning information in the machine learning program is from existing data. As the number of data samples increases, the accuracy of the machine learning program is improved. The machine learning program may be configured to perform machine learning with different types of methods. For example, the electronic controller 17 may implement the machine learning program using decision tree learning, association rule learning, an artificial neural network, a recurrent artificial neural network, a Long Short-Term Memory neural network, inductive logic programming, a support vector machine, clustering, a Bayesian network, reinforcement learning, representation learning, similarity and metric learning, sparse dictionary learning, a genetic algorithm, a k-nearest neighbor algorithm, an attention network/a transformer, and other methods.

The electronic controller 17 is programmed and trained to perform a specific task. The electronic controller 17 may be trained to predict characteristic data of a battery based on multiple operating parameters of different types. The electronic controller may be trained to generate an ideal charging and discharging strategy based on the multiple operating parameters of different types and environmental data. The electronic controller 17 may be trained to generate an optimal battery protection control strategy based on the multiple operating parameters of different types and other data. The electronic controller 17 may be trained to generate an optimal battery equalization control strategy based on the multiple operating parameters of different types and other data.

Multiple pieces of different training example data are provided for the electronic controller 17. The electronic controller 17 uses these training examples to generate a model (for example, a rule or an equation set) that facilitates the classification or estimation of an output based on new input data. The electronic controller 17 may weigh different training examples differently, so as to, for example, prioritize different situations or outputs from the electronic controller. In some examples, different cost functions or values are associated with specific training examples or types of training examples such that the training examples are weighted differently.

In an example, the electronic controller 17 implements the artificial neural network. The artificial neural network typically includes an input layer, multiple hidden layers or nodes, and an output layer. Typically, the input layer includes as many nodes as inputs provided for the electronic controller 17. As described above, the number (and the type) of inputs provided for the electronic controller 17 may vary based on a specific task for the electronic controller 17. Accordingly, the input layer of the artificial neural network of the electronic controller 17 may have a different number of nodes based on the specific task for the electronic controller 17. The input layer is connected to the hidden layers. The number of hidden layers is variable and may depend on the specific task for the electronic controller 17. Additionally, each hidden layer may have a different number of nodes and may be connected to the next layer differently. For example, each node of the input layer may be connected to each node of the first hidden layer. The connection between each node of the input layer and each node of the first hidden layer may be assigned a weight parameter. Additionally, each node of the artificial neural network may be assigned a bias value. However, each node of the first hidden layer may not be connected to each node of the second hidden layer. That is to say, there may be some nodes of the first hidden layer that are not connected to all of the nodes of the second hidden layer. The connections between the nodes of the first hidden layer and the nodes of the second hidden layer are each assigned different weight parameters. Each node of the hidden layers is associated with an activation function. The activation function defines how the hidden layers are to process the input received from the input layer or from a previous input layer. These activation functions may vary and may vary based on not only the type of task associated with the electronic controller 17 but also the specific type of hidden layer implemented. Each hidden layer may perform a different function. For example, some hidden layers may be convolutional hidden layers and can reduce the dimensionality of the inputs in some cases while other hidden layers can perform more statistical functions such as max pooling and can reduce a group of inputs to the maximum value, an averaging layer, and the like. In some of the hidden layers (also referred to as "dense layers"), each node is connected to each node of the next hidden layer. Some artificial neural networks including more than, for example, three hidden layers may be considered as deep neural networks. The last hidden layer is connected to the output layer. Similar to the input layer, the output layer typically has the same number of nodes as possible outputs.

The electronic controller 17 and the electronic processor 171 may implement different methods for combining the outputs from the electronic controller 17. During training, the artificial neural network receives the inputs for a training example and generates an output using the bias for each node and the connections between each node and the corresponding weights. The artificial neural network then compares the generated output with the actual output of the training example. Based on the generated output and the actual output of the training example, the neural network changes the weight/the bias associated with each node connection. In some examples, the neural network also changes, during training, the weight associated with each node. The training continues until a training condition is met. The training condition may correspond to, for example, a predetermined number of training examples being used, the minimum accuracy threshold being reached during training and validation, a predetermined number of validation iterations being completed, and optimized training compared with a testing test, and the like. Different types of training algorithms may be configured to adjust the bias values and the weights of the node connections based on the training examples. The training algorithms may include, for example, gradient descent, the Newton method, conjugate gradient, the quasi-Newton method, and the Levenberg-Marquardt algorithm.

In another example, the electronic controller 17 implements the support vector machine to perform classification. The electronic controller 17 may, for example, classify whether a cell or an interface is aging. In such examples, the electronic controller 17 may receive any two or more of a battery voltage V, a battery current I, a battery temperature T, battery internal resistance R, use time, or the like. The battery voltage V and the battery current I may be, for example, a discharging voltage and a discharging current or a charging voltage and a charging current. The electronic controller 17 then defines a margin using combinations of some input variables as support vectors, so as to maximize the margin. In some examples, the electronic controller 17 defines a margin using combinations of more than one of similar input variables. The margin corresponds to the distance between the two closest vectors that are classified differently. In some examples, the electronic controller 17 uses more than one support vector machine to perform a single classification. For example, when the electronic controller 17 classifies whether the cell or the interface is aging, a first support vector machine may determine, based on the battery voltage V and the battery current I, whether the cell or the interface is aging, and a second support vector machine may determine, based on the battery internal resistance R and the use time, whether the cell or the interface is aging. The electronic controller 17 may then determine that the cell or the interface is aging when both support vector machines classify the cell or the interface as an aging cell or interface. In other examples, a single support vector machine may use more than two input variables and define a hyperplane. The hyperplane separates the cells or the interfaces that are aging from the cells or the interfaces that are not aging.

Training examples for a support vector machine include an input vector including values for the input variables and an output classification indicating whether the cell or the interface represents the cell or the interface that is aging. During training, the support vector machine selects the support vectors (for example, a subset of input vectors) that maximize the margin. In some examples, the support vector machine may define a line or a hyperplane. The line or the hyperplane accurately separates the cells or the interfaces that are aging from the cells or the interfaces that are not aging. In other examples (for example, in an inseparable case), however, the support vector machine may define a line or a hyperplane. The line or the hyperplane maximizes the margin and minimizes a slack variable. An error in a classification of the support vector machine is measured through the slack variable. After the support vector machine is trained, new input data may be compared to the line or the hyperplane to determine how to classify the new input data. In other examples, as described above, the electronic controller 17 may implement different machine learning algorithms to perform estimation or classification based on a set of input data.

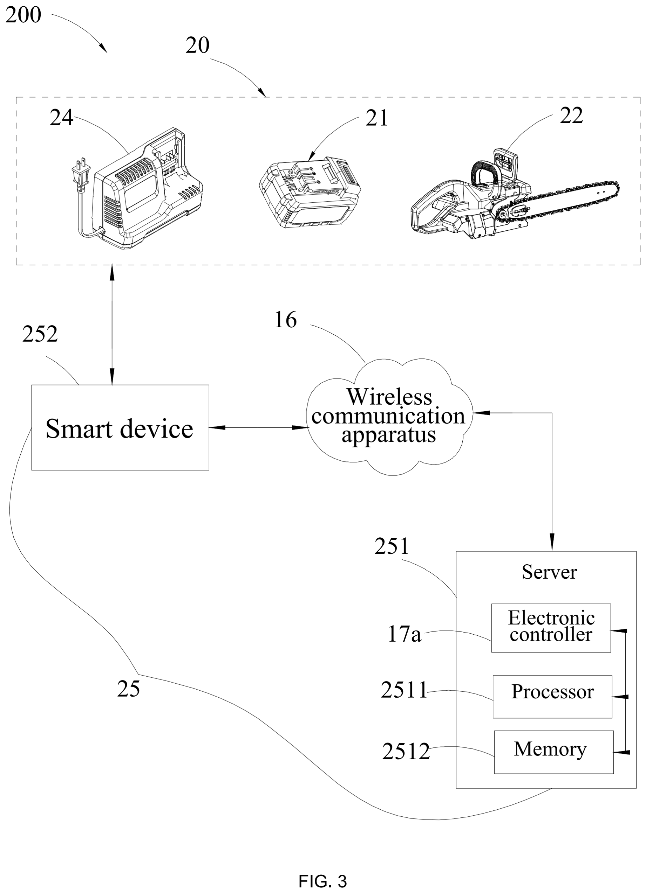

As shown in FIG. 3, in a battery management system 200, an electronic controller 17a is disposed on a remote device 25. A transceiver of the remote device 25 communicates with the controlled apparatus 20. A server 251 is used as an example of the remote device 25. The server 251 further includes a processor 2511 of the server and a memory 2512 of the server. The electronic processor of the electronic controller 17a receives data or a data set from the sensor (18a) of the battery pack, the sensor (18b) of the cell module, a sensor of the power tool, a sensor of the traveling device, or a sensor of the charger. In some examples, the server 251 uses the received data or data set as an additional training example. In other examples, the server 251 sends the received data or data set to the trained electronic controller 17a. The electronic controller 17a then generates an estimate or classification based on the inputted data or data set. The processor 2511 of the server then generates a recommendation for a future operation of the battery pack or the cell module.

The server 251 may send a suggested operation parameter to the smart device 252. The smart device 252 may display a suggested change to the operating parameter and request confirmation from a user to implement the suggested change before forwarding the change to the controlled apparatus 20 (the battery pack or the electronic combination). In other examples, the smart device 252 forwards the suggested change to the controlled apparatus 20 and displays the suggested change to inform the user of a change implemented by the controlled apparatus 20.

In some examples, the electronic controller 17a disposed in the server 251 communicatively outputs generated required output data to the battery pack 21. That is, the battery pack 21 controls charging and discharging of the battery pack 17a based on the received output data of the electronic controller 17a. In some examples, the electronic controller 17a disposed in the server 251 communicatively outputs the generated required output data to the power tool 22 or the traveling device, and the controller in the power tool or the traveling device controls a discharging condition of the battery pack based on the output data. In some examples, the electronic controller 17a disposed in the server 251 communicatively outputs the generated required output data to the charger 23, and the controller in the charger 23 controls a charging condition of the battery pack 21 based on the output data.

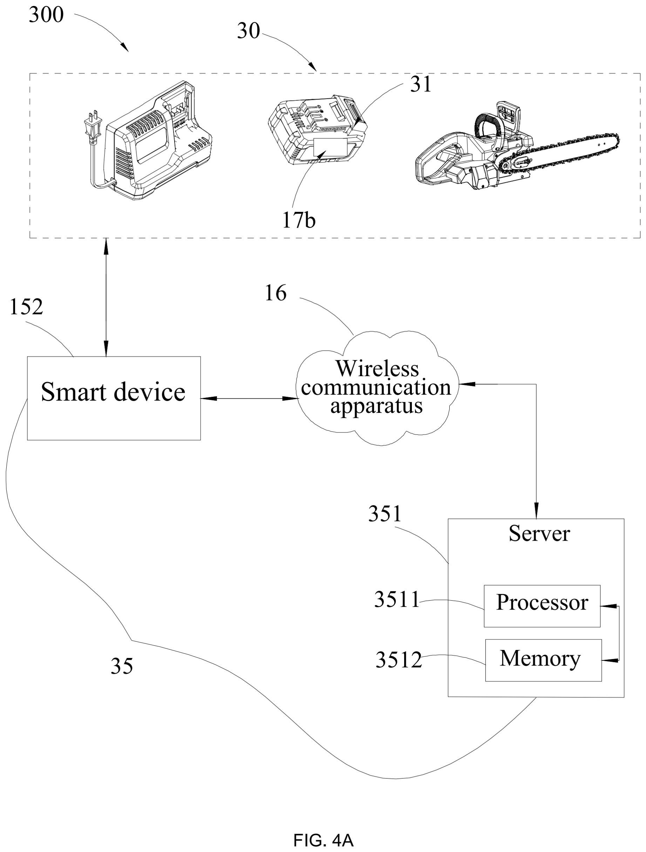

As shown in FIGS. 4A to 4C, in a battery management system 300, an electronic controller 17b is disposed in a controlled apparatus 30. The battery management system 300 includes the controlled apparatus 30, a remote device 35, and a wireless communication apparatus 16. In some examples, as shown in FIG. 4A, the electronic controller 17b is disposed in a battery pack 31, which is used as an example. The battery pack 31 includes the electronic controller 17b provided with a machine learning program trained offline. In this example, a communication module 118 of the battery pack 31 receives the machine learning program trained offline from a server 351, or a communication module 118 of the battery pack 31 receives the machine learning program offline trained from a server 351 through the wireless communication apparatus 16. In some examples, the battery pack 31 receives the machine learning program trained offline during manufacturing. In other examples, the user of the battery pack 31 may choose to receive the machine learning program trained offline after the battery pack 31 has been manufactured and after the battery pack 31 is operated. The machine learning program trained offline is also a trained machine learning program similar to the electronic controller 17a disposed in the server 251. The machine learning program trained offline has been trained using various training examples and is configured to receive new input data and generate an estimation or a classification for the new input data.

The controlled apparatus 30 communicates with the server 351. The smart device 152 may also provide an additional function (for example, generating a graphical user interface) for the controlled apparatus 30. The server 351 for the machine learning program trained offline may use data about an operating parameter of a battery pack similar to the battery pack 31 and train the machine learning program trained offline using a training example from data about an operating parameter of the battery pack 31 received by the battery pack 31. The server 351 then sends the trained machine learning program trained offline to the electronic controller 17b of the controlled apparatus, for example, the battery pack 31 for execution during a future operation of the battery pack 31.

Accordingly, the machine learning program trained offline includes a trained machine learning program provided, for example, during manufacturing. During the future operation of the battery pack 31, the machine learning program trained offline analyzes new data about the operating parameter of the battery pack 31 from the controlled apparatus and generates a recommendation or an action based on the new data about the operating parameter. The machine learning program trained offline has one or more specific tasks. In other examples, the machine learning program trained offline may have different tasks. In some examples, the user may select a task for the machine learning program trained offline using, for example, the graphical user interface generated by the smart device 152. The smart device 152 may then send the server 351 a target task for the machine learning program trained offline. The server 351 then sends a trained machine learning program to the machine learning program trained offline, where the trained machine learning program is trained for the target task. Based on the estimation or classification from the machine learning program trained offline, the controlled apparatus 30 may change its operation, adjust one of operation modes of the battery pack 31, and/or adjust a different aspect of the battery pack 31. In some examples, the controlled apparatus 30 may include more than one machine learning program trained offline, each having a different target task, which is described in detail below.

In this example, the electronic controller 17b is disposed in the battery pack 31. The battery pack 31 includes a sensor 38a and the communication module 118, and the machine learning program offline trained is received through the communication module 118. A training process of the machine learning program trained offline is completed in the server 351. The battery pack 31 receives the machine learning program offline trained from the server 351. In some examples, the training process of the machine learning program trained offline may be completed in another smart device 152. The battery pack 31 receives the machine learning program offline trained from the smart device 152. In some examples, the training process of the machine learning program offline trained is completed in the remote device 35 (the server 351 and/or the smart device 152). The external device 35 sends the machine learning program offline trained to a power tool 32 or a charger 33 through the wireless communication apparatus 16. Then, the machine learning program offline trained is sent to the electronic controller 17b of the battery pack 31 when the battery pack 31 is connected to the power tool 32 or the charger 33 through the interface. The battery pack 31 controls charging and discharging of the battery pack 31 based on output data generated by the electronic controller 17b.

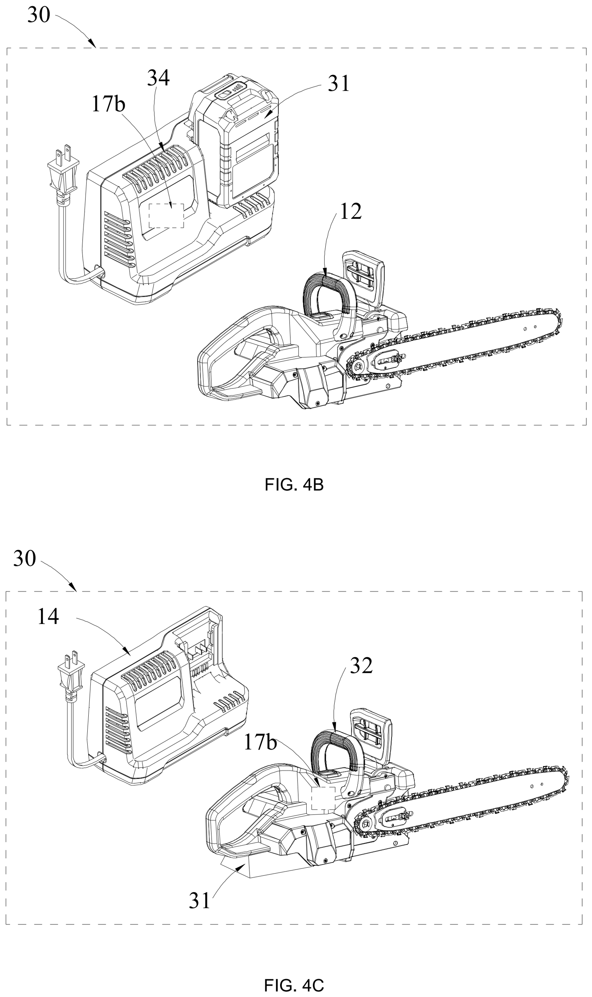

As shown in FIG. 4B, the electronic controller 17b is disposed in a charger 34. The charger 34 receives the machine learning program offline trained through the communication module 143. The training process of the machine learning program offline trained is completed in the remote device 143 (the server 351 and/or the smart device). The remote device 35 sends the machine learning program offline trained to the electronic controller 17b in the charger 33 through the wireless communication apparatus 16. The charger receives, through the interface, the data about the operating parameter of the battery pack 31 inputted by the sensor of the battery pack 31 or the sensor of the cell module, and a charging condition of the battery pack 31 is controlled through the data outputted by the machine learning program of the electronic controller 17b in the charger.

As shown in FIG. 4C, the electronic controller 17b is disposed in the power tool 32 or the traveling device. The power tool 32 or the traveling device receives, through an internal communication module (not shown), the machine learning program offline trained. The training process of the machine learning program offline trained is completed in the remote device 35 (the server 351 and/or the smart device). The remote device 35 sends the machine learning program offline trained to the electronic controller 17b in the power tool or the traveling device through the wireless communication apparatus 16. The power tool or the traveling device receives, through the interface, the data about the operating parameter of the battery pack 31 inputted by the sensor of the battery pack 31 or the sensor of the cell module, and a discharging condition of the battery pack 31 is controlled through the data outputted by the machine learning program of the electronic controller 17b in the power tool 32 or the traveling device.

Optionally, the data received by the electronic controller 17b includes current data, voltage data, temperature data, or internal resistance data and further includes a charging state of a battery, the type of a connected power supply, a power supply cost of the connected power supply, overheating of the battery and/or the charger, and whether a circuit breaker on a connected circuit trips. The data received by the electronic controller 17b includes device data of the power tool including other use data, maintenance data, user feedback data, power supply data, environmental data, operator data, and location data. The data received by the electronic controller 17b includes an operation mode of the charger, such as a pre-charging mode, a constant-current regulation mode, a constant-voltage regulation mode, a fast charging mode, operation time of each mode, and operation frequency of each mode.

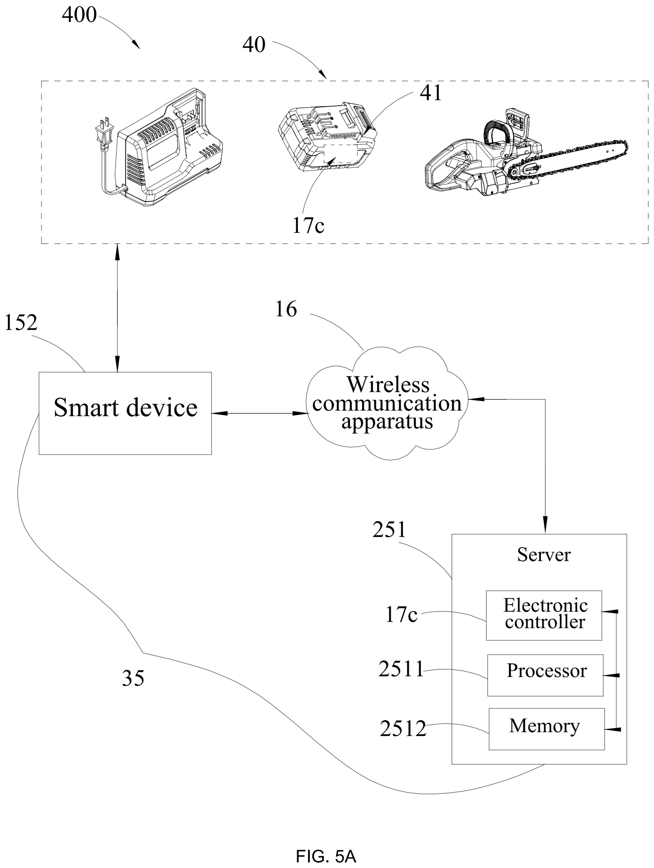

As shown in FIGS. 5A to 5C, in a battery management system 400, an electronic controller 17c is disposed in a controlled apparatus 40, and the electronic controller 17c is provided with a dynamic machine learning program. The electronic controller 17c receives a machine learning program from the server 251 through the wireless communication apparatus 16. Unlike the machine learning program trained offline, the server 251 may send an updated version of the machine learning program to the electronic controller 17c with the dynamic machine learning program to replace a previous version.

The controlled apparatus 40 sends the server 251 feedback regarding the operation of the dynamic machine learning program. A battery pack 41 is used as an example, the electronic controller 17c is disposed in the battery pack 41, and the battery pack 41 may send the server 251 an indication regarding the number of operations that are incorrectly classified by the dynamic machine learning program. The server 251 receives the feedback from the battery pack 41, updates the machine learning program, and provides the updated program for the dynamic machine learning program to reduce the number of operations that are incorrectly classified. Therefore, the server 351 updates or retrains the dynamic machine learning program based on the feedback received from the battery pack 41. In some examples, the server 251 also uses feedback received from a similar battery pack to adjust the dynamic machine learning program. In some examples, the server 251 updates the dynamic machine learning program periodically (for example, every month). In other examples, the server 251 updates the dynamic machine learning program when the server 251 receives a predetermined number of feedback indications (for example, after the server 251 receives two feedback indications). The feedback indications may be positive (for example, indicating that the dynamic machine learning program correctly classified a situation, an event, an operation, or a combination thereof), or the feedback may be negative (for example, indicating that the dynamic machine learning program incorrectly classified a situation, an event, an operation, or a combination thereof). In some examples, the feedback indications may be digital (for example, the state of health (SOH) of the cell) or classified.

In some examples, the server 251 also uses use data and/or sensor data (raw data or processed data) received from the battery pack 41 and other similar battery packs to update the dynamic machine learning program. For example, the server 251 may periodically retrain (or adjust the training of) the dynamic machine learning program based on the newly received use data. The server 251 then sends an updated version of the dynamic machine learning program to the controlled apparatus (for example, the battery pack).

When the controlled apparatus 40 receives the updated version of the dynamic machine learning program (for example, when the updated machine learning program is provided for and stored in the electronic controller), the controlled apparatus 40 replaces the current version of the dynamic machine learning program with the updated version. In some examples, the controlled apparatus 40 is equipped with a first version of the dynamic machine learning program during manufacturing. In such examples, the user may request a relatively new version of the dynamic machine learning program. In some examples, the implementation of the update and/or the use of a machine learning function may be provided through subscription, purchase, and/or leasing. In some examples, the user may select frequency with which the dynamic machine learning program is sent to the electronic controller. In other examples, the operation or mode use of the controlled apparatus 40 may be disabled until a relatively new version of the electronic controller 17c is established on the controlled apparatus 40 and/or a calibration step of the electronic controller 17c and/or the controlled apparatus is performed.

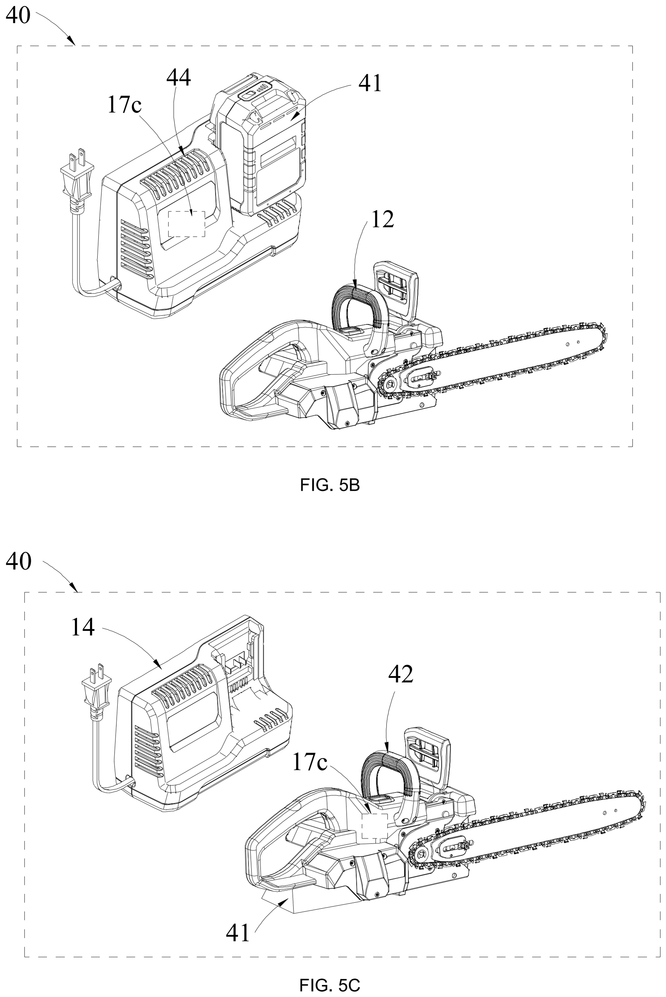

As shown in FIG. 5B, the electronic controller 17c is disposed in a charger 44. The charger 44 receives, through the interface, the data about the operating parameter of the battery pack 31 inputted by the sensor of the battery pack 31 or the sensor of the cell module, and a charging condition of the battery pack 41 is controlled through the data outputted by the machine learning program of the electronic controller 17c in the charger.

As shown in FIG. 5C, the electronic controller 17c is disposed in the power tool 42 or the traveling device. A power tool 44 or the traveling device receives, through the interface, data about an operating parameter of the battery pack 41 inputted by the sensor of the battery pack 31 or the sensor of the cell module, and the discharging condition of the battery pack 31 is controlled through the data outputted by the machine learning program of the electronic controller 17b in the power tool 32 or the traveling device.

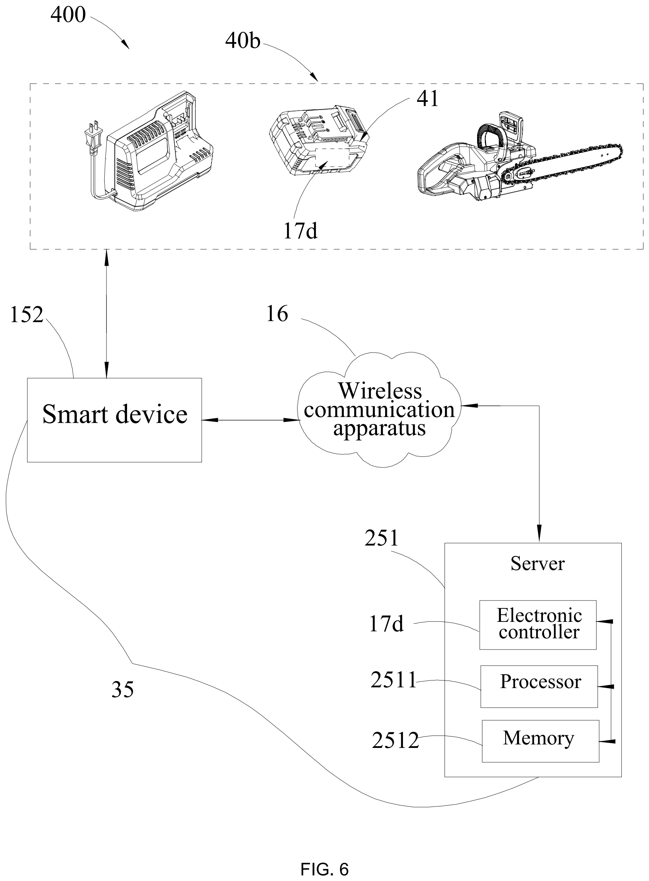

As shown in FIG. 6, the dynamic machine learning program of an electronic controller 17d disposed in the controlled apparatus 40 may update itself. The self-updated dynamic machine learning program receives new data about the operating parameter of the battery pack, feedback information indicating a desired change (for example, the user wants to increase a charging rate) to the data about the operating parameter, feedback information indicating whether the classification made by the electronic controller 17d is incorrect, or a combination thereof from the sensor of the controlled apparatus 40 (for example, the battery pack 41). The self-updated dynamic machine learning program then uses the received information to retrain the self-updated dynamic machine learning program.

In some examples, when charging and discharging of the battery pack 41 ends, the controlled apparatus 40 retrains the self-updated dynamic machine learning program. The self-updated dynamic machine learning program is trained when the charging and discharging of the battery pack ends so that the use of more processing power is allowed during retraining without contending for computing resources typically used for managing the charging and discharging of the battery pack.

In some examples, the controlled apparatus 40 also communicates with the smart device 152 and the server 251. The battery pack 41 is used as an example, and the smart device 152 communicates with the battery pack 41. The smart device 152, such as a smartphone, generates a graphical user interface to facilitate the adjustment of the data about the operating parameter of the battery pack 41. The smart device 152 may also bridge the communications between the battery pack 41 and the server 251. In some examples, the smart device 152 receives a selection of a target task for the electronic controller 17d. The smart device 152 may then request a corresponding machine learning program from the server 251 for transmitting the corresponding machine learning program to the electronic controller 17d. The battery pack also communicates with the server 251 (for example, via the smart device). In some examples, the server 251 may also retrain a self-updated machine learning program. The server 251 may use additional training examples from other similar battery packs. Using these additional training examples may provide greater variability and ultimately make the electronic controller 17d more reliable. In some examples, the battery pack retrains the self-updated machine learning program when the battery pack is not charged and does not discharge electricity, and the server 251 may retrain the machine learning program when the battery pack enters a charging or discharging state. Therefore, in some examples, the self-updated machine learning program may be retrained on the battery pack through the server or through a combination thereof.

In some examples, the server 251 does not retrain the self-updated machine learning program but still exchanges information with the battery pack. For example, the server 251 may provide other functions for the battery pack, such as sending information about various operation modes of the battery pack.

Each of FIGS. 1 to 6 shows a battery management system, where the controlled apparatus communicates with the server and the smart device. The smart device may bridge the communication between the controlled apparatus, such as the battery pack, and the server. That is to say, the battery pack may communicate directly with the smart device. The smart device may then forward the information received from the battery pack to the server. Similarly, the server may send the information to the smart device, and the smart device forwards the information to the battery pack. In such examples, the battery pack may include a communication module to communicate with the smart device via, for example, a short-range communication protocol (such as Bluetooth (R)). The smart device may include short-range communication to communicate with the battery pack and may also include a long-range transceiver to communicate with the server. In some examples, a wired connection (for example, via a USB data line) is provided between the battery pack and the power tool to enable direct communication between an external apparatus and the battery pack. The wired connection is provided so that a faster and more reliable communication method between the external apparatus and the battery pack can be provided.

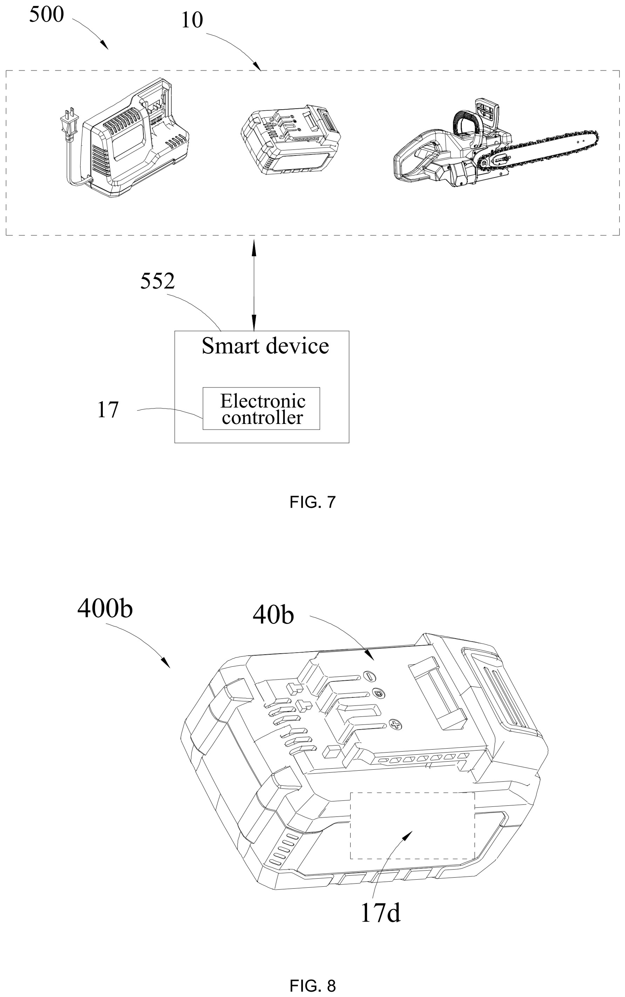

As shown in FIG. 7, a battery management system 500 is provided, where the controlled apparatus 10 may directly communicate with a smart device 552. The electronic controller 17 is disposed in the smart device 552, where the electronic controller 17 may be any one of the electronic controller 17a, the electronic controller 17b, the electronic controller 17c, and the electronic controller 17d.

The server includes at least the electronic processor of the server, the memory of the server, and a transceiver to communicate with the controlled apparatus via the wireless communication apparatus. The electronic processor of the server receives the data about the operating parameter of the battery pack and stores the data about the operating parameter of the battery pack in the memory of the server. In addition, in some examples, the received data about the operating parameter of the battery pack is used for establishing or adjusting the electronic controller. Each remote device is located outside the controlled apparatus. In addition, in some examples, the remote device is a wireless hub, such as a beaconing apparatus placed on a construction site to monitor tools, a beaconing apparatus used as a gateway network apparatus (for examples, providing a Wi-Fi network), or both. The remote device includes at least an input/output unit (for example, a wireless or wired transceiver) for communication, a memory storing instructions, and an electronic processor to execute the instructions stored in the memory to perform a function attributed to the external system apparatus.

As shown in FIG. 8, when the dynamic machine learning program may update itself, in a battery management system 400b, a controlled apparatus 40b may not communicate with the smart device or the server. Conversely, since the electronic controller 17d disposed in the controlled apparatus 40b includes a self-updated machine learning program, the electronic controller 17d may implement the machine learning program, receive user feedback, and update the electronic controller without communicating with the smart device or the server.

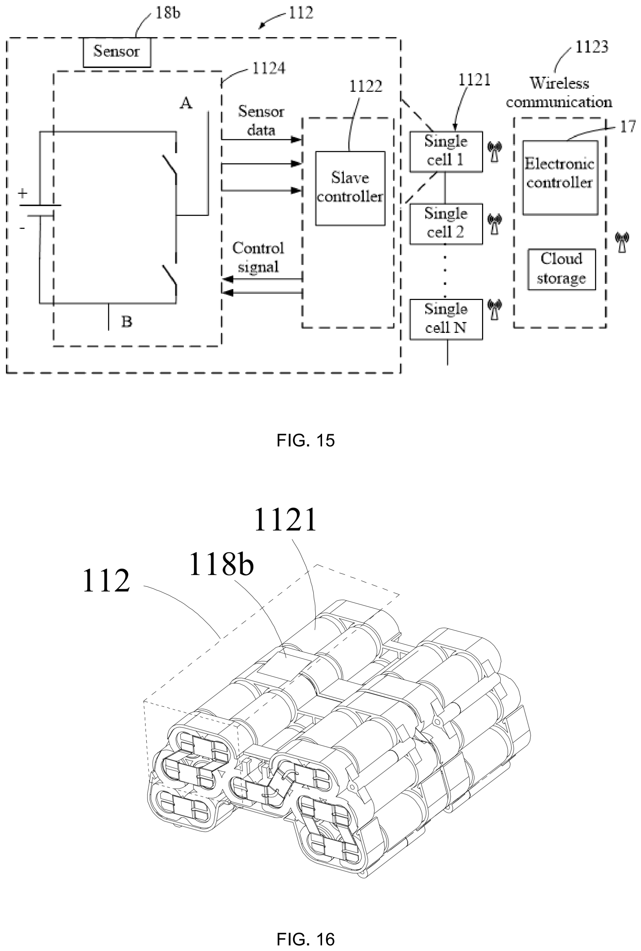

As an example of the present application, the battery management system includes the cell module 112. That is to say, the controlled apparatus further includes the cell module 112. Optionally, the battery management system includes multiple groups of cell modules 112. As shown in FIGS. 15 and 16, each group of cell modules includes at least one single cell 1121, a slave controller 1122, a sensor 18b, a wireless communication module 1123, and a bypass circuit 1124. The slave controller 1122 is electrically connected to the sensor 18b and the wireless communication module 1123 separately. The slave controller 1122 is configured to receive sensor data that is generated by the sensor 18b and indicates an operating parameter of each of the at least one cell 1121 and send the sensor data to the electronic controller 17 through the wireless communication module 1123. The electronic controller 17 may implement the machine learning program. In addition, the slave controller 1122 may acquire returned information from the electronic controller 17 through the wireless communication module 1123 and control the bypass circuit 1124 based on the returned information.

In this example, the electronic controller 17 is configured to: receive sensor data of the multiple groups of cell modules 112 from the multiple groups of cell modules 112 through the wireless communication module 1123; process the sensor data of the multiple groups of cell modules 112 using the machine learning program; use the machine learning program to generate the returned information based on the sensor data of the multiple groups of cell modules 112; and send the returned information to the slave controller 1122 through the wireless communication module 1123.

In some examples, the electronic controller 17 is disposed on the remote device and outputs the generated required output data to the wireless communication module 1123 of the cell module 112 through the wireless communication apparatus 16, and the cell module 112 controls charging and discharging of the cell module 112 based on the received output data of the electronic controller 17. In some examples, the electronic controller 17 disposed in the remote device communicatively outputs the generated required output data to the power tool 12 or the traveling device, and the controller on the power tool or the traveling device controls a discharging condition of the cell module 112 based on the output data. In some examples, the electronic controller 17 disposed in the remote device communicatively outputs the generated required output data to the charger 13, and the controller in the charger 13 controls a charging condition of the cell module 112 based on the output data.

In some examples, the electronic controller 17 is disposed in the battery pack 11, the slave controller 1122 is disposed in the cell module 112, and the electronic controller 17 communicates with the slave controller 1122 through the wireless communication module 1123. Optionally, the electronic controller 17 is disposed in the power tool 12 or the traveling device. When the battery pack is connected to the power tool 12, the battery controller 17 communicates with the slave controller 1122 through the wireless communication module 1123. The wireless communication module 1123 includes a transmitter disposed in the power tool and a receiver disposed in the cell module. Optionally, the battery controller 17 is disposed in the charger 14 and communicates with the slave controller 1122 through the wireless communication module 1123, and the wireless communication module 1123 includes a transmitter disposed in the charger 14 and a receiver disposed in the cell module.

Optionally, the machine learning program may be configured on the remote device and may be the machine learning program offline trained, the dynamic machine learning program, or the self-updated dynamic machine learning program. It is to be understood that the location of the electronic controller and the specific form of the machine learning program may be any one or a combination of several of the examples disclosed above.

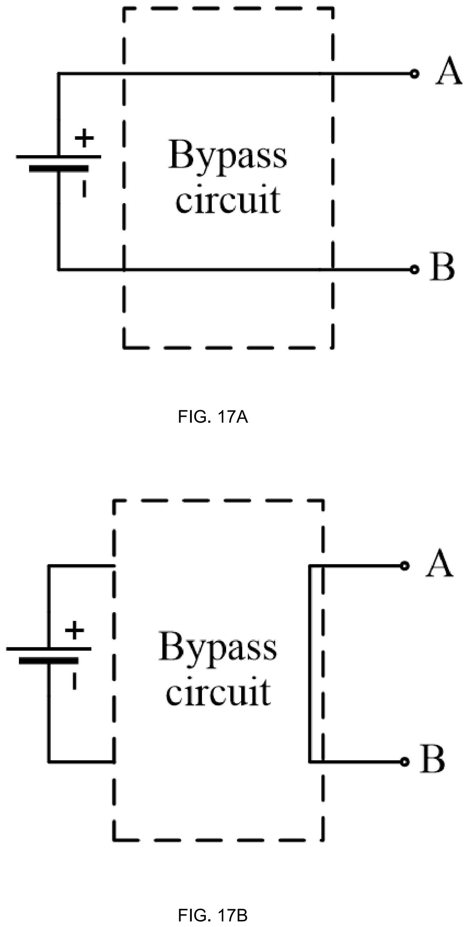

The cell module and the battery pack provided with the cell module are described below. In this example, the cell module 112 is electrically coupled to the slave controller 1122 through a half-bridge circuit. The half-bridge circuit includes a switching element, a control signal of the electronic controller 17 is outputted to the slave controller 1122, and the slave controller 1122 controls the switching element to be on or off so as to control charging and discharging of a single cell. The switching element controls the bypass circuit to be on or off. As shown in FIG. 17A, when the bypass circuit of the cell module is turned on, a current flows through a cell in the cell module, that is, the cell is connected to the circuit. As shown in FIG. 17B, when the bypass circuit of the cell module is turned off, the current bypasses the cell in the cell module, that is, the current bypasses the cell. One or several single cells are connected to the bypass circuit so that the control of the battery pack is based on safety. In the charging and discharging control process of the battery pack, each single cell 1121 has a difference. To reduce the influence of the difference of the single cell 1121 on the overall safety of the battery pack, the single cells need to be balanced. In this example, active balancing is performed through the bypass circuit, and a bidirectional DC-DC converter is not used in the balancing method using the bypass circuit. Since no additional inductor/capacitor is used in the active balancing method, the active balancing method has better efficiency. The control and protection of the battery pack may be performed from the single cell. The slave controller determines, through the control signal of the electronic controller, which bypass circuit is controlled and then which cell is controlled. The control is more efficient, and the safety and reliability are improved.

In this example, the switching element includes a controllable semiconductor power device (such as a field-effect transistor (FET), a bipolar junction transistor (BJT), or an insulated-gate bipolar transistor (IGBT)). The switching element may be any other type of solid-state switch, such as an insulated-gate bipolar transistor (IGBT) or a bipolar junction transistor (BJT). The sensor 18b monitors the voltage, current, and temperature of the cell.

In some examples, different types of electronic controllers are used in conjunction with controlled apparatuses (the battery pack, the power tool or the traveling device, the charger, the cell module). In some examples, the controlled apparatus may include more than one electronic controller, and each electronic controller may be of a different type. In some examples, for example, the battery pack includes two electronic controllers, or each of the battery pack and the power tool is provided with the electronic controller. The battery pack may include the electronic controller 17b provided with the machine learning program offline trained, and the electronic controller 17b may be set as a first electronic controller. In addition, the battery pack may further include the electronic controller 17d provided with the self-updated machine learning program, and the electronic controller 17d may be set as a third electronic controller. Optionally, the battery pack may include the first electronic controller, but the machine learning program offline trained may then be removed and replaced by, for example, the self-updated machine learning program.

In some examples, the electronic controller 17 includes a reinforcement learning program that allows the electronic controller 17 to continually integrate the feedback received by the user to optimize the performance of the electronic controller 17. In some examples, the reinforcement learning program control periodically evaluates a reward function based on the performance of the machine learning control. In such examples, training the electronic controller includes increasing charging or discharging operation time of the battery pack such that the reinforcement learning control receives sufficient feedback to optimize the execution of the machine learning program. In some examples, when the reinforcement learning is implemented through the electronic controller, a first stage of operation (for example, training) is performed during or before manufacturing such that when the user uses the battery pack, the machine learning program can achieve predetermined minimum performance (for example, accuracy). Once the user uses the battery pack, the machine learning program may continue learning and evaluating the reward function to further improve its performance. Therefore, the battery management system may initially be equipped with a stable and predictable algorithm, and the algorithm can be adjusted over time. In some examples, the reinforcement learning is limited to a portion of the machine learning program. For example, in some examples, instead of potentially updated weights/biases for all or most of the machine learning program that may occupy significant processing power and memory, the actual model remains frozen or mostly frozen (for example, all but last layer(s) or outputs), and one or several output parameters or output features (for example, final scaling or thresholds) of the machine learning program are updated based on feedback.

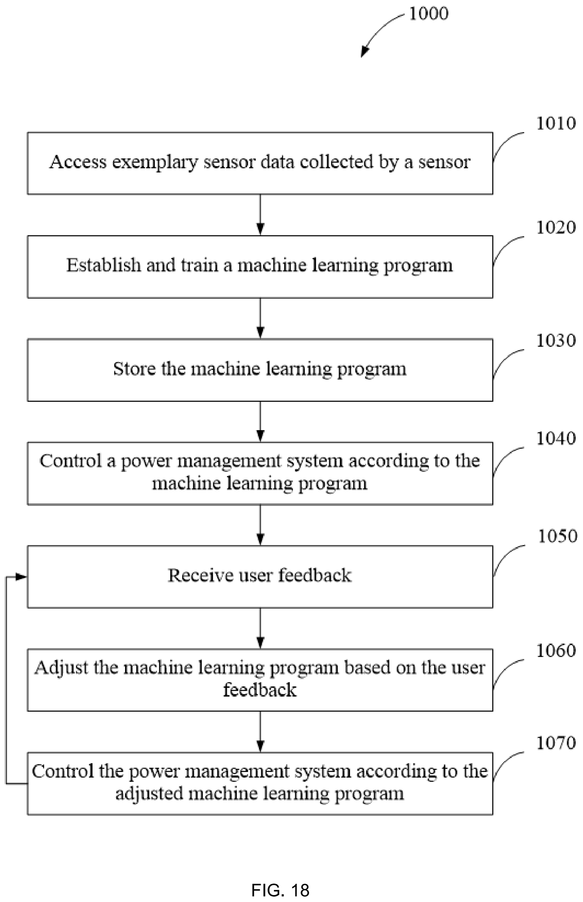

FIG. 18 shows a method 1000 for establishing and implementing the machine learning program. The machine learning program may be established and operated by the server. Optionally, the machine learning program may be established by the server but implemented by the controlled apparatus. Optionally, the controlled apparatus establishes and implements the machine learning program.

In 1010, exemplary sensor data collected by the sensor is accessed. The server or the controlled apparatus receives the use data of the battery pack from a variety of controlled apparatuses.

In 1020, the machine learning program is established and trained, which may be performed in the server or the controlled apparatus.

In 1030, the machine learning program is stored, that is, the machine learning program is stored in the electronic controller.

In 1040, a power management system is controlled according to the machine learning program, where discharge management is performed when the battery pack powers the power tool or the traveling device that uses the battery pack, and charging management is performed when the charging apparatus charges the battery pack.

In 1050, user feedback is received.

In 1060, the machine learning program is adjusted based on the user feedback.

When adjusting the machine learning program based on the user feedback, the electronic processor may adjust the machine learning program based on feedback from different users. In the example where the electronic controller is fully implemented in the battery management system, the electronic processor may adjust the electronic controller of the battery management system using only feedback indications from the battery pack. Using feedback information from a particular user may help customize the operation of the battery management system for the particular user of the battery management system.

In 1070, the power management system is controlled according to the adjusted machine learning program.

In some examples, the user may also select a learning rate for the electronic controller 17. Adjusting the learning rate for the electronic controller 17 influences the speed of adjustment of the electronic controller based on the received user feedback. For example, when the learning rate is high, even a small number of feedback indications from the user (or users) also influence the performance of the electronic controller. On the other hand, when the learning rate is relatively low, more feedback indications from the user are used for generating the same change in the performance of the electronic controller. Using an excessively high learning rate may cause the electronic controller to change unnecessarily due to an abnormal operation of the battery pack. On the other hand, using an excessively low learning rate may cause the electronic controller to remain unchanged until a large number of feedback indications requesting a similar change are received. In some examples, the battery management system includes a dedicated actuator to adjust the learning rate of the electronic controller.

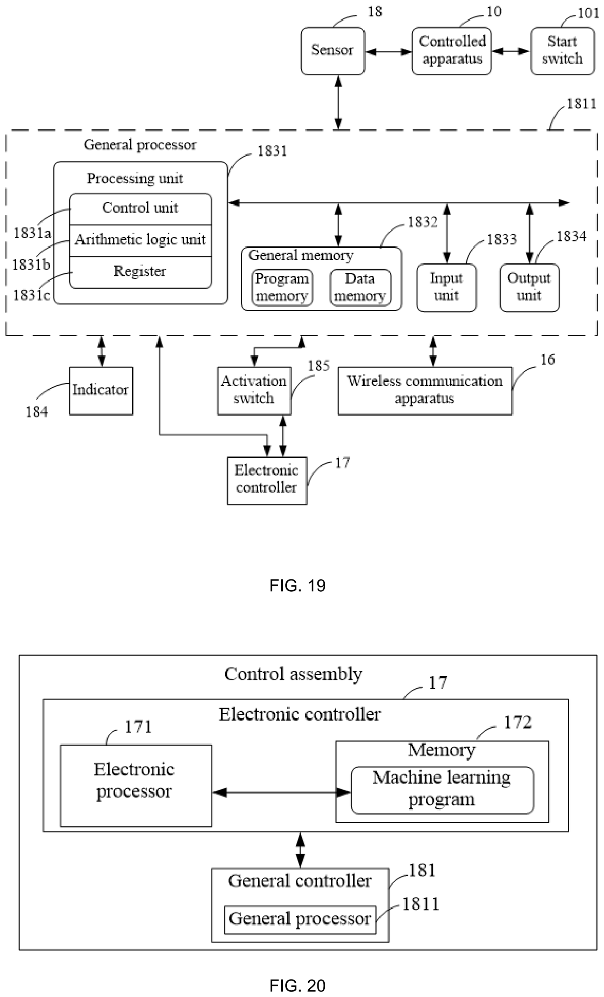

As shown in FIG. 19, in another example, an activation switch 185 is configured to enable or disable the electronic controller and may also be configured to adjust the learning rate of the electronic controller. In other examples, the external device (for example, a smartphone, a tablet computer, a laptop computer, or an applicationspecific integrated circuit (ASIC)) may be communicatively coupled to, for example, the battery pack and provide a user interface to, for example, select the learning rate. In some examples, the selection of a learning rate may include a selection of a low, medium, or high learning rate. In other examples, more or fewer options are available to set the learning rate and may include the ability to turn off learning (that is, setting the learning rate to zero).

When the electronic controller implements a recurrent neural network, the learning rate (or sometimes referred to as a "switching rate") has an influence on how previous inputs or training examples influence the output of the current input or a training example. For example, when the switching rate is relatively high, the previous inputs have a minimal influence on the output associated with the current input. That is to say, when the switching rate is high, each input is considered more as an independent input. On the other hand, when the switching rate is low, the previous inputs have a high correlation with the output of the current input. That is to say, the output of the current input is highly dependent on the outputs determined for the previous inputs. In some examples, the user may select the switching rate in correlation (for example, using the same actuator) with the learning rate. In other examples, however, a separate actuator (or a graphical user interface element) is generated to change the switching rate independently from the learning rate. The methods or components to set the switching rate are similar to those described above with respect to setting the learning rate.

The electronic controller 17 may be provided with any one or more of the machine learning programs described above. The electronic controller 17 is electrically and/or communicatively connected to various modules or components of the battery management system 100. The electronic controller 17 controls the battery pack based on the output and determination from the machine learning program.

As shown in FIGS. 19 and 20, the battery management system further includes a general controller 181. The battery pack 11 is used as an example, and the general controller 181 and the electronic controller 17 form a control assembly. The general controller 181 includes a general processor 1811. The general processor 1811 includes multiple electrical and electronic components that provide power, operation control, and protection for components and modules in the general processor and/or the battery management system. The general controller 181 and the electronic controller 17 are each provided with a corresponding activation switch 185. The activation switch 185 can selectively enable and disable a machine learning controller. The general processor 1811 includes a processing unit 1831 (for example, a microprocessor, a microcontroller, or another appropriate programmable device), a general memory 1832, an input unit 1833, and an output unit 1834. The general processing unit 1831 includes a control unit 1831a, an arithmetic logic unit ("ALU") 1831b, and multiple registers 1831c. In some examples, the electronic processor is partially or completely included in a single-chip microcomputer and a microcontroller unit (MCU).

In this example, the electronic controller 17 is disposed in the battery pack, and the general controller 181 is also disposed in the battery pack. The electronic controller 17 includes a first processor 171 and a first memory 172. The electronic controller 17 is supported by the housing of the battery pack and is coupled to the sensor. The electronic controller is configured to: receive the sensor data; process the sensor data using the machine learning program, where the machine learning program is a trained machine learning model; and use the machine learning program to generate an output based on the sensor data. The switching element is configured to control an input current of the battery pack or an output current of the battery pack. The general controller 181 includes a second processor and a second memory. The general controller is also supported by the housing and is electrically connected to the switching element and the electronic controller. The general controller is configured to receive the output from the electronic controller and control the switching element based on the output.

Optionally, the electronic controller 17 is disposed in the battery pack, and the general controller 182 is disposed in the power tool or the traveling device powered by the battery pack. Optionally, the electronic controller 17 is disposed in the battery pack, and the general controller 183 is disposed in the charger that powers the battery pack. Optionally, the general controller is disposed in the battery pack, and the electronic controller is disposed in the power tool or the traveling device powered by the battery pack. Optionally, the general controller is disposed in the battery pack, and the electronic controller is disposed in the charger that powers the battery pack.

The electronic processor is configured to retrieve from the memory and execute, among other things, instructions related to the control processes and methods described herein. The electronic processor is also configured to store battery pack information in the memory. The battery pack information includes battery pack use information, information for identifying the type of the battery pack, a unique identifier for a particular battery pack, user characteristics (for example, the identity, the industry type, and the skill level), and other information related to operating or maintaining the battery management system. The battery pack use information such as a current level, a voltage level, use time, and a battery lifetime may be captured or inferred from data outputted by the sensor.

The electronic controller 17 is positioned on a separate printed circuit board (PCB). The PCB of the general processor 181 and the PCB of the electronic controller 17 are coupled to each other through, for example, a wire or a cable, so as to enable the general processor of the battery management system to control the charging and discharging of the battery pack based on the output and determination from the electronic controller. However, in other examples, the machine learning program may be stored and implemented in the general memory of the general processor. In such examples, the electronic controller includes a single electronic processor. In yet other examples, the machine learning program is implemented in a separate electronic processor but is located on the same PCB as the general processor of the battery management system. In the example where the machine learning control is implemented as a processing unit separate from the general processor, no matter that the machine learning control and the general processor are on the same PCB or different PCBs, it is allowed to select the processing unit to implement each of the machine learning control and its abilities (for example, the processing power and the memory capacity) in the general electronic processor to suit a specific requirement of each unit. Such customization can reduce costs and increase the efficiency of the power tool. In some examples, the electronic controller is implemented in a plug-in chip or controller that is easily added to the battery management system, for example, the machine learning controller may include the plug-in chip. In this example, the machine learning controller is disposed on a Renesas chip.

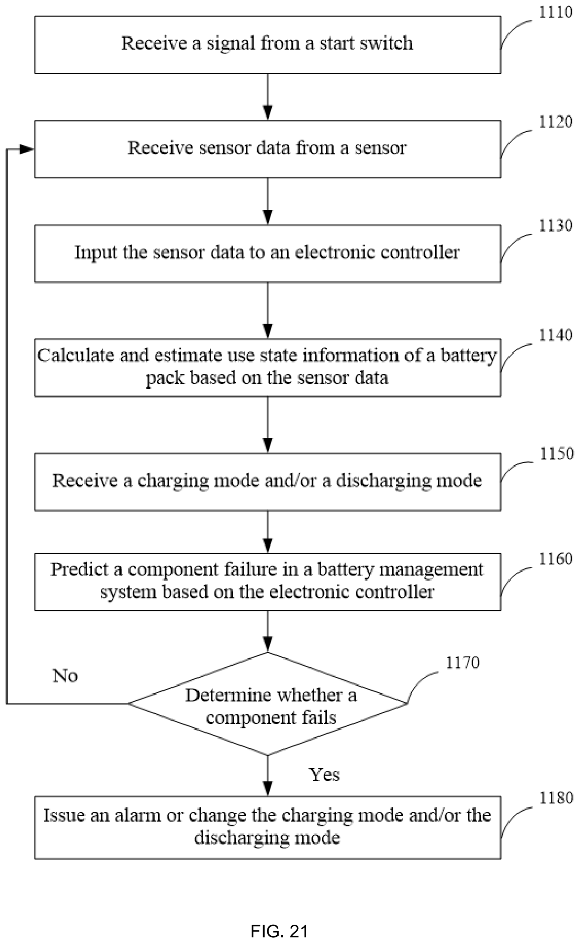

FIG. 21 is a flowchart showing that the machine learning program applied to the battery management system is configured to control an output of a use state of the battery pack.

In 1110, a signal from a start switch is received, and the power management system is started.

In 1120, the sensor data is received. The sensor data includes, for example, current data, voltage data, temperature data, or internal resistance data and device data, maintenance data, user feedback data, power supply data, environmental data, operator data, and location data of the power tool.

In 1130, the sensor data is inputted to the electronic controller.

In 1140, use state information of the battery pack is calculated and estimated based on the sensor data, where the use state information of the battery pack includes at least one of a state of charge (SOC), a state of temperature (SOT), a state of health (SOH), and a state of power (SOP).

In 1150, a charging mode and/or a discharging mode, the type of a connected power supply, a power supply cost of the connected power supply, a circuit breaker on a connected circuit, a pre-charging mode, a constant-current regulation mode, a constant-voltage regulation mode, and a fast charging mode are received.

In 1160, a component failure in the battery management system is predicted based on the electronic controller. The estimated use state information of the battery pack is compared with a threshold.

In 1170, it is determined whether a component fails. If the component fails, 1180 is performed, and if the component does not fail, 1120 is performed.

In 1180, an alarm is issued, or the charging mode and/or the discharging mode are changed.

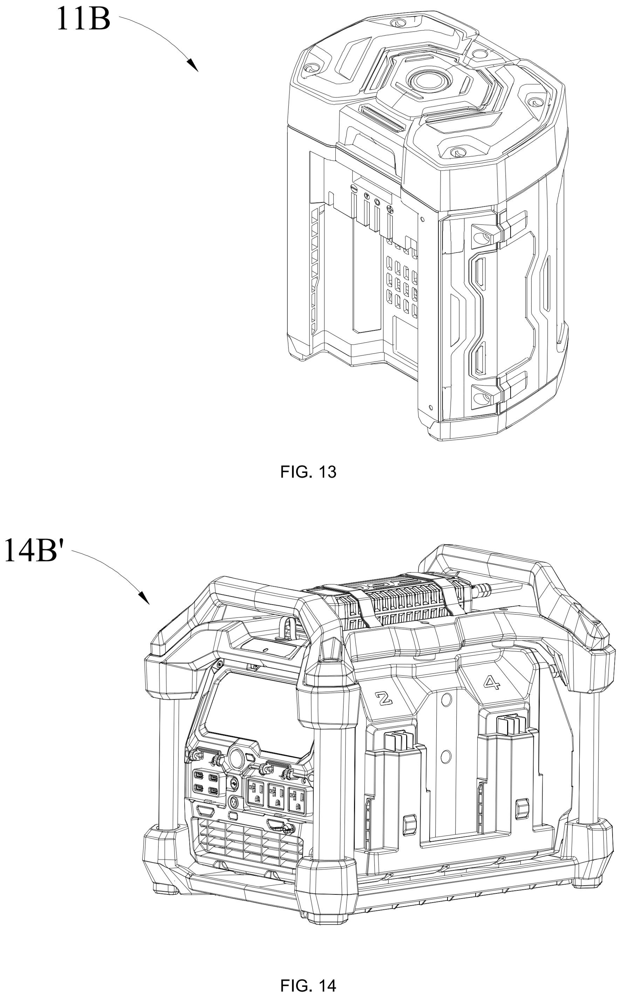

As shown in FIGS. 9 and 10, the battery pack 21 may be a lithium battery pack, a solid-state battery pack, or a pouch battery pack. In some examples, the nominal voltage of the battery pack may be greater than or equal to 10 V and less than or equal to 20 V. For example, the nominal voltage of the battery pack may be 12 V, 18 V, or 20 V. As shown in FIG. 13, the nominal voltage of a battery pack 11B may be greater than or equal to 20 V and less than or equal to 100 V. For example, the nominal voltage of the battery pack may be 24 V, 40 V, 56 V, or 80 V. As shown in FIG. 14B', a charger 14B' charges the 11B.

In an example, the positive terminal 115 may be divided into discharging positive terminals and a charging positive terminal, where the discharging positive terminals are two terminals connected in parallel, and the charging positive terminal is one terminal. Negative terminals 116 are two terminals connected in parallel. The communication terminal is one terminal. In an example, battery pack output terminals display, on the battery pack housing, interfaces corresponding to 6 output terminals. In alternative examples, the housing may be provided with more or fewer interfaces depending on the electrical characteristics of the battery pack. It is to be understood that the interfaces corresponding to the output terminals on the housing of the battery pack correspond to the interfaces corresponding to the input terminals of the power tool.

In some examples, the number of single cells 1121 included in one cell group 112a may be greater than or equal to 3 and less than or equal to 5. For example, the number of single cells 1121 included in one cell group 112a may be 3, 4, or 5. In some examples, the number of single cells 1121 included in one cell group 112a may be greater than or equal to 6 and less than or equal to 25. For example, the number of single cells 1121 included in one cell group 112a may be 6, 10, 14, or 20. In some examples, the battery pack 11 may include only one cell group 112a so that the battery pack is relatively small in volume. In some examples, the battery pack 11B may include three cell groups 112a or four cell groups 112a so that the capacity of the battery pack can be increased and the battery lifetime of the battery pack is prolonged. The cell group 112a is constituted by multiple cells connected in series, or multiple cells connected in parallel, or a combination of single cells 1121 connected in series and single cells 1121 connected in parallel. In some examples, each single cell 1121 has a flat band-like structure, the multiple cells 1121 are stacked along an up and down direction, and each single cell 1121 may also be bent into an arc shape. In other examples, each single cell 1121 has a cylindrical structure. It is to be understood that the present application is not limited to the disclosed examples, and the structure of the cell is not limited herein.

In this example, the capacity of the battery pack is greater than or equal to 1.5 Ah and less than or equal to 20 Ah. The single cell 1121 is a cylindrical cell. Further, the single cell 1121 is a cylindrical lithium cell. The weight of each cell unit is greater than or equal to 35 g and less than or equal to 55 g, and the capacity of each single cell 1121 is greater than or equal to 1200 mAh and less than or equal to 3600 mAh. In some other examples, the weight of each single cell 1121 is greater than or equal to 60 g and less than or equal to 75 g, and the capacity of each single cell 1121 is greater than or equal to 3000 mAh and less than or equal to 5000 mAh.

In some examples, the communication module 118 of the battery pack may be integrated into the battery pack controller 181 or may be separately disposed. The communication module 118 is used for connection to the remote device. In some examples, the communication terminal of the battery pack and the communication module may also be integrated. The communication module may further include an Internet of Things (IoT) communication module to share various parameters and control instructions of the battery pack with another apparatus in the IoT network.

In some examples, the battery pack further includes a human-computer interaction component such as the display apparatus 114 for displaying or feeding back information about the battery pack, for example, a display of operating state information, a failure alarm/indication, and other information to be indicated to the user. Of course, in some examples, the external device is used for implementing a human-computer interaction function. For example, the smart device is configured to be communicatively connected to the communication module 118 of the battery pack to input and feed back related information through the smart device.

As an example of the present application, a lithium battery pack is used as an example. Lithium ion batteries have been widely used in electric vehicles, portable electronic products, and smart grid systems due to their high energy/power densities, long cycle lives, and high efficiency. However, a technical bottleneck of lithium ion batteries is related to heat. This bottleneck stems from the complex influences of a temperature on the safety, performance, and life of a lithium ion battery. Therefore, temperature monitoring is a basis for a battery management system. In the related art, a battery temperature may be monitored through a temperature sensor placed on a surface of a cell. However, in a battery pack in real life, it is impractical to place a temperature sensor on a surface of each single cell 1121 due to costs and complexity considerations. Therefore, in this example, the machine learning program is configured to estimate the state of temperature (SOT).

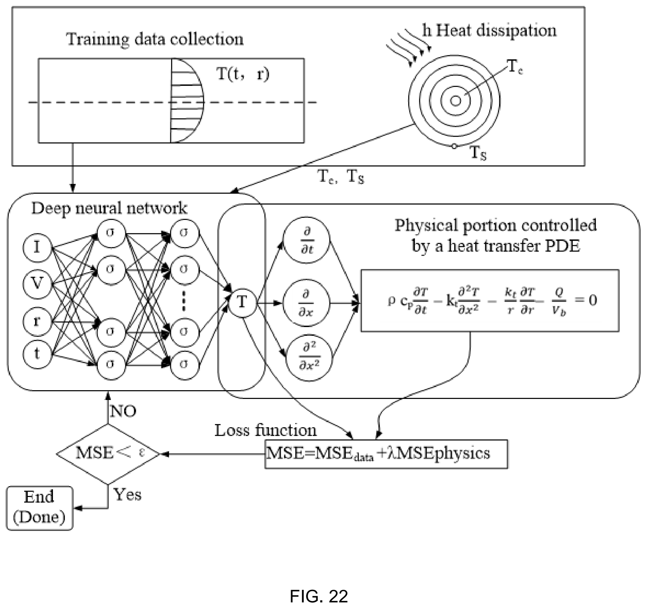

The machine learning program includes a trained neural network model, and the neural network model is a physics-informed neural network (PINN) model. The PINN can quickly solve the underlying nonlinear heat transfer partial differential equation (PDE) with a small amount of data and provide an indicative output of an internal temperature distribution of the battery. The PINN mimics a data pattern controlled by the heat transfer partial differential equation so that a temperature distribution within the cell can be estimated. A PINN framework for estimating the temperature distribution of the battery is shown in FIG. 22, where a cylindrical cell is used as an example. When training data is collected, a current, a voltage, a surface temperature, and a core temperature (measured by inserting a sensor into the core of the battery) may be measured. The measured data is regarded as training data of a deep neural network, and the loss is calculated according to a predicted temperature and a measured temperature. Furthermore, the temperature at any point within the core, surface, and domain should follow the heat transfer partial differential equation and initial and boundary conditions thereof. The temperature difference between moments and the temperature difference between positions may be calculated through automatic differentiation so that a physical loss is accordingly obtained according to the heat transfer partial differential equation. In the PINN, a loss function considers a training data loss and the physical loss. The total loss is minimized so that the weight and bias of the neural network can be adjusted and an unknown coefficient in the partial differential equation can be identified. A trained PINN can perform a prediction with high precision and also follows a heat transfer law so that the trained PINN can be configured to estimate internal temperature distributions under other operation conditions.

The framework for estimating the temperature distribution with the PINN includes measuring temperature data at battery surfaces and cores for training a recurrent neural network (for example, based on the deep neural network). Then a physical portion is added as a regularization term to further train the deep neural network so that the estimated temperature not only follows the data pattern in a training set but also follows the spatiotemporal physical law in the physical portion. The network is trained by minimizing the loss of the measured data and the loss in the physical portion with a certain number (for example, 10,000) of samples or more samples, where an appropriate $\lambda$ should be selected to adjust the relative importance between the data loss and the physical loss. The training process can adjust the weight and bias in the neural network and identify unknown parameters in the partial differential equation (where T represents a temperature, t represents time, I represents a current, V represents a voltage, r represents a spatial distribution, Q represents heat generation, $C_p$ represents specific heat capacity, $V_b$ represents the volume of the battery, MSE represents a mean squared error, $MSE_{data}$ represents a mean squared error of temperature estimation based on the measured data, $MSE_{physics}$ represents a mean squared error of temperature estimation of the physical portion, $k_t$ represents the thermal conductivity of a pixel, and $\lambda$ represents a coefficient between the data loss and the physical loss). Using the PINN for accurate estimation of a temperature state is the first step in achieving a long-term (for example, 10 minutes ahead) temperature prediction goal, which leads to optimal operation and reduces safety problems for smart batteries.

As an example of the present application, the lithium battery pack is used as an example. As the battery is used over time, the battery may age, resulting in different battery characteristics in different periods, which is specifically reflected in the magnitude of a state of health (SOH) value of the battery. Therefore, the state of health (SOH) value intuitively reflects the overall performance of the battery and the ability of the battery to release electrical energy under certain conditions. While empirical methods such as direct measurement of charge throughput or indirect analysis of an incremental capacity have been used for quantifying an SOH mechanism, the stability of the empirical methods severely limits the use of the empirical methods in practical applications. Therefore, in this example, the machine learning program is configured to estimate the state of health (SOH). The machine learning program includes methods such as a support vector machine, an artificial neural network, deep learning (DL), and a random forest.

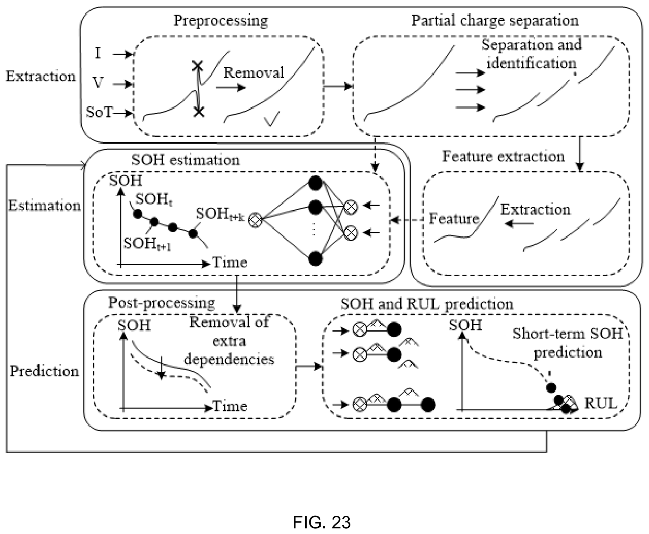

The deep neural network can extract global features from raw multi-dimensional data. However, due to the potential nature of the SOH, it is generally impossible to obtain, in practical applications, the amount of SOH information needed to train such neural network. To improve the precision of the estimation based on a small amount of data, an ensemble method based on bootstrap aggregating (Bagging) is proposed. Bagging creates augmented samples by resampling exemplary raw data sets and trains a series of extreme learning machines based on these samples. A Bagging-based ensemble extreme learning machine (ELM) method has many advantages of deep learning (DL), such as automatic feature extraction. In addition, the Bagging-based ELM integration method requires less data for training and performs well when estimating the SOH. In addition to a method based on fuzzy entropy features and the ensemble extreme learning machine method, the amount of useful information extracted from single partial charging of the battery is increased through data augmentation. The augmentation not only allows extraction of a charging voltage, but also allows extraction of each partial charging voltage sequence found in any charge (regardless of the magnitude of the charge). FIG. 23 shows a general framework for data cleaning, partial charge separation, feature extraction, and SOH estimation.

The object of any remaining useful life (RUL) algorithm is to predict the time of the end of life (EOL) of the battery. However, it is necessary to predict the SOH before predicting the end of life (EOL). Based on a given mission profile and a short-term SOH prediction method, a long-term behavior of the SOH can be predicted to the end of life (EOL). In physics-based life models, although the nonlinear and time-varying characteristics of electrochemical systems can be explained, it is difficult to identify parameters for these models since these models rely on destructive testing methods. Therefore, the development of physics-based models requires time and resources and is therefore not necessarily a viable option for real-time prediction.

In this example, a deep learning life model may be established according to collected data and continuously updated through gradient optimization. That is to say, the relationships between features (that is, health indicators such as a voltage, a current, and a temperature) and the cycle life and calendar service life of a battery unit may be established. Optionally, the deep neural network, a convolutional neural network, and a recursive neural network (RNN) are used as algorithms for predicting the remaining useful life (RUL) because these algorithms inherently model parameters that vary over time. The biggest challenge of the SOH and RUL prediction methods described above is that the methods require SOH measurements to work. To obtain the SOH measurements means that the battery stops running, and the SOH measurements are obtained in an entire period, that is, the battery is fully charged and discharged. In addition, to make these prediction methods effective, these prediction methods need to be performed periodically and as much as possible. The SOH prediction and the RUL prediction run on an SOH estimation model that can provide an estimate of the SOH for each partial charging of the battery. The estimated SOH is given, and post-processing needs to be applied to eliminate the influence (if such influence cannot be eliminated by constructing invariant features) of a dependency (such as, the temperature and a C-rate). During the prediction of a future SOH, the uncertainty prediction of the SOH and the RUL should be stabilized when the estimated SOH is used. Furthermore, with new SOH measurements, the difference between the predicted SOH and the measured SOH will be used for updating the SOH estimation model, ultimately leading to better SOH prediction. FIG. 23 shows a general framework for the post-processing, the SOH prediction, and the RUL prediction.

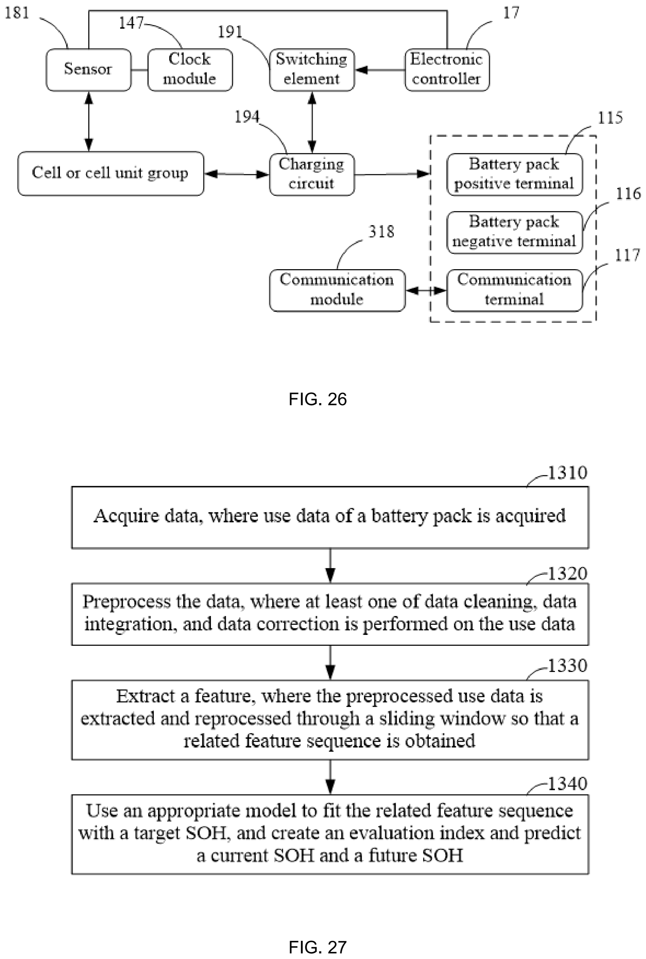

Correspondingly, a method 1300 for constructing a life evaluation model for the battery pack for powering the power tool is described. FIG. 27 is a flowchart of the method 1300 for constructing the life evaluation model for the battery pack.

In 1310, data is acquired, where use data of the battery pack is acquired.

In 1320, the data is preprocessed, where at least one of data cleaning, data integration, and data correction is performed on the use data.

In 1330, feature engineering processing is performed, where the preprocessed use data is extracted and reprocessed through a sliding window so that a related feature sequence is obtained.

In 1340, the model is constructed, where an appropriate machine learning model is used to fit the related feature sequence with a target state of health (SOH), and an evaluation index is created and a current state of health (SOH) and a future state of health (SOH) are predicted.

The preceding model construction method may be performed by the remote device such as a cloud platform or the server or may be performed by the electronic controller in the controlled apparatus such as the charger, the battery pack, or the power tool. In the case where the model is constructed by the remote device, the model is transmitted to the controlled apparatus for implementation after the remote device completes the construction of the model. For the relevant architecture and the relevant interaction process, reference may be made to the preceding description, and the details are not repeated here.

During the construction of the life evaluation model for the battery pack, first, it is necessary to acquire use data of a battery pack to be subjected to life evaluation. In some cases, recorded related data may be read locally. In other cases, the preceding data may also be requested from devices such as the battery pack or a controlled apparatus related to the battery pack, and a database that has collected related data. The use data of the battery pack may include data such as the model, a use duration, the number of accumulated charging and discharging times, and a full-charge voltage difference of the battery pack, and a voltage, a current, a state of charge (SOC), and a temperature of the battery pack in each charging and discharging process. Voltage data may further derivatively include a cell voltage of each cell in the battery pack in each charging and discharging process and other data related to the cell voltage obtained through analysis and conversion. Temperature data may further derivatively include a measured temperature at each temperature measurement point in the battery pack in each charging and discharging process and other data related to the measured temperature at each temperature measurement point obtained through analysis and conversion. It is to be understood that based on actual scenario requirements, use data of other types of the battery pack not mentioned above may also be used for the construction of the life evaluation model for the battery pack.

The obtained raw use data of the battery pack may be redundant and erroneous data. In addition, use data provided by different controlled apparatuses may be multi-source heterogeneous data. To ensure smooth and efficient model construction, it is necessary to perform preprocessing, such as the data cleaning, the data integration, and the data correction, on the obtained use data. After the obtained use data is preprocessed, the feature engineering processing needs to be performed on the use data to adapt to requirements of the machine learning model. Specifically, the preprocessed use data should be time series data, and at least sliding extraction may be performed on the preprocessed use data through the sliding window. An extracted target may be a mean, an extreme value, a difference, and the like of each piece of data in the window, and a window size and a sliding step length may be determined according to actual scenario requirements. The raw use data subjected to the feature engineering processing can be converted into the related feature sequence. For example, raw temperature data includes measured temperatures at different temperature measurement points and measured temperatures at different moments, which are arranged disorderly, contain abnormal values and repeated values, and are missing. 25 temperature measurement points and 2000 moments are used as an example, and 2000*25 measured temperatures that are represented by matrix data and correspond to the moments 0 to 1999 and the temperature measurement points 1 to 25 can be obtained after the preprocessing and the feature engineering processing. The data matrix is the feature sequence corresponding to the temperature data. Alternatively, measured temperatures at the 25 temperature measurement points at the same moment are averaged, and the obtained mean of 2000*1 measured temperatures corresponding to the moments 0 to 1999 is the feature sequence corresponding to the temperature data.

The life evaluation model for the battery pack can be constructed and trained by using the preceding related feature sequence. In some cases, a model capable of evaluating the current SOH of the battery pack can be obtained by using the preceding related feature sequence. In other cases, a model capable of predicting a future SOH development condition of the battery pack can also be obtained by using the preceding related feature sequence. The life evaluation model for the battery pack has various optional implementation algorithms, including, but not limited to, a linear model, a decision tree model, a support vector machine model, a Bayesian model, a clustering model, a neural network model, a dimensionality reduction and metric learning model, an ensemble learning model, a reinforcement learning model, and a deep learning model.

In the case where a supervised model is used, in order that the original life evaluation model for the battery pack is trained by using the related feature sequence, firstly, a target SOH used as a sample identifier is needed, and secondly, the correspondence between the use data/related feature sequence of the battery pack and the target SOH needs to be specified. For these two problems, during the feature engineering processing, first, the use data of the battery pack may be divided into multiple different charging and discharging processes. Hereinafter, data in a charging process is used as an example. Based on data such as the voltage and current of the battery pack at each moment in one charging process, the capacity of the battery pack at each moment in the charging process may be calculated for a fixed voltage interval by using an ampere-hour integration method. Then, the capacity of the battery pack may be converted into the target SOH of the battery pack at each moment in conjunction with data such as the SOC. In addition, the correspondence between the use data and the target SOH may be determined based on the moment at which the use data is collected.

In some examples, a linear regression model may be used to construct the life evaluation model for the battery pack for evaluating the current SOH of the battery pack. The model uses feature sequences corresponding to various types of use data as input parameters, and the target of a loss function of the model is that an outputted SOH is close to the target SOH at the moment. In some cases, the life evaluation model for the battery pack may be separately trained by using feature sequences corresponding to different types of use data, and model fusion is performed on the obtained multiple life evaluation models for the battery pack so that it is ensured that the obtained life evaluation model for the battery pack can consider influences in various aspects. For example, a linear regression model close to the target SOH is trained and outputted based on the use duration, the number of accumulated charging and discharging times, the maximum charging voltage, and the maximum measured temperature separately such that 4 life evaluation models for the battery pack are obtained. The mean of SOHs outputted by the 4 life evaluation models for the battery pack may be used as a predicted current SOH of the battery pack. In addition, joint training may be performed during the training of the model, and the training is performed, where the target of a joint loss function is that the mean of the SOHs outputted by the 4 models is close to the target SOH.

In some examples, a Long Short-Term Memory (LSTM) model may be used to construct the life evaluation model for the battery pack for predicting the future SOH of the battery pack. First, a historical SOH sequence and a future SOH sequence need to be determined based on the target SOH. For example, the historical SOH sequence may be constituted by the target SOHs of the previous three months, and the future SOH sequence may be constituted by the target SOHs of the subsequent three months. The LSTM model uses the historical SOH sequence as an input parameter, and the target of a loss function of the LSTM model is that an outputted SOH sequence is close to the future SOH sequence. During the implementation of the model, the controlled device may first calculate and record the SOH sequence of the battery pack by using the method described above and obtain the future SOH sequence of the battery pack from the recorded SOH sequence by using the life evaluation model for the battery pack, so as to learn a development situation of the future SOH of the battery pack.

In some examples, multiple feature sequences related to the temperature data may be constructed based on measured temperatures at multiple temperature measurement points at different moments, and the life evaluation model for the battery pack capable of predicting the current SOH of the battery pack is trained and obtained by using at least one of the multiple feature sequences related to the temperature data. Similar to the preceding description, the model uses a temperature-related feature sequence as an input parameter, the target of the loss function is that the outputted SOH is close to the target SOH, and the life evaluation model for the battery pack may be the LSTM model or an XGBoost model. The feature sequences constructed based on the measured temperatures at the multiple temperature measurement points at the different moments includes: a temperature difference sequence of a temperature measurement point generated based on measured temperatures at the same temperature measurement point, for example, a sequence of rising speeds of measured temperatures at a central temperature measurement point; a temperature difference sequence between temperature measurement points generated based on measured temperatures at different temperature measurement points, for example, a sequence formed by the difference between the maximum measured temperature and the minimum measured temperature at each moment; and a temperature increment sequence corresponding to a unit SOC, for example, measured temperatures at all temperature measurement points are acquired once each time the SOC increases by 1%, the mean of the measured temperatures is obtained, and the difference between measured temperature means is calculated to form the sequence, and for example, when the SOC increases from 25% to 80% and there are 25 temperature measurement points, the temperature increment sequence corresponding to the unit SOC formed by 56*1 measured temperature mean differences is obtained.

In addition, evaluation criteria for data quality or model quality may be established based on actual scenario requirements. For example, a model evaluation index such as accuracy, precision, a recall rate, or a combination of the three may be created to validate, evaluate, and optimize the constructed life evaluation model for the battery pack. The specific validation, evaluation, and optimization method includes, but is not limited to, cross-validation and parameter tuning on a validation set.

As an example, in the charger 14 or an electronic combination constituted by the charger 14 and an electronic circuit or an electrical element that cooperates with the charger 14, the electronic controller 17 in the charger 14 includes a machine learning program for processing charging data of the battery pack 11 generated when the battery pack 11 is charged by the charger 14, so as to perform aging evaluation on the battery pack 11, and the machine learning program includes at least a vector model and reference vectors corresponding to multiple aging parameters, respectively. The electronic controller 17 records the charging data generated when the charging circuit of the charger 14 charges the battery pack 11 through the battery pack interface, converts the charging data into a charging feature vector of the charging of the battery pack 11 by using the vector model, then calculates the Euclidean distance between the charging feature vector and each reference vector, and selects an aging parameter corresponding to the reference vector with the minimum distance as an aging evaluation value for the battery pack 11 to determine the aging condition of the battery pack 11. For specific components of the charger 14, reference may be made to the preceding related description.

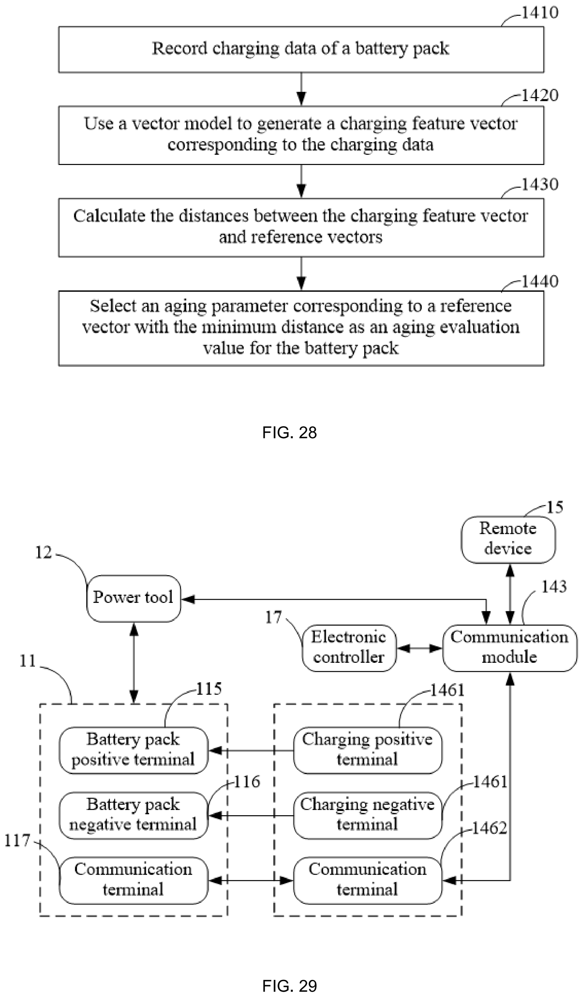

FIG. 28 is a flowchart 1400 of a control scheme for the preceding electronic combination.

In 1410, the electronic controller records charging data of the battery pack generated when the battery pack is charged.

In 1420, the charging data is vectorized using the vector model so that the charging feature vector of the battery pack is obtained.

In 1430, the distances between the charging vector and the reference vectors are calculated separately.

In 1440, the aging parameter corresponding to the reference vector with the minimum distance is selected as the aging evaluation value for the battery pack.

The charging data of the battery pack 11 recorded by the electronic controller includes data recorded by the electronic controller itself during the charging of the battery pack 11, data obtained by the electronic controller from the battery pack 11 through the communication terminal, and data received by the electronic controller from the sensor. The charging data includes charging time, an ambient temperature, a charging voltage, a charging current, a charging temperature, and a state of charge (SOC) during the charging of the battery pack 11 by the charger 14. Voltage data further derivatively includes a cell voltage of each cell in the battery pack 11 and a cell voltage mean, a cell voltage standard deviation, the maximum cell voltage, the minimum cell voltage, and the difference between the maximum cell voltage and the minimum cell voltage obtained by analyzing and converting the cell voltage of each cell. Temperature data further derivatively includes a measured temperature at each temperature measurement point in the battery pack 11 and a measured temperature mean, a measured temperature standard deviation, the maximum measured temperature, the minimum measured temperature, and the difference between the maximum measured temperature and the minimum measured temperature obtained by analyzing and converting the measured temperature at each temperature measurement point. It is to be understood that according to actual scenario requirements, the charging data may further include other types of charging data not mentioned above, for example, location information, model information, maintenance information, and user information.

The machine learning program used by the electronic controller may be implemented through any one or a combination of more of the machine learning algorithms described above. The machine learning program includes the vector model for vectorizing the data. The vector model uses the recorded charging data as an input parameter thereof. Based on the output result of the vector model, the electronic controller may obtain the charging feature vector corresponding to the charging data of the battery pack. In some examples, the vector model may be a Siamese network model. The Siamese network model performs contrastive learning in an unsupervised manner, and the target of a loss function is to achieve high similarity between inputted sample pairs after conversion into feature vectors. Considering that the preceding charging data such as the charging time, the SOC, the charging voltage, and the charging current actually changes during the charging, multiple values of the same type of data can be collected in one charging process. In some cases, charging data in the same charging process in a sample set may be divided into a group. For the charging data of the same type in the same process, an initial value, an extreme value, or a mean of the charging data of the type may be taken and form sample pairs with raw charging data for model training. For example, initial values of the charging time, the SOC, and the like may be taken, extreme values of the maximum cell voltage, the minimum measured temperature, and the like may be taken, and means of other types of data may be taken. The taken charging data may be mapped to the interval [0, 1] through a machine learning feature engineering method so that the training efficiency and effect of the model are improved.

The aging parameter is used for characterizing the aging degree of the battery pack and other related conditions. In some examples, the aging parameter may be the state of health (SOH) of the battery pack. The SOH may generally be represented by the ratio of a remaining maximum capacity of the battery pack to an original maximum capacity. In some other examples, the aging parameter may be another parameter that can reflect the aging condition of the battery pack, such as the remaining maximum capacity of the battery pack and a direct current internal resistance value of the battery pack.

Multiple aging intervals may be divided based on different aging parameters of the battery pack that correspond to charging processes. Each piece of charging data in the sample set may be converted into a corresponding charging feature vector by using the trained vector model mentioned above, the mean of charging feature vectors converted from multiple pieces of charging data that belong to the same aging interval may be used as a reference vector corresponding to the aging interval, and then a reference vector corresponding to each aging interval is obtained. Subsequently, after converting the current charging data into the charging feature vector by using the trained vector model, the electronic controller may calculate the Euclidean distance between the charging feature vector and each reference vector separately, select an aging parameter value of an aging interval corresponding to a reference vector with the minimum distance as the aging evaluation value for the battery pack, and determine the aging condition of the battery pack based on the aging evaluation value.

FIG. 29 is a block diagram of aging management. Referring to FIGS. 11, 12 and 29, the charger 14 includes the battery pack interface 146 constituted by the charging terminal 1461 and the communication terminal 1462. The battery pack 11 is coupled to the battery pack interface 146 to be charged by the charger 14, where electrical energy is transferred between the positive terminal 115 and the negative terminal 116 of the battery pack 11 and the charging terminal 1461 of the charger 14, and data information is transmitted between the communication terminal 117 of the battery pack 11 and the communication terminal 1462 of the charger 14. In addition, the battery pack 11 charged by the charger 14 can also be detachably connected to the power tool and power the power tool and/or transmit data information to the power tool when connected to the power tool. In some examples, after generating the charging feature vector, calculating the Euclidean distance, and determining the aging parameter of the battery pack 11, the electronic controller in the charger 14 may transmit the aging parameter and related information thereof to the battery pack 11 through the communication terminal so that the battery pack 11 learns its own aging condition and performs corresponding display alert and warning alarm behaviors. In some cases, the battery pack 11 may further transmit the aging parameter and the related information thereof to the power tool detachably connected to the battery pack 11 or may further transmit the aging parameter and the related information to the remote device such as a user equipment. In some other examples, the charger 14 further includes apparatuses such as an indicator light and a display screen. The electronic controller in the charger 14 may invoke the preceding apparatuses such as the indicator light and the display screen for an alert or a warning when determining, through analysis, that there is a risk in the current aging parameter.

In some other examples, the charger 14 includes the communication module 143. The communication module 143 is communicatively connected to the power tool and/or the remote device 15 and is electrically connected to the electronic controller. After generating the charging feature vector, calculating the Euclidean distance, and determining the aging parameter of the battery pack 11, the electronic controller may transmit the aging parameter and the related information thereof to the power tool and/or the remote device through the communication module. In some cases, the electronic controller in the charger 14 may contact the power tool through the communication module to inform the power tool of the aging condition of each battery pack and prevent the power tool from being powered by an aged battery pack. In other cases, the electronic controller contacts, through the communication module, the user equipment of the user to whom the power tool belongs and/or a management device such as the cloud platform or the server, so as to enable the user or an administrator to manage and handle the aging of the battery pack.

It is to be understood that the charger may not be used as an execution entity of the preceding scheme. The electronic controller in the battery pack or the electronic controller in the power tool may also seek to obtain the charging data during the charging of the battery pack, and determine the aging parameter of the battery pack by using the machine learning program including the vector model and the reference vector, so as to learn the aging condition of the battery pack and manage and handle the aging condition of the battery pack correspondingly.

As an example of the present application, an accurate estimation of the state of charge (SOC) of the battery pack is an important basis for controlling the charging and discharging of the battery in the power tool, which directly influences the service life of the battery pack and the performance of the power tool. In addition, the battery lifetime of the battery pack can be predicted according to the accurate estimation of the SOC. In the related art, the SOC of the battery pack is estimated mostly by using the ampere-hour integration method and a model-based closed-loop estimation method such as a Kalman filter method, a sliding mode observer, and a particle filter method. Such methods require very high accuracy of a current measurement value. A relatively large current measurement error will directly lead to an inaccurate estimation result and then cause serious safety problems.

Therefore, in this example, the machine learning program is configured to estimate the state of charge (SOC). The machine learning program includes a trained neural network model. The neural network model includes a feedforward neural network (FNN), a radial basis function (RBF) neural network, an extreme learning machine (ELM), a support vector machine (SVM), and a recurrent neural network (RNN). These methods and techniques use measurable signals such as a voltage, a current, and a temperature of a battery terminal. The recurrent neural network (RNN) is used as an example. The recurrent neural network is a neural network that uses past information in a closed-loop manner.

The lithium battery pack is used as an example, and the step in which the state of charge (SOC) is estimated through the recurrent neural network (RNN) includes: performing multiple cyclic charging and discharging tests on a lithium ion battery to measure feature parameters of the battery in a running process such as a current I, a voltage V, an internal resistance R, a temperature T, a power P, and a capacity Q of the battery at each moment in each cyclic process. The actual capacity of the battery at this moment is divided by the rated capacity such that the SOC of the lithium-ion battery at each moment is obtained. An external feature parameter of the battery is used as the input of the improved recurrent neural network, that is, the network structure of the Long Short-Term Memory (LSTM) model, and the SOC of the lithium-ion battery is used as the output of the network structure. The collected input data is preprocessed, where redundant data is deleted, and data normalization is performed for better next-step training of the model. A sliding window algorithm is configured to convert a multivariate time series problem into a supervised learning problem, the charging and discharging states of the battery are used as a label quantity of the input, thereby establishing an input data sequence that is more conducive to model learning. A fully connected LSTM network structure is established based on input and output characteristics, and the number of nodes of a hidden layer is determined. The preprocessed external feature data of the battery is then inputted into the initialized LSTM network structure, and the network is trained through forward propagation. Network parameters and bias values are adjusted through backpropagation based on true SOC values, thereby determining the final LSTM network structure suitable for accurately predicting a SOC value. A test sample is inputted into the trained neural network for inspection, and a prediction error is calculated.

The process of the method for estimating the SOC through the LSTM network structure and the input of the network structure are as follows:

(1) The current and past input values are as follows: V(t), V(t - 1), V(t - 2), I(t), I(t - 1), I(t - 2), and T, P, and R. V(t), I(t), and T(t) are all externally inputted by a sensor outside the network, and delay values at the last moment are stored in an external memory;

(2) Delay values corresponding to each output of the network are as follows: SOC (t), SOC (t - 1), and SOC (t - 2) of a SOC estimator, and an estimate of the SOC. Therefore, the output SOC(t + 1) of the network always precedes all inputs by one step. Each dynamic behavior of the network structure may be expressed by the following formula:

$$SOC(t+1) = F \begin{pmatrix} V(t), V(t-1), \\ V(t-2), I(t), \\ I(t-1), I(t-2), \\ T(t) \cdots, SOC(t), \\ SOC(t-1), SOC(t-2) \end{pmatrix}.$$

Dynamic operating condition test data of the battery is analyzed, and 5 influence factors of the SOC are determined. Then, the number of nodes of an LSTM input layer is 5, the number of nodes of the hidden layer is 50, and the number of nodes of an output layer is 1. A mean absolute error (MAE) is used as a loss function, and a tangent function (than) is used as an activation function. The number (epoch) of simulation training times is set to 200, and different learning rates $\alpha$ are set to validate the effectiveness of the model, where $\alpha = 0.05$ and $\alpha = 0.005$. To ensure that the number of training times is reached, a target error is set to 0 to prevent the training from being exited in advance due to the target error of the training being reached.

The electronic controller 17 detects a harmful battery condition of the battery pack by implementing the neural network, generates an output indicating other failures of the multiple single cells or an output indicating failures of multiple electronic elements, and controls, according to the generated output, an indicator apparatus 184 to display an abnormal state. The indicator apparatus 184 includes the display apparatus 114 disposed on the battery pack, or a human-computer interaction device disposed on the power tool or the traveling device, and a human-computer interaction device disposed on the charger. In some examples, the communication module is controlled, according to the generated output, to send the failures to the remote device, and the indicator apparatus is controlled by the remote device to display the abnormal state. The indicator apparatus receives a control signal through a device that generates a visual signal or an auditory signal and communicates state information to the user. Optionally, the display apparatus includes an indicator light, a buzzer, a light-emitting diode (LED), or a display screen. The generated output includes cell impedance data and cell temperature data. Optionally, the failures of the electronic elements include life warnings, aging warnings, or installation failure warnings of the battery pack, the cell, and a battery pack accessory. Harmful battery conditions include an overtemperature, an under-temperature, an overvoltage, an undervoltage, an overcurrent, unbalanced cell charging and discharging, overcharge, overdischarge, abnormal internal resistance, and circuit problems occurring inside and outside. The failures of the single cells include, for example, component failures (connection failures, insulation failures, and thermal management system failures such as thermal runaway) and sensor failures (involving the voltage, the current, and the temperature). Optionally, when the power management system is provided with energy recovery, whether the battery pack performs energy recovery and energy recovery efficiency also belong to items indicated. When the sensor data includes the cell impedance data, the electronic controller predicts lithium plating, folding, and a structural change of the battery by implementing the neural network.

In some examples, the electronic controller performs abnormality detection in conjunction with the mode of the battery pack, the type of the battery pack, and the type of a component connected to the battery pack. The electronic controller may perform the preceding classification and identification work through one of the preceding machine learning algorithms.

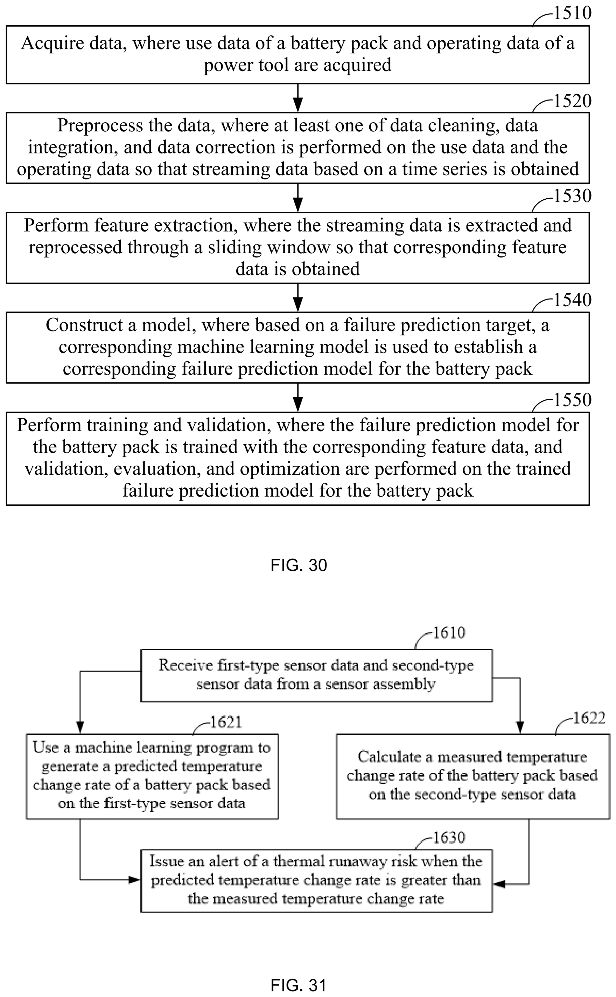

Correspondingly, a method 1500 for constructing a failure prediction model for the battery pack for powering the power tool is described. FIG. 30 is a flowchart of the method 1500 for constructing the failure prediction model for the battery pack.

In 1510, data is acquired, where the use data of the battery pack and operating data of the power tool are acquired.

In 1520, the data is preprocessed, where at least one of data cleaning, data integration, and data correction is performed on the use data and the operating data so that streaming data based on a time series is obtained.

In 1530, feature extraction is performed, where the streaming data is extracted and reprocessed through a sliding window so that corresponding feature data is obtained.

In 1540, the model is constructed, where based on a failure prediction target, a corresponding machine learning model is selected to establish a corresponding failure prediction model for the battery pack.

In 1550, training and validation are performed, where the failure prediction model for the battery pack is trained with the corresponding feature data, and validation, evaluation, and optimization are performed on the trained failure prediction model for the battery pack.

Similar to the construction of the life evaluation model for the battery pack described above, the preceding method for constructing the failure prediction model for the battery pack may also be performed by the remote device or the controlled apparatus, and the details are not repeated.

During the construction of the failure prediction model for the battery pack, first, it is necessary to acquire use data of a battery pack to be subjected to failure prediction and operating data of a power tool powered by the battery pack, and the related data may be read locally or may be requested from the battery pack, the power tool, or a controlled apparatus or a database related thereto. The use data of the battery pack may include data such as the model, a use duration, the number of accumulated charging and discharging times, a full-charge voltage difference of the battery pack, a voltage, a current, a state of charge (SOC), and a temperature of the battery pack in each charging and discharging process, and derivative data related to such data. The operating data of the power tool includes the model, a use duration, and a maintenance history of the power tool and an operating state, a running duration, a rotational speed of an electric motor, and output power of the power tool in the process where the battery pack powers the power tool. It is to be understood that based on actual scenario requirements, use data and operating data of other types not mentioned above may also be used for the construction of the failure prediction model for the battery pack.

The use data of the battery pack and the operating data of the power tool are mostly data that dynamically changes with time, and the same type of data has different values at different moments and is multi-source heterogeneous data collected or recorded by different controlled apparatuses. Therefore, data preprocessing and feature extraction need to be performed on the use data and the operating data after the use data and the operating data mentioned above are obtained. The data preprocessing includes at least one of data cleaning, data integration, and data correction. The data cleaning includes data deduplication, outlier elimination, missing value filling, and noise filtering. With the data deduplication, redundant data with a slight difference may be removed from the use data and the operating data. For example, after the battery pack is fully charged, the power tool is not powered by the battery pack, the voltage and SOC of the battery pack at multiple time points are unchanged, and only the data at the moment when the battery pack is fully charged needs to be retained. With the outlier elimination, erroneous data that deviates from a fitting curve or exceeds a numerical range may be eliminated from the use data and the operating data, for example, voltage data and current data whose values significantly exceed the numerical range and data whose month is not in the range of 1 to 12 are eliminated. To ensure the comparability and consistency of the data, the missing value filling is performed, where missing data may be filled through data fitting or taking means and adjacent values, for example, the missing voltage value at a current moment may be filled with the mean of the voltage values at the previous moment and the next moment. With the noise filtering, a white noise of the data and the like can be filtered out.

The data integration involves the integration of the multi-source heterogeneous data to achieve uniformity in data encoding, a data structure, a numerical range, and an expression. For example, different data sources may use JSON and XML documents, respectively or express the same field in Chinese and English separately, which need to be integrated into data with the same format and expression. The data correction deals with situations where analysis and conversion are required to obtain real data. For example, the temperature of the battery pack needs to be subtracted by 10 and then multiplied by 1000 such that real battery pack temperature data is obtained.

After the data preprocessing is completed, different types of raw use data of the battery pack and raw operating data of the power tool at different moments may be converted into the streaming data based on the time series with the same expression and the same format. The same moment in the streaming data corresponds to multiple different types of data, and the streaming data has a relatively long data duration and includes a wide variety of data. In some cases, the streaming data is big data that is updated in real time and whose data amount increases continuously. To further improve calculation efficiency and a calculation effect, the preceding streaming data may be extracted and reprocessed through the sliding window so that the corresponding feature data is obtained. For example, a sliding window has a window size of 5 and a sliding step length of 3, streaming data of 30 days may be converted into 11 means of data of 5 days. Specifically, the mean of data of 5 days may be the mean of data from day 1 to day 5 recorded on day 3, the mean of data from day 4 to day 8 recorded on day 6, and so on.

In some examples, before the preprocessing and the feature extraction are performed on the use data and the operating data, data mining and analysis may be performed on the use data and the operating data, so as to identify potential factors related to whether various categories of battery pack failures occur or the remaining time before such battery pack failures occur. The subsequent data preprocessing and feature extraction may be performed only on data related to the potential factors. In some cases, use data and/or operating data before and after a battery pack failure or use data and/or operating data in the cases where the battery pack does not fail and fails may be compared, and thus, the potential factors and their numerical ranges are identified based on jump data, discontinuous data, and the like. In other cases, the preceding data may be converted into a visual chart for the data mining and analysis to identify the potential factors related to the battery pack failures.

After the preprocessing and the feature extraction, the feature data is obtained. Then, the failure prediction model for the battery pack can be constructed and is trained by using the feature data. Firstly, based on the failure prediction target, the corresponding machine learning model needs to be selected. Although various machine learning algorithms described above can be configured to predict a failure of the battery pack, to solve different prediction problems and achieve different prediction targets, appropriate algorithms are selected to enable the improvement of model efficiency and accuracy. Secondly, different failure prediction models need to be trained with corresponding feature data. For example, temperature data is necessary for a failure prediction model related to thermal runaway, and current data is necessary for a failure prediction model related to overcurrent.

In some examples, the model is configured to detect a single category of battery pack failure, the failure prediction target is to predict whether the battery pack is subjected to such type of failure, and the failure prediction model for the battery pack may be established by using a binary classification model. In other examples, the model is configured to detect multiple different categories of battery pack failures, the failure prediction target is to predict whether the battery pack is subjected to a failure and the type of the failure, and the failure prediction model for the battery pack may be established by using a multivariate classification model. In the preceding two cases, optional classification models include a logistic regression model, a boosted decision tree, a decision forest, a neural network model, a support vector machine, and a *k*-nearest neighbor model.

In some other examples, the failure detection target is to predict when the battery pack fails, and the failure prediction model for the battery pack may be established by using a regression model. In some other examples, the failure prediction target is to predict a probability that the battery pack fails or score a current running condition of the battery pack, the battery pack is prone to a failure if the probability is high or the score is low, and the failure prediction model for the battery pack may also be established by using the regression model. In the preceding two cases, optional regression models include a Poisson regression model, a boosted decision tree regression model, a decision forest regression model, and a neural network regression model.

After the original machine learning model is selected and established based on the failure prediction target, the original model may be trained with the feature data after the preprocessing and the feature extraction. A training mode of the model should be adapted to a specific algorithm for implementing the model and the failure prediction target. In some cases, the preceding failure prediction models for the battery pack for achieving the various failure prediction targets may be jointly trained. For example, the failure prediction model for the battery pack for achieving the failure prediction target of predicting the category and the failure prediction model for the battery pack for achieving the failure prediction target of predicting a duration are jointly trained. The target of a joint loss function is that an outputted failure category is a real failure category and an outputted remaining time before a failure occurs is close to a real remaining time before the failure in that category occurs. The specific process in which the model is trained with the feature data is not repeated.

The method for constructing the failure prediction model for the battery pack further includes performing the validation and the optimization on the model after the training. In some examples, the feature data may be used to perform cross-validation on the failure prediction model for the battery pack so that model parameters are optimized. Specifically, the feature data may be divided into K parts, any one of the K parts is selected as a test set, and the remaining (K - 1) parts are used as a training set. The model is trained K times separately. Models that are obtained through the K times of training, respectively are evaluated with different K test sets. The model with the optimal performance is selected as the final failure prediction model for the battery pack to be used subsequently. In some other examples, the feature data may be divided into a sample set, a validation set, and a test set based on preset proportions. The feature data in the sample set is used to train the failure prediction model for the battery pack, and the model obtained through this training is validated on the validation set. In addition, values of hyperparameters such as the number of training rounds and a learning rate in the failure detection model for the battery pack are adjusted, and after the hyperparameters are adjusted, the sample set is used to perform a new round of training on the failure detection model for the battery pack. A new model is validated on the validation set again, the hyperparameters continue to be optimized, and the preceding process is repeated to optimize the model and reduce overfitting and other related problems.

In some other examples, the feature data may be used to train multiple failure prediction models for the battery pack, and a test set may be used to determine the accuracy, precision, and recall rate of each trained failure prediction model for the battery pack. The accuracy refers to the ratio of correctly predicted samples to all samples, the precision refers to the ratio of samples that are actually failures to those predicted as failures, and the recall rate refers to the ratio of correctly predicted samples to samples that are actually failures. Then, any one of the accuracy, the precision, or the recall rate may be used as the evaluation criterion, or a combination of the three may be used to establish the evaluation criterion, so as to determine the model with the optimal performance from the preceding multiple failure prediction models for the battery pack. The model with the optimal performance is selected as the final failure prediction model for the battery pack to be subsequently used.

As an example, in the battery pack 11 or an electronic combination constituted by the battery pack 11 and an electronic circuit or an electrical element that cooperates with the battery pack 11, the electronic controller 17 in the battery pack 11 includes a machine learning program configured to process the sensor data to obtain a temperature change rate. The electronic controller 17 receives first-type sensor data and second-type sensor data transmitted by the one or more sensors 18, uses the machine learning program to generate a predicted temperature change rate of the battery pack 11 with the first-type sensor data as an input, and calculates a measured temperature change rate of the battery pack 11 based on the second-type sensor data. Then, the predicted temperature change rate is compared with the measured temperature change rate, and an alert of a thermal runaway risk of the battery pack 11 is issued in the case where the measured temperature change rate is greater than the predicted temperature change rate. For specific components of the battery pack 11, reference may be made to the preceding related description.

FIG. 31 is a flowchart 1600 of a control scheme for the preceding electronic combination.

In 1610, the electronic controller receives the first-type sensor data and the second-type sensor data from a sensor assembly.

In 1621, the machine learning program is used to generate the predicted temperature change rate of the battery pack based on the first-type sensor data.

In 1622, the measured temperature change rate of the battery pack is calculated based on the second-type sensor data, where 1621 and 1622 are performed substantially simultaneously, and no mandatory requirement is imposed on the sequence in which 1621 and 1622 are performed.

In 1630, the predicted temperature change rate is compared with the measured temperature change rate, and the alert of the thermal runaway risk of the battery pack is issued in the case where the predicted temperature change rate is greater than the measured temperature change rate.

The first-type sensor data may or may not include the second-type sensor data, or the first-type sensor data is partially coincident with the second-type sensor data. In some examples, the first-type sensor data may include data such as a voltage, a current, a temperature, and internal resistance of the battery pack and data such as an operating state, a running duration, a rotational speed of an electric motor, and output power of the power tool powered by the battery pack. In some cases, the first-type sensor data may further include additional metadata such as a current capacity, the number of cycles, charging/discharging frequency, and a maintenance history of the battery pack. The second-type sensor data includes measured temperatures at one or more temperature measurement points in the battery pack. The positions of the one or temperature measurement points may be on the inner surface of the housing, a cell bracket, a cell connector, or the outer surface of a cell of the battery pack. It is to be understood that the first-type sensor data and the second-type sensor data may further include other types of sensor data not mentioned above, and specifically, the sensor data described above may be used as a reference.

The machine learning program used by the electronic controller may be implemented by using any one or a combination of more of the machine learning algorithms described above, and the electronic controller uses the currently received first-type sensor data as an input parameter of the machine learning program and determines the predicted temperature change rate of the battery pack based on an output result of the machine learning program. In some examples, the machine learning program configured to generate the predicted temperature change rate may be a random forest model. In some cases, the original machine learning program is trained in a supervised manner, the type of data in a sample set is the same as the type of the first-type sensor data, and the target of a loss function of the original machine learning program is that an outputted temperature change rate at a certain moment is close to the maximum value among the measured temperature change rates at the temperature measurement points at the moment. Therefore, the predicted temperature change rate subsequently obtained through the machine learning program based on the current first-type sensor data may be considered as the maximum temperature change rate in the battery pack at this moment during the temperature change history of the battery pack. Accordingly, if the measured temperature change rate calculated based on the second-type sensor data is greater than the predicted temperature change rate derived from the first-type sensor data, the battery pack is at risk of thermal runaway.

When calculating the measured temperature change rate based on the second-type sensor data, the electronic controller may calculate the temperature change rates for the measured temperatures at the temperature measurement points, respectively and use the mean of the multiple temperature change rates as the measured temperature change rate of the battery pack or use the maximum value among the multiple temperature change rates as the measured temperature change rate of the battery pack. In some examples, when calculating the measured temperature change rate of the battery pack, the electronic controller may also use another machine learning program, that is, a new machine learning program is used, where the type of data in a sample set is the same as that of the second-type sensor data, and the target of a loss function of the new machine learning program is different from that of the preceding machine learning program. For example, the target may be that an outputted temperature change rate at a certain moment is close to the measured temperature change rate at a central temperature measurement point of the battery pack at that moment.

When comparing the predicted temperature change rate with the measured temperature change rate to determine the thermal runaway risk of the battery pack, the electronic controller may calculate the difference between the predicted temperature change rate and the measured temperature change rate. In the case where the predicted temperature change rate is greater than the measured temperature change rate, if the difference between the two is greater than a first temperature difference threshold, the electronic controller may determine that the thermal runaway risk of the battery pack is at a high level; if the difference between the two is less than or equal to the first temperature difference threshold but greater than a second temperature difference threshold, the electronic controller may determine that the thermal runaway risk of the battery pack is at a medium level; and if the difference between the two is less than or equal to the second temperature difference threshold, the electronic controller may determine that the thermal runaway risk of the battery pack is at a low level. In the case where the predicted temperature change rate is less than or equal to the measured temperature change rate, the electronic controller may determine that the battery pack currently has no thermal runaway risk.

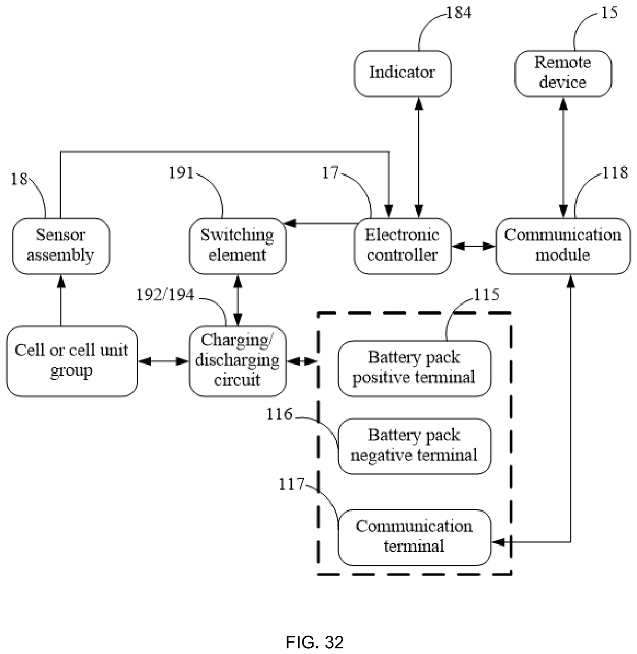

FIG. 32 is a block diagram of thermal runaway risk management. Referring to FIG. 8, FIG. 9, and FIG. 32, in the case where a thermal runaway risk exists, the electronic controller may invoke a related component to alert the user. In some examples, the battery pack 11 includes one or more risk indicator lights. For example, the battery pack 11 includes indicator lights indicating thermal runaway risks at high, medium, and low levels, respectively. The one or more risk indicator lights are electrically connected to the electronic controller. After comparing the temperature change rates and determining the level of the thermal runaway risk, and the electronic controller may turn on the risk indicator light the corresponding to the level. In some cases, the battery pack 11 may further include a visual component such as a display screen, and the electronic controller is electrically connected to the visual component to display information related to the thermal runaway risk in a visual manner. In other cases, the alert may be issued in the form of sound.

In some other examples, the battery pack 11 includes the communication module 118 communicatively connected to the remote device 15 and electrically connected to the electronic controller. After comparing the temperature change rates and determining the level of the thermal runaway risk, the electronic controller may transmit the information related to the thermal runaway risk to the remote device through the communication module. In some cases, the electronic controller may directly contact, through the communication module, the user equipment of the user to which the battery pack or the power tool belongs, such as a smartphone, a tablet computer, and a laptop computer so that an individual user quickly responds to the thermal runaway risk of the battery pack. In other cases, the electronic controller may contact devices such as a cloud platform, a central server, and a third-party server through the communication module to perform unified management on multiple thermal runaway risks of the battery pack and handle the thermal runaway risks efficiently.

As an example, the electronic combination includes the battery pack 11 and a switching element 191 that controls an input current of the battery pack or an output current of the battery pack. The electronic controller includes a first machine learning program and a second machine learning program. The sensor data is processed using the first machine learning program and a first output is generated based on the sensor data, the sensor data is processed using the second machine learning program and a second output is generated based on real-time parameters of the sensor data, and a third output is generated based on the first output and the second output and the switching element is controlled based on the generated third output.

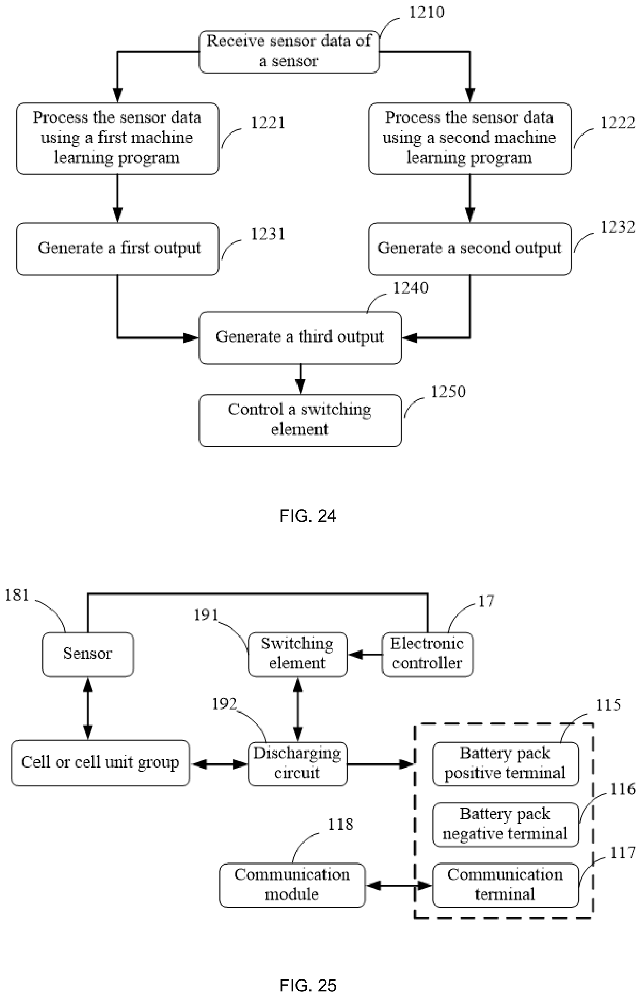

FIG. 24 is a flowchart 1200 of a control scheme for the preceding electronic combination.

In 1210, the electronic controller receives the sensor data of the sensor, where the sensor data includes, for example, current data, voltage data, temperature data, or internal resistance data and device data, maintenance data, user feedback data, power supply data, environmental data, operator data, and location data of the power tool.

In 1221, the first machine learning program processes the sensor data.

In 1222, the second machine learning program processes the sensor data, where 1221 and 1222 are performed substantially simultaneously.

In 1231, the first machine learning program generates the first output based on the sensor data.

In 1232, the second machine learning program generates the second output based on the sensor data, where 1231 and 1232 are performed substantially simultaneously. The second machine learning program receives real-time data.

In 1240, the third output is generated based on the first output and the second output.

In 1250, the switching element is controlled based on the generated third output, that is, a charging process and a discharging process can be controlled.

FIG. 25 is a block diagram of discharging management. The battery pack is electrically coupled to the switching element 191, and the switching element 191 is configured to control the input current of the battery pack or the output current of the battery pack. The switching element 191 may be disposed in the battery pack. Optionally, the switching element is disposed in the power tool or the traveling device to control the discharging of the battery pack. Optionally, the switching element is disposed in the charger to control the charging of the battery pack.

The battery pack includes a discharging circuit 192. The discharging circuit 192 includes the switching element 191, and the discharging circuit 192 is electrically connected to the single cell or the cell group 112a and terminals (the battery pack positive terminal 115, the battery pack negative terminal 116, and the communication terminal 117) of the battery pack interface separately. When the battery pack is connected to the power tool or the traveling device, the discharging circuit 192 is configured to transfer electrical energy to the power tool via the terminals of the battery pack. The battery pack is detachably connected to the preceding power tool or fixedly disposed in the preceding power tool.

The electronic controller 17 is configured to control the discharging circuit 192. The electronic controller 17 is configured to control the switching element 191 to be on or off. The electronic controller 17 includes the electronic processor and the memory, and the memory includes the machine learning program for execution by the electronic processor. The electronic controller 17 is configured to receive the sensor data of the battery pack and/or the cell module. The sensor data is processed using the machine learning program, the machine learning program is used to generate the output based on the sensor data, and a protection threshold of the battery pack is adjusted based on the generated output. The protection threshold includes at least one of an over-temperature protection threshold, an under-temperature protection threshold, an overvoltage protection threshold, an undervoltage protection threshold, and an overcurrent protection threshold. The sensor data includes current data, voltage data, or temperature data. The electronic controller 17 controls current transfer between the battery pack and the power tool based on the adjusted protection threshold. Optionally, the electronic controller 17 is disposed in the battery pack. The electronic controller controls power supply from the battery pack to the power tool based on the protection threshold. Optionally, the electronic controller 17 is disposed in the power tool or the traveling device, the protection threshold is sent to the power tool or the traveling device via the battery pack terminal, and the power tool or the traveling device controls power consumption of the power tool or the traveling device based on the protection threshold.

The electronic controller may implement a neural network (for example, a feedforward neural network or a recurrent neural network) to detect a battery condition that is harmful to the battery pack. The electronic controller generates and/or uses various thresholds to detect the battery condition that is harmful to the battery pack. For example, when the temperature of the battery pack or the cell continuously increases beyond the threshold, the electronic controller is more likely to detect a problem with the state of temperature (SOT) of the battery pack and a relatively poor discharging state of the battery pack. During the discharging of the battery pack, the electronic controller limits (turns off) the discharging circuit when detecting that the battery pack is in the relatively poor discharging state.

The third party may provide feedback for the electronic controller regarding the accuracy with which the electronic controller detects the feedback. For example, the electronic controller receives a first type of negative feedback indicating that the electronic controller has not detected that the battery pack has overheated. The electronic controller also receives a second type of negative feedback indicating that the machine learning controller is too sensitive in detecting that the battery pack overheats. For example, a detection sensor may be disposed in the battery pack, and ambient temperature detection may be added.

The electronic controller may adjust, in response to the received feedback, the thresholds generated or used by the electronic controller or may adjust the machine learning control itself. For example, increases in the thresholds may result in a delay in the detection of the battery condition that is harmful to the battery pack in the power tool. In other examples, the feedback does not directly change the thresholds generated or used by the electronic controller, but rather allows the machine learning control to be retrained based on the received feedback. Since the occurrence of the battery condition that is harmful to the battery pack is not readily perceptible to the user or requires the assistance of instruments, the feedback and threshold updates of the battery management system are more frequent during manufacturing or under laboratory conditions.

As described above, the learning rate may influence how new information with the feedback is used to retrain the machine learning control and how the feedback is used to more directly adjust the thresholds generated or used by the electronic controller.

The sensor data is processed using the first machine learning program, the first output is generated based on the sensor data, and the protection threshold is adjusted based on the first output. The sensor data is processed using the second machine learning program and the second output is generated based on the real-time parameters of the sensor data. It is determined, according to the comparison result between the second output and the protection threshold, whether to allow the cell module to discharge electricity. The discharging mode of the battery pack is adjusted according to the difference between the second output and the protection threshold or a calculated value of a first-order equation or a multi-order equation.

The machine learning program may be any one or more of the preceding machine learning programs according to the classification of one of the preceding machine learning algorithms.

The discharging mode of the battery pack 11 has a relatively strong correspondence with a use scenario of the user, which has a relatively large influence on the use state of the battery pack. Manual adjustment of the discharging mode requires sufficient experience of the user. The electronic controller is configured to collect the operating data from the power tool through the battery pack output terminals, the machine learning program is used to generate the output based on the operating data, and the discharging mode is selected and the discharging circuit is controlled based on the generated output. The discharging mode includes a performance mode, a power consumption mode, and a balancing mode. Optionally, the discharging mode includes a series mode and a parallel mode. The machine learning program identifies the type of the power tool according to the operating data. The machine learning program identifies a use habit of the user of the power tool according to the operating data.

Discharging mode settings may specify the cell discharging parameters and protection thresholds for the battery pack or the cell module during the discharging in a specific mode. For example, each discharging mode may define parameter information such as a discharging voltage, a discharging current, a maximum discharging current, and a discharging cutoff voltage, and a combination thereof. The combination of two or more discharging parameters and protection thresholds defines the use profile or mode of the battery pack.

The electronic controller differentiates between several discharging modes. Training examples of the electronic controller include input vectors indicating the discharging voltage, the discharging current, a cell temperature, the maximum discharging current, and the discharging cutoff voltage and an output label indicating the type of the discharging mode. The electronic controller implements the artificial neural network to perform this classification. The artificial neural network includes, for example, five input nodes, and, for example, one hundred output nodes. Each output node, for example, corresponds to a different type of discharging mode identifiable by the electronic controller, and an additional output of the battery pack is indicated when the discharging mode does not correspond to any identifiable type of discharging mode. The artificial neural network may include more or fewer output nodes based on the number of fasteners that can be differentiated. In some examples, the neural network includes an additional layer including a single node. This additional layer may determine which output node has the highest value (which may correspond to the probability that the type of discharging mode is identified as the type of discharging mode corresponding to that output node), and outputs a value (for example, one value, two values, three values, or four values) associated with the output node. The value of the output node may correspond to the type of discharging mode identified by the electronic controller. When the electronic controller selects the discharging mode, the electronic processor controls the battery pack or the power tool according to a discharging parameter and a protection threshold specified by the selected mode, and the discharging parameter and the protection threshold may be stored in the memory.

The electronic controller also receives information regarding an operation mode (for example, a speed associated with the mode, a mode torque, and a mode ramp) of the power tool. The electronic controller also receives sensor information indicating an operation parameter (for example, a motor current, a motor voltage, trigger activation or feedback from a trigger, motion of the power tool, a motor speed, and an output shaft speed) of the power tool. The electronic controller differentiates between several types of power tools. In some examples, the electronic controller differentiates between several types of use habits of the user of the power tool. The electronic controller implements the artificial neural network to perform this classification.

In this example, the charger further includes a charging circuit 194. The charging circuit 194 is configured to control the charger to output a voltage matching the battery pack to charge the battery pack so that an output voltage of the battery pack interface is the same as the nominal voltage of the battery pack. In some examples, the charging circuit 194 is disposed in a charger housing, and the charging circuit is disposed on a circuit board assembly. In other examples, the charging circuit 194 may be disposed in the battery pack.

When the battery pack is connected to the charger, the charging circuit 194 is configured to be electrically connected to the battery pack interface (the battery pack positive terminal 115, the battery pack negative terminal 116, and the communication terminal 117) and charge the battery pack. The charger further includes a clock module configured to detect the charging time. Data about the charging time includes a charging timestamp or a charging duration. The clock module may enable a safety function, where the battery pack is disabled (for example, locked and non-rechargeable) when the time of the clock module exceeds locking time determined by the user.

The electronic controller 17 is configured to control the charging circuit. The charging circuit 194 includes the switching element 191, and the electronic controller is configured to control the switching element to be on or off. The electronic controller includes the electronic processor and the memory, and the memory includes the machine learning program for execution by the electronic processor. The electronic controller is configured to acquire, through the clock module 147, the data about the charging time for charging the battery pack by the charging circuit, process the data about the charging time using the machine learning program, use the machine learning program to generate an output based on the data about the charging time, where the output indicates a parameter value associated with charging operation of the charger, and control the charging circuit according to the generated output. The parameter value includes a charging rate or a pulse charging interval. In some examples, the parameter value further includes a full-charge level, and when the state of charge of the battery pack is greater than or equal to the full-charge level, the charging circuit stops charging the battery pack.

The machine learning program is trained based on example data and a related output to be generated on the external system apparatus and is received by the charger from the external system apparatus. Optionally, the charger acquires the operating data of the battery pack via the battery pack interface, and the machine learning program adjusts the output based on the operating data.

Optionally, the electronic controller is disposed in the battery pack. The electronic controller receives the data about the charging time through the port and generates an output parameter value based on the data about the charging time to control the quantity of electricity charged into the cells of the battery pack. Optionally, the electronic controller is disposed in the charger. The electronic controller controls, based on the data about the charging time and the charger controls, based on the output parameter value, power supply from the charger to the battery pack.

As an example, the electronic controller includes the first machine learning program and the second machine learning program. The sensor data is processed using the first machine learning program, the first output is generated based on the sensor data, and the protection threshold is adjusted based on the first output. The sensor data is processed using the second machine learning program and the second output is generated based on the real-time parameters of the sensor data. It is determined, according to the comparison result between the second output and the protection threshold, whether to allow the cell module to be charged. The charging mode of the battery pack is adjusted according to the difference between the second output and the protection threshold or the calculated value of the first-order equation or the multi-order equation.

The machine learning program may be any one or more of the preceding machine learning programs according to the classification of one of the preceding machine learning algorithms.

The charging mode of the battery pack has relatively strong correspondences with the use scenario and use habit of the user, which has a relatively large influence on the charging state of the battery pack. The electronic controller is configured to collect the charging data from the power tool through the battery pack output terminals, the machine learning program is used to generate the output based on the operating data, and the charging mode is selected and the charging circuit is controlled based on the generated output. The charging mode includes a night mode and a fast charging mode. The machine learning program correspondingly identifies different scenarios according to the charging data, such as different charging depths, different charging frequencies, and different charging time points.

Charging mode settings may specify parameter values and protection thresholds associated with cell charging operation for the battery pack or the cell module during the charging in a specific mode. For example, each operation mode may define parameter information such as the charging rate, the charging timestamp, and the full-charge level and a combination thereof. The combination of two or more charging parameters and protection thresholds defines the use profile or mode of the battery pack.

The electronic controller differentiates between several charging modes. Training examples of the electronic controller include input vectors indicating the charging current, the charging time, nighttime or daytime charging, timely power-off, and remaining power during the charging and an output label indicating the type of the charging mode. The electronic controller implements the artificial neural network to perform this classification. The artificial neural network includes, for example, five input nodes, and, for example, one hundred output nodes. Each output node, for example, corresponds to a different type of charging mode identifiable by the electronic controller, and an additional output of the battery pack is indicated when the charging mode does not correspond to any identifiable type of charging mode. The artificial neural network may include more or fewer output nodes based on the number of fasteners that can be differentiated. In some examples, the neural network includes an additional layer including a single node. This additional layer may determine which output node has the highest value (which may correspond to the probability that the type of charging mode is identified as the type of charging mode corresponding to that output node), and outputs a value (for example, one value, two values, three values, or four values) associated with the output node. The value of the output node may correspond to the type of charging mode identified by the electronic controller. When the electronic controller selects the charging mode, the electronic processor controls the battery pack or the power tool according to a charging parameter and a protection threshold specified by the selected mode, and the charging parameter and the protection threshold may be stored in the memory.

The electronic controller also receives the information regarding the operation mode of the power tool. The electronic controller also receives the sensor information indicating the operation parameter of the power tool. The electronic controller differentiates between several types of power tools. In some examples, the electronic controller differentiates between several types of use habits of the user of the power tool. The electronic controller implements the artificial neural network to perform this classification.

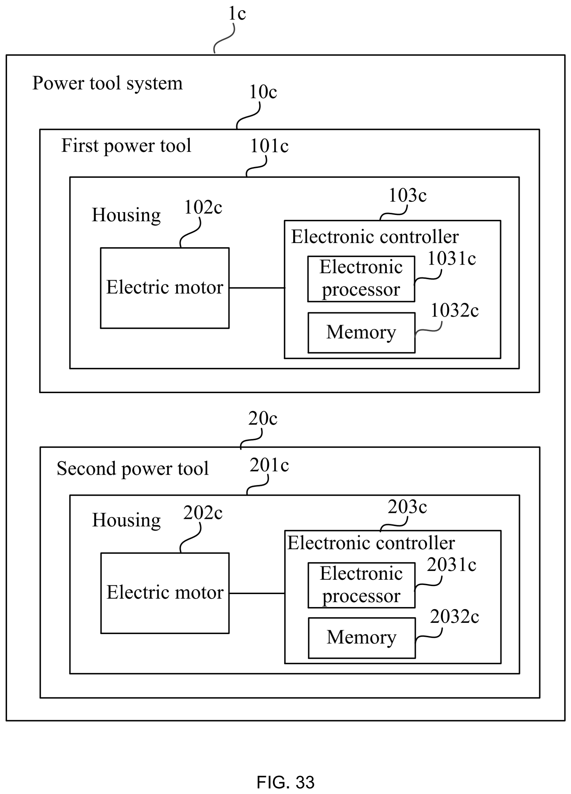

As shown in FIGS. 33 to 38, the present application further provides a power tool system and a control method for the power tool. In the related art, when a machine learning model is trained, a large amount of training data is required, but in an actual operation process, the collection of the training data is difficult. In addition, in the case where the data amount of the training data is excessively large, if the machine learning model is trained at the cloud server, the training data needs to be transmitted to the cloud server, resulting in a great data transmission burden, and if the machine learning model is trained at a local terminal, the model with an excessively large data amount cannot be trained due to limited computing power of the local terminal. In addition, when the machine learning model is trained, if the fitting degree of the training data is excessive, overfitting occurs, and if the fitting degree of the training data is relatively small, underfitting occurs.

As an example, FIG. 33 is a block diagram of the power tool system according to an example of the present application. As shown in FIG. 33, the power tool system 1c in this example includes a first power tool 10c and a second power tool 20c. The first power tool 10c includes: a housing 101c; an electric motor 102c disposed in the housing 101c; and an electronic controller 103c disposed in the housing 101c. The electronic controller 103c includes an electronic processor 1031c and a memory 1032c. The memory 1032c includes a first machine learning control program for execution by the electronic processor 1031c. The first machine learning control program is a trained first machine learning model. The electronic controller 103c is configured to control the electric motor 102c through the first machine learning control program.

The second power tool 20c includes: a housing 201c; an electric motor 202c disposed in the housing 201c; and an electronic controller 203c disposed in the housing 201c. The electronic controller 203c includes an electronic processor 2031c and a memory 2032c. The memory 2032c includes a second machine learning control program for execution by the electronic processor 2031c. The second machine learning control program is a trained second machine learning model. The electronic controller 203c is configured to control the electric motor 202c through the second machine learning control program.

The first machine learning model is trained and generated based on a first data set related to operation of the first power tool 10c, and the second machine learning model is trained and generated based on the first machine learning model and a second data set related to operation of the second power tool 20c.

In an example, the first power tool 10c and the second power tool 20c have similar features, and the second machine learning model of the second power tool 20c may be generated by using the first machine learning model already established in the first power tool 10c. In the actual operation process, before the second power tool 20c leaves the factory, a transfer learning technique may be used, that is, the second machine learning model corresponding to the second power tool 20c is established by using the first machine learning model already established in the first power tool 10c. Alternatively, in an actual use process after the second power tool 20c leaves the factory, a transfer learning technique may be used, that is, the second machine learning model corresponding to the second power tool 20c is established by using the first machine learning model already established in the first power tool 10c.

In an example, the first machine learning model of the first power tool 10c may be sent to a training device such as a computer or a server, and the second data set of the second power tool 20c is also sent to the training device so that the training device retrains the first machine learning model according to the second data set to obtain the second machine learning model adapted to the second power tool 20c. Then, the second machine learning model is stored in the memory 2032c of the second power tool 20c.

In an example, the first machine learning model and the second machine learning model are both neural network models. In the example, the first machine learning model and the second machine learning model may both be the neural network models. Specifically, the first machine learning model and the second machine learning model may both be convolutional neural network models. In the example, each of the first machine learning model and the second machine learning model may be one or a combination of more of a linear model, a decision tree model, a support vector machine model, a Bayesian classification model, an ensemble learning model, a clustering model, a dimensionality reduction and metric learning model, a reinforcement learning model, and a deep learning model.

In an example, a sample size of the first data set is greater than or equal to N times a sample size of the second data set, where N is greater than or equal to 2. It is to be noted that the transfer learning technique generates a new machine learning model by using an already generated machine learning model and a small amount of training data. In the example, to reduce the collection of training data in the second data set corresponding to the second power tool, the transfer learning technique may be used, and the second machine learning model adapted to the second power tool is generated in conjunction with the first machine learning model. Correspondingly, the sample size of the second data set is less than the sample size of the first data set, for example, the sample size of the first data set is at least greater than or equal to 2 times the sample size of the second data set. In an example, the sample size of the first data set is at least greater than or equal to 3 times the sample size of the second data set. The sample size of the first data set is at least greater than or equal to 5 times the sample size of the second data set. The sample size of the first data set is at least greater than or equal to 10 times the sample size of the second data set.

With transfer learning, the following pain points can be addressed.

A small amount of (labeled) data is available for a new site, and the result of direct training is unreliable. For a new site, it is typically necessary to collect data for several months to run the built method at the site. For certain sites, there was historically no need to collect data, or because the service has not been deployed before, only a small amount of historical data is available, which may lead to unsatisfactory validation results. In this case, the transfer learning needs to be used to solve the problem of less data. For example, if the first machine learning model serves as a new site, excessive training data may not need to be collected for the second machine learning model, the second data set including a small amount of data related to the operation of the second power tool is acquired based on the first machine learning model, and the first machine learning model is trained based on the second data set so that the second machine learning model matching the second power tool can be obtained, thereby solving the problem of a small amount of data in the second data set corresponding to the second power tool.

New and old sites have different data distributions, so a previously trained model cannot be directly used. For a certain service, a relatively reliable model can be trained with data constructed at a historical site or a laboratory. However, when the model is used at the new site, such a problem may be encountered, that is, the different data distributions of the new and old sites result in a prediction result with a certain deviation. If the previously trained model is desired, some skills in the transfer learning need to be used to solve the preceding problem. For example, if the sample size of the first data set corresponding to the first power tool is greater than or equal to N times the sample size of the second data set corresponding to the second power tool, the machine learning model of the first power tool may be directly trained using the first data set so that a relatively reliable first machine learning model is obtained. However, since the sample size of the second data set is relatively small, the prediction result may have a certain deviation. In this case, the transfer learning may be used, and the first machine learning model is trained based on the second data set so that the second machine learning model adapted to the second power tool is obtained.

In addition, at a new site, a change in a feature space or in a classification label may also occur. In some cases, the same service at different sites has different features, and the sites have common features and unique features. In some cases, a classification problem is also encountered, and a classification category may change. These changes greatly reduce the results. In this case, the transfer learning is needed as an aid to improve performance. For example, if action objects of the first power tool and the second power tool are the same but have different electric motors, the first power tool and the second power tool have the common feature of the same action object and have the unique feature of the different electric motors. In this case, the transfer learning technique may be used, and the first machine learning model corresponding to the first power tool is trained using the second data set corresponding to the second power tool so that the second machine learning model adapted to the second power tool is obtained.

In an example, the action objects of the first power tool and the second power tool are the same. In the example, the first power tool and the second power tool need to have similar features, for example, the action objects of the first power tool and the second power tool are the same, for example, both may be grass. In an example, the first power tool is a mower, and the second power tool is a string trimmer. In an example, the first power tool is a push mower, and the second power tool is a riding mower or a robotic mower. The action objects of the first power tool and the second power tool may be building materials. In an example, the first power tool is a handheld sander, and the second power tool is a sanding robot. In an example, the first power tool is a handheld building construction power tool, and the second power tool is a building construction robot. In an example, the action objects of the first power tool and the second power tool are different. In an example, the acting objects of the first power tool and the second power tool may also be different, but the first power tool and the second power tool need to have other similar features, for example, similar operating conditions or operating principles. In an example, the first power tool is an electric drill, and the second power tool is an electric screwdriver.

In an example, some structures of the first power tool and the second power tool are the same or similar. For example, the first power tool is a mower, and the second power tool is a snow thrower. Both have a traveling function, which is provided by traveling wheels and a traveling electric motor.

In an example, the first power tool and the second power tool have the same electric motors. In the example, the first power tool and the second power tool need to have similar features, for example, the same electric motors.

In an example, the first power tool and the second power tool have the different electric motors. In an example, the first power tool and the second power tool may have the different electric motors, but the first power tool and the second power tool need to have other similar features, for example, the same action objects.

Methods for implementing the transfer learning include: instance-based transfer learning, feature-based transfer learning, and model-based transfer learning.

Instance-based transfer is to directly assign different weights to different samples. For example, similar samples may be assigned relatively high weights, thus completing the transfer.

Feature-based transfer is to transform a feature. Assuming that features of a source domain and a target domain are not in the same space, in other words, the features of the source domain and the target domain are not similar in an original space and may be transformed into the same space for transfer.

Model-based transfer is to reuse parameters in the model. For example, the structure of the neural network may be directly transferred, and fine-tuning is a good representation of model parameter transfer.

It is to be noted that a core problem of the transfer learning is to align distributions, and a direct difference between a data distribution in a target domain and a data distribution in a source domain is reduced so that the model can be seamlessly transferred. Common methods for distribution alignment include data distribution adaptation, feature selection, and subspace learning.

In an example, the transfer learning is implemented by using the data distribution adaptation. The basic idea of this method is that since the source domain and the target domain have different data probability distributions, the most direct manner is to reduce the distance between different data distributions through some transformations. According to the characteristics of the data distributions, such methods can be further divided into marginal distribution adaptation, conditional distribution adaptation, and joint distribution adaptation. For example, the source domain is the use data of the traveling motor of the mower, and the target domain is the use data of the traveling motor of the snow thrower. The same functional modules of the two different garden tools exhibit different data probability distributions since the two garden tools are applicable to different operating conditions.

In an example, the transfer learning is implemented by using the feature selection. The basic assumption of the feature selection is that both the source domain and the target domain include some common features, and the source domain and the target domain have consistent data distributions on these common features. Therefore, the target of such methods is to select these shared features through a machine learning method and then build a model based on these features. For example, the source domain is the use data of the mowing motor of the push mower, and the target domain is the use data of the mowing motor of the riding mower or the use data of the mowing motor of the robotic mower. Since the mowing motors of these three types of mowers act on the same object, at least part of common features has consistent data distributions in their use data, such as load data. Since the push mower is a traditional mowing tool with a large amount of accumulated user data, the push mower may serve as a transfer learning source for machine learning programs of the other two relatively new mowers.

In an example, the transfer learning is implemented by using the subspace learning. The assumption of the subspace learning is generally that data in the source domain and data in the target domain have similar distributions in a transformed subspace. According to the form of feature transformation, the subspace learning is divided into two types: the statistical feature alignment method based on statistical feature transformation and the manifold learning method based on manifold transformation. For example, the source domain is the use data of the electric drill, and the target domain is the use data of the electric screwdriver.

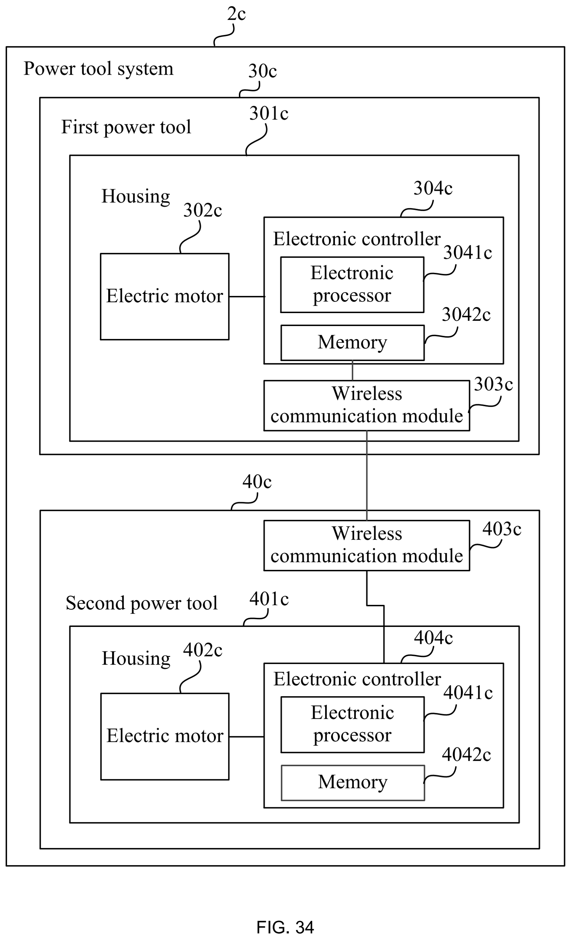

In an example, FIG. 34 is a block diagram of another power tool system according to an example of the present application. As shown in FIG. 34, the power tool system 2c in this example includes a first power tool 30c and a second power tool 40c. The first power tool 30c includes: a housing 301c; an electric motor 302c disposed in the housing 301c; a wireless communication module 303c configured to wirelessly transmit data with another device; and an electronic controller 304c disposed in the housing 301c. The electronic controller 304c includes an electronic processor 3041c and a memory 3042c, the memory 3042c includes a first machine learning control program for execution by the electronic processor 3041c, and the electronic controller 304c is configured to control the electric motor 302c through the first machine learning control program.

The second power tool 40c includes: a housing 401c; an electric motor 402c disposed in the housing 401c; a wireless communication module 403c configured to wirelessly transmit data with another device; and an electronic controller 404c disposed in the housing 401c. The electronic controller 404c includes an electronic processor 4041c and a memory 4042c, and the electronic controller 404c is at least configured to control the electric motor 402c.

The wireless communication module 303c of the first power tool 30c sends the first machine learning control program to the wireless communication module 403c of the second power tool 40c, and the electronic controller 404c of the second power tool 40c is configured to train and generate a second machine learning control program based on a first machine learning model and data related to operation of the second power tool 40c and store the second machine learning control program in the memory 4042c.

In the example, the first machine learning control program of the first power tool 30c may be sent to the second power tool 40c so that the second power tool 40c retrains the first machine learning control program based on the second data set so that the second machine learning control program adapted to the second power tool 40c is obtained. In an example, the first machine learning control program of the first power tool 30c may be sent to the cloud server through the wireless communication module 303c, and the second data set of the second power tool 40c is also sent to the cloud server through the wireless communication module 403c so that the cloud server retrains the first machine learning control program according to the second data set to obtain the second machine learning control program adapted to the second power tool 40c. Then, the second machine learning control program is sent to the second power tool 40c through the cloud server and stored in the memory 4042c of the second power tool 40c.

In an example, each of the first machine learning model and the second machine learning model is one or a combination of more of the linear model, the decision tree model, the neural network model, the support vector machine model, the Bayesian classification model, the ensemble learning model, the clustering model, the dimensionality reduction and metric learning model, the reinforcement learning model, and the deep learning model.

In an example, the electronic controller of the second power tool is further configured to control the electric motor through the second machine learning control program. In the example, after the second power tool trains and generates the second machine learning control program based on the first machine learning control program and the data related to the operation of the second power tool, the electronic controller of the second power tool may control the electric motor in the second power tool through the second machine learning control program.

In an example, the action objects of the first power tool and the second power tool are the same.

In an example, the action objects of the first power tool and the second power tool are different.

In some examples, the first power tool is the electric drill, and the second power tool is the electric screwdriver.

In an example, the first power tool is the mower, and the second power tool is the string trimmer.

In an example, the first power tool is the mower, and the second power tool is the snow thrower.

In an example, the first power tool is the handheld sander, and the second power tool is the sanding robot.

In an example, the first power tool is the handheld building construction power tool, and the second power tool is the building construction robot.

In an example, the first power tool is the push mower, and the second power tool is the riding mower or the robotic mower.

In an example, the first power tool and the second power tool have the same electric motors.

In an example, the first power tool and the second power tool have different electric motors.

It is to be noted that for the explanation of parameters such as the first machine learning model, the second machine learning model, the first data set, and the second data set in the power tool system shown in FIG. 34, reference may be made to the description of the corresponding parameters in the power tool system shown in FIG. 33, and the details are not repeated here. The relationships between the housing and the electric motor and the electronic controller in FIGS. 33 and 34 are only for illustrating two different power tools, and the specific style and structure of the first or second power tools are not limited. In particular, the electric motor and the electronic controller may not be located in the same housing.

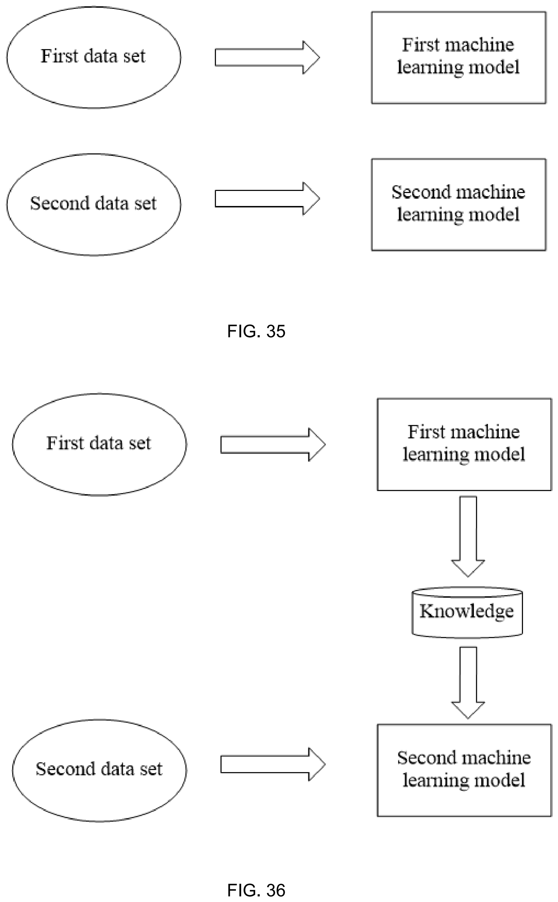

FIG. 35 is a block diagram of the implementation of a conventional machine learning model according to an example of the present application. As shown in FIG. 35, the first machine learning model is trained and obtained using training data in the first data set, and a second machine learning model is trained and obtained using training data in the second data set.

FIG. 36 is a block diagram of the implementation of a machine learning model based on the transfer learning technique according to an example of the present application. As shown in FIG. 36, the first machine learning model is trained and obtained using the training data in the first data set, and the second machine learning model is then trained and obtained using knowledge (such as features and weights) in the first machine learning model and the training data in the second data set.

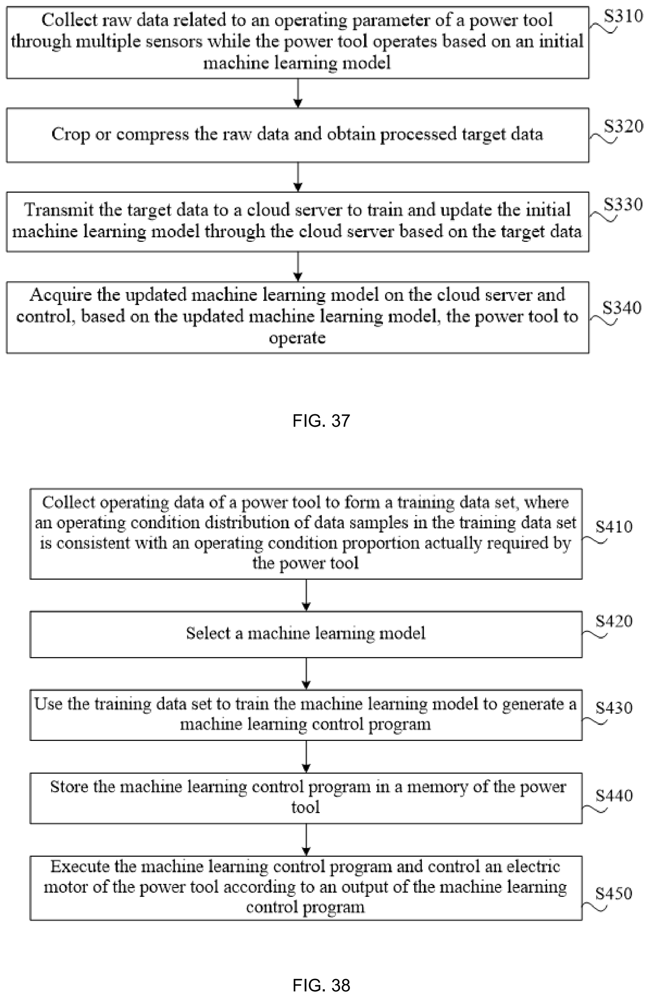

In an example, FIG. 37 is a flowchart of the control method for the power tool according to an example of the present application. This example is applicable to the case where the model is trained and updated. The method may be performed by a control apparatus for the power tool, the control apparatus for the power tool may be implemented in the form of hardware and/or software, and the control apparatus for the power tool may be configured in the power tool. As shown in FIG. 37, the method includes the steps below.

In S310, raw data related to the operating parameter of the power tool is collected through multiple sensors while the power tool operates based on an initial machine learning model.

In an example, the sensor may include, but is not limited to, at least one of a temperature sensor, a humidity sensor, a voltage detection element, a current detection element, a Hall sensor, a torque sensor, and an image acquisition apparatus. The temperature sensor is configured to detect the temperature of the electric motor in the power tool. The Hall sensor may be configured to calculate the rotational speed of the electric motor in the power tool. The current detection element is configured to detect a phase current or a bus current of the electric motor in the power tool or an excitation current id and a torque current iq of a space vector pulse-width modulation (SVPWM). The image acquisition apparatus is configured to collect an image of an environment in which the power tool is located. In an example, a multi-dimensional Gibbs sampling method may be used for sampling, and sampling frequency is at least greater than twice signal frequency.

The raw data refers to unprocessed data related to the operating parameter of the power tool collected by the multiple sensors. In the example, the raw data may also be unprocessed sampled data. Exemplarily, the raw data may include a current, a voltage, a rotational speed, a load torque, a motor temperature, a known speed loop parameter, a known Proportional-Integral (PI) loop parameter, a known duty cycle parameter, or known Id and Iq parameters of the SVPWM, and a to-be-outputted speed loop parameter and a to-be-outputted duty cycle parameter, or to-be-outputted Id and Iq parameters of the SVPWM.

In S320, the raw data is cropped or compressed and processed target data is obtained.

In an example, the raw data may be cropped or compressed so that the processed target data is obtained, and the amount of transmitted data is reduced.

In an example, S320 includes S3201 to S3204.

In S3201, similar sampled data, sampled data with a missing value, and abnormal sampled data in the raw data are identified and extracted.

The actual distance difference of the similar sampled data is less than a first distance difference threshold. In an example, the sampled data includes vector data. The actual distance value between two pieces of vector data may be calculated, it is determined whether the actual distance value is less than a first distance threshold, and if the actual distance value is less than the first distance threshold, the two pieces of vector data are the similar sampled data. The sampled data with the missing value refers to incomplete sampled data. The abnormal sampled data refers to sampled data with an abnormality.

In S3202, the similar sampled data, the sampled data with the missing value, and the abnormal sampled data are cropped so that corresponding candidate data is obtained.

In an example, the similar sampled data may be understood as duplicate data, and one piece of the sampled data may be deleted. The sampled data with the missing value may not be processed and stored or may be directly deleted. The abnormal sampled data is core parameters of the power tool, such as a current and a rotational speed. The abnormal sampled data may be deleted through preliminary screening. Specifically, useless samples may be eliminated through methods such as the clustering method or the k-nearest neighbor method, and correlated features are removed, thereby reducing the amount of transmitted data.

The similar sampled data, the sampled data with the missing value, and the abnormal sampled data are cropped, and then the corresponding candidate data can be obtained.

In S3203, associated sampled data and sampled data whose current byte exceeds a byte threshold in the candidate data are identified and extracted.

The associated sampled data refers to multiple sampled values having correspondences, for example, a linear relationship exists between the current and the load torque. The sampled data whose current byte exceeds the byte threshold may be understood as data with a relatively great byte length.

In S3204, the associated sampled data and the sampled data whose current byte exceeds the byte threshold are compressed so that the corresponding target data is obtained.

In the example, the associated data may be compressed. For example, the linear relationship exists between the current and the load torque, the current or the load torque may be cropped and simplified to a single current or a single load torque, and the effect is equivalent to dimensionality reduction. Mapping, table lookup, and compression may be performed on the sampled data whose current byte exceeds the byte threshold. For example, mapping is established for the current, 0x1 represents 10 A, 0x02 represents 20 A, and the mapping is performed to reduce the number of transmitted bytes.

In S330, the target data is transmitted to the cloud server so that the initial machine learning model is trained and updated through the cloud server based on the target data.

In the example, the power tool transmits the target data to the cloud server so that the cloud server trains and updates the initial machine learning model based on the target data.

In S340, the updated machine learning model on the cloud server is acquired and the power tool is controlled, based on the updated machine learning model, to operate.

In an example, after the cloud server trains and obtains the updated machine learning model, the cloud server may actively send the updated machine learning model to the power tool, or the power tool may actively pull the updated machine learning model from the cloud server and control, based on the updated machine learning model, the power tool to operate.

In an example, the raw data related to the operating parameter of the power tool is collected through the multiple sensors, which includes the step described below.

A sampling stage corresponding to the sensors is determined according to a current running state of the power tool.

The raw data related to the operating parameter of the power tool is collected through the multiple sensors in the sampling stage. In an example, the sampling stage corresponding to a sensor apparatus may be specified according to the current running state of the power tool. For example, only the data of the power tool in the running state of the machine may be sampled, so as to avoid the influence of the data in the startup state, the braking state, or the shutdown state on the training data corresponding to the running state. Of course, the data in any one stage in the startup state, the braking state, or the shutdown state may be separately used as a sampling stage. Then, the operating parameter of the power tool in the sampling stage is collected through the multiple sensors so that the corresponding raw data is obtained.

In an example, the control method for the power tool further includes the steps described below.

A current error rate of the machine learning model is monitored.

A model warning alert is issued when the current error rate reaches a first error rate threshold, and retraining of the machine learning model is synchronously triggered.

Switching to a new machine learning model is performed when the current error rate reaches a second error rate threshold, where the second error rate threshold is greater than the first error rate threshold.

The current error rate refers to a deviation rate between an actual parameter outputted by the machine learning model and a preconfigured reference parameter. It is to be understood that a higher current error rate indicates a worse prediction effect of the machine learning model. In the example, the current error rate of the machine learning model currently used by the power tool is monitored periodically or in real time. When it is monitored that the current error rate reaches the first error rate threshold, the model warning alert may be sent to alert the user to a poor prediction effect of the machine learning model in the power tool. In this case, the retraining of the machine learning model may be triggered so that the machine learning model is retrained. When it is monitored that the current error rate reaches the second error rate threshold, the poor prediction effect of the machine learning model is indicated. Even if the machine learning model is retrained, a better prediction effect still cannot be achieved, and in this case, the machine learning model may be directly replaced with a new machine learning model.

In another example, the power tool may trigger the retraining of the machine learning model by collecting user feedback or tool feedback. For example, the user may feed back a control effect of the current machine learning model through the display screen or the remote device. Alternatively, the power tool comprehensively determines the control effect of the current machine learning model according to at least three pieces of information among an actual rotational speed, power, gear, current, running time, efficiency, load, and mode accumulated through multiple operations on the power tool.

When it is determined, according to the preceding data, that the control of the power tool is not effective enough, that is to say, the prediction effect of the machine learning model in the power tool is poor, the retraining of the machine learning model is triggered.

In an example, the capacity of a main memory of the power tool is at least 16 M bytes. In the example, to ensure the data processing capability and data storage capability of the power tool, the capacity of the main memory of the power tool is at least 16M bytes. Of course, in the actual operation process, to ensure that the power tool can implement related algorithms such as environment sensing, deep learning, human-computer interaction, and decision control and avoid the problems of poor computing power, high power consumption, and high costs, the power tool needs to meet the conditions that the computing rate is greater than 600 MIPS and the power consumption is less than 100 mA. When the power tool has a relatively high configuration, the machine learning model may also be retrained locally on the power tool, rather than on the cloud server.

In an example, the machine learning model is the neural network model. In the example, in the case where the initial machine learning model is the neural network model, the updated machine learning model is still the neural network model.

In an example, the machine learning model is the support vector machine model. In the example, in the case where the initial machine learning model is the support vector machine model, the updated machine learning model is still the support vector machine model.

The machine learning model may be one or a combination of more of the linear model, the decision tree model, the Bayesian classification model, the ensemble learning model, the dimensionality reduction and metric learning model, the reinforcement learning model, and the deep learning model.

In an example, FIG. 38 is another flowchart of the control method for the power tool according to an example of the present application. As shown in FIG. 38, the method includes the steps described below.

In S410, the operating data of the power tool is collected so that a training data set is formed, where an operating condition distribution of data samples in the training data set is consistent with an operating condition proportion actually required by the power tool.

In S420, the machine learning model is selected.

In S430, the machine learning model is trained using the training data set so that the machine learning control program is generated.

In S440, the machine learning control program is stored in the memory of the power tool.

In S450, the machine learning control program is executed, and the electric motor of the power tool is controlled according to an output of the machine learning control program.

To avoid overfitting or underfitting of the machine learning control program, control may be performed from two aspects: sample selection and training parameter limitation. The sample selection may be divided into horizontal record selection of samples (which rows of samples are selected) and vertical parameter selection (which columns of samples are selected). In the example, the operating condition proportion actually required by the power tool may be counted, and the operating condition distribution of the data samples in the training data set may be determined according to the operating condition proportion. The operating condition is used for reflecting the complexity of an actual scenario in which the power tool is located. For example, the power tool is a mower, and the operating condition of the mower may be a flat road surface or an uneven road surface. For another example, the power tool is an electric screwdriver, and the operating condition of the electric screwdriver may be a flat surface or a corner. Exemplarily, for different operating conditions such as a flat road surface, an uneven road surface, a corner, a flat surface, an edge region, and a middle region, the complexity of the corresponding functional requirements varies. Exemplarily, for different actual application scenarios, sample records corresponding to various operating conditions such as startup, braking, rapid acceleration, a constant speed, deceleration, and bumping may be proportionally selected from a large number of sample records according to the proportion actually required by the operating condition. For different functional requirements, different vertical parameter dimensions may be selected from parameters such as a current, a voltage, a rotational speed, a load torque, a motor temperature, an ambient temperature, or ambient humidity. For a single functional requirement such as high power, a high rotational speed, high heavy load, or long endurance, the number of input dimensions is reduced, and more attention is paid to increasing and maintaining the rotational speed. For complex and comprehensive requirements, for example, those that need to involve user habits or require knowledge of temporal or spatial scenarios, more scenario-related inputs are provided, such as a temperature input, a humidity input, an acceleration input, a video/graphical scenario determination input, or a time input, and the complexity of the model and the number of sample dimensions are increased correspondingly. The time scenario may refer to the time at which the power tool is currently used, such as morning, noon, or night. The matching among a data sample size, a data input dimension, and a trained model, particularly for offline or semi-offline training, enables the achievement of the best training effect (the smallest generalization error) with the minimum training cost (in terms of time, a model, a sample size, and an input dimension).

Table 1 Relationship table between functional requirements and dimension selection

|  | Current | Voltage | Rotationa l speed | Load torque | Motor temperature | Ambient temperature and humidity |
|---|---|---|---|---|---|---|
| High power | √ | √ |  |  |  |  |
| High rotational speed |  |  | √ |  |  |  |
| High heavy load |  |  |  | √ | √ |  |

(continued)

|  | Current | Voltage | Rotationa l speed | Load torque | Motor temperature | Ambient temperature and humidity |
|---|---|---|---|---|---|---|
| Long endurance | √ | √ | √ |  |  |  |
| Comfort level |  |  | √ |  | √ | √ |

For example, as shown in Table 1, when the power tool adopts the single function of the high power, the current and voltage of the power tool may be directly considered without considering parameters of other dimensions. For another example, when the power tool adopts the single function of the high rotational speed, the rotational speed of the power tool may be directly analyzed without analyzing parameters of other dimensions. For another example, when the user habits of the power tool are comprehensively considered, for example, a certain comfort level, various parameters such as the ambient temperature, the ambient humidity, the rotational speed, and the motor temperature may be considered. Of course, the various functions in Table 1 and the analyzed dimension parameters are only illustrative examples, and other possible combinations may also be included.

In an example, the training data set includes at least 10,000 samples. In the example, to ensure the prediction effect of the machine learning model, the training data set for training the machine learning model includes the at least 10,000 samples. Of course, in the actual operation process, the sample size of the training data set may be reconfigured according to the complexity of the power tool, which is not limited.

In an example, operating modes of the power tool include at least a first operating mode and a second operating mode.

The control method further includes: using data of m dimensions in the training data set to generate the first machine learning control program, where the first operating mode is controlled through the first machine learning control program; and using data of n dimensions in the training data set to generate the second machine learning control program, where the second operating mode is controlled through the second machine learning control program; where m is less than n, and m and n are each positive integers. In the example, it is to be understood that the first operating mode corresponds to the single functional requirement, and the second operating mode corresponds to the complex and comprehensive requirements. In the example, the first operating mode is directed to the single functional requirement of the power tool, and data of fewer dimensions in the training data set may be used for generating the first machine learning control program; and the second operating mode is directed to the complex and comprehensive requirements, data of more dimensions in the training data set may be used for generating the second machine learning control program.

In an example, in the second operating mode, at least one feature of an operating environment of the power tool is used as an input parameter of the second operating mode. In an example, the second operating mode is directed to the complex and comprehensive requirements. To ensure that the second power tool correspond to user habits, one or more features of an actual operating environment currently corresponding to the power tool may be used as input parameters of the second operating mode so that the second machine learning control program is generated using the one or more features in the actual operating environment, and then the second machine learning control program may be configured to control the second operating mode.

In an example, the at least one feature of the operating environment includes one of the following selections: humidity, a temperature, and an environmental image. In the example, the at least one feature of the operating environment refers to an environmental parameter of an actual application scenario corresponding to the power tool. For example, the at least one feature of the operating environment may be the humidity, temperature, or environmental image of the actual application scenario. The environmental image is used for characterizing parameters such as the weather and use location of the actual application scenario currently corresponding to the power tool.

In an example, a penalty coefficient of the first machine learning control program is less than a penalty coefficient of the second machine learning control program. The penalty coefficient refers to the degree of a penalty for a classification error. The larger the penalty coefficient, the better the effect of a classifier, but overfitting is easy to occur, and the generalization ability is worse. The smaller the penalty coefficient, the better the generalization ability, but the accuracy is slightly reduced. In the example, in the case where the power tool is used for meeting the single functional requirement and the power tool is controlled through the first machine learning control program, the penalty coefficient of the first machine learning control program may be slightly small so that the generalization ability of the first machine learning control program is ensured; and in the case where the power tool is used for meeting the complex and comprehensive requirements and the power tool is controlled through the second machine learning control program, the penalty coefficient of the second machine learning control program may be slightly larger so that the classification effect of the second machine learning control program is ensured.

In some examples, a model of the penalty coefficient includes one of the following: a support vector machine (SVM) model, a neural network model, a clustering model, a deep learning model, or a reinforcement learning model.

In an example, the complexity of the operating condition distribution of the power tool is proportional to the penalty coefficient. In the example, the more complex the operating condition distribution of the power tool, the larger the penalty coefficient correspondingly. In the example, in the case where the complexity of the operating condition distribution of the power tool is higher, the penalty coefficient is larger, which can ensure a better classification effect of the first machine learning model corresponding to the power tool. Correspondingly, in the case where the complexity of the operating condition distribution of the power tool is lower, the penalty coefficient is smaller, which can ensure a better generalization ability of the second machine learning model corresponding to the power tool.

In an example, the sample size of the training data set of the power tool is proportional to the penalty coefficient. In the example, the larger the sample size of the training data set of the power tool, the larger the penalty coefficient correspondingly. In the example, a larger sample size of the training data set of the power tool indicates a more complex operating condition distribution corresponding to the power tool, and correspondingly, the penalty coefficient is larger.

In an example, the complexity of an environment where the power tool is located is proportional to the penalty coefficient. In the example, the more complex the environment in which the power tool is located, the larger the penalty coefficient correspondingly.

In the example, it is assumed that the power tool uses M pieces of sample data and data of N dimensions, and a formula that combines a loss function with the elastic net is as follows:

$$LOST = Min.\left(\frac{1}{M}\sum_{n=1}^{M} L(y_n, f(x_n)) + \lambda \sum_j^N \left(\alpha\theta_j^2 + (1-\alpha)|\theta_j|\right)\right)$$

In the example, training may be performed for different operating conditions separately according to the operating condition distribution of the power tool, and different penalty coefficients $\alpha$ and $\lambda$ are used. LOST represents a loss, where $\alpha$ is the penalty coefficient corresponding to the operating condition, and $\lambda$ is the penalty coefficient corresponding to the sample size. The thresholds of both are within [0,1]. For example, for the complex and comprehensive requirements, the penalty coefficient $\alpha$ has a large value, for example, $\alpha > 0.5$; and for the single functional requirement, the penalty coefficient $\alpha$ has a small value, for example, $\alpha < 0.5$. For a small sample size, the penalty coefficient $\lambda$ has a small value, for example, $\lambda < 0.5$. The penalty coefficient $\lambda$ corresponding to the sample size has an optimal value that minimizes LOS, and LOST increases from the minimum on both sides of this optimal value.

It is to be understood that various forms of the preceding flows may be used with steps reordered, added, or deleted. For example, the steps described in the present application may be performed in parallel, in sequence, or in a different order as long as the desired results of the technical solutions in the present application can be achieved. The execution sequence of the steps is not limited herein.

The scope of the present application is not limited to the preceding examples. **It is** to be understood by those skilled in the art that various modifications, combinations, subcombinations, and substitutions may be made according to design requirements and other factors.

The basic principles, main features, and advantages of this application are shown and described above. **It** is to be understood by those skilled in the art that the aforementioned examples do not limit the present application in any form, and all technical solutions obtained through equivalent substitutions or equivalent transformations fall within the scope of the present application.

**Claims**

1. A battery pack for powering a power tool, comprising:

    a housing;
    a cell accommodated in the housing;
    a sensor electrically connected to the cell, wherein the sensor is configured to generate sensor data indicating an operating parameter of the battery pack; and
    an electronic controller electrically connected to the sensor, wherein the electronic controller comprises an electronic processor and a memory, the memory comprises a machine learning program for execution by the electronic processor, and the electronic controller is configured to:

        receive the sensor data;
        process the sensor data using the machine learning program, wherein the machine learning program comprises a trained neural network model; and
        use the machine learning program to generate an output based on the sensor data, wherein the output indicates at least one of a state of charge (SOC), a state of temperature (SOT), a state of health (SOH), and a state of power (SOP) of the cell.

2. The battery pack for powering a power tool according to claim 1, wherein the neural network model is a physics-informed neural network (PINN) model.

3. The battery pack for powering a power tool according to claim 2, wherein the physics-informed neural network (PINN) model uses a heat transfer partial differential equation as a constraint of a neural network.

4. The battery pack for powering a power tool according to claim 1, wherein the sensor data comprises at least one of current data, voltage data, temperature data, and time data.

5. The battery pack for powering a power tool according to claim 1, wherein the neural network model is a deep neural network.

6. The battery pack for powering a power tool according to claim 5, wherein the electronic controller resamples a preset raw data set to create an augmented sample and trains a series of extreme learning machines based on the sample.

7. The battery pack for powering a power tool according to claim 1, wherein the neural network model is a recurrent neural network.

8. The battery pack for powering a power tool according to claim 1, further comprising a communication module, wherein a machine learning control program is generated outside the battery pack by being trained on preset sensor data and a related output, and is received by the communication module.

9. The battery pack for powering a power tool according to claim 1, wherein the battery pack is a detachable battery pack.

10. The battery pack for powering a power tool according to claim 1, wherein the battery pack is a rechargeable battery pack.

11. A battery pack for powering a power tool, comprising:

a housing;
a cell accommodated in the housing;
a power tool interface disposed on the housing and configured to be coupled to the power tool;
a discharging circuit electrically connected to the cell and the power tool interface separately, wherein the discharging circuit is configured to transfer electrical energy to the power tool via the power tool interface;
a sensor electrically connected to the cell, wherein the sensor is configured to generate sensor data indicating an operating parameter of the battery pack; and
a first electronic controller at least configured to control the discharging circuit, wherein the electronic controller comprises an electronic processor and a memory, the memory comprises a machine learning program for execution by the electronic processor, and the electronic controller is configured to:

receive the sensor data;
process the sensor data using the machine learning program; and
use the machine learning program to generate an output based on the sensor data and adjust a protection threshold of the battery pack based on the generated output.

12. The battery pack for powering a power tool according to claim 11, wherein the first electronic controller further comprises a second machine learning program, and the second machine learning program controls the discharging circuit based on the protection threshold of the battery pack.

13. The battery pack for powering a power tool according to claim 11, wherein the sensor data comprises current data, voltage data, temperature data, and time data.

14. The battery pack for powering a power tool according to claim 11, wherein the protection threshold comprises at least one of an over-temperature protection threshold, an under-temperature protection threshold, an overvoltage protection threshold, an undervoltage protection threshold, and an overcurrent protection threshold.

15. The battery pack for powering a power tool according to claim 11, wherein the electronic controller controls power supply from the battery pack to the power tool based on the protection threshold.

16. The battery pack for powering a power tool according to claim 11, wherein the protection threshold is sent to the power tool via the power tool interface, and the power tool controls power consumption of the power tool based on the protection threshold.

17. The battery pack for powering a power tool according to claim 11, further comprising a second electronic controller, wherein the second electronic controller is at least configured to control the discharging circuit, and the second electronic controller controls the discharging circuit based on the protection threshold of the battery pack.

18. The battery pack for powering a power tool according to claim 17, wherein the second electronic controller comprises a machine learning program.

19. The battery pack for powering a power tool according to claim 17, wherein the second electronic controller and the first electronic controller are disposed on a same circuit board.

20. The battery pack for powering a power tool according to claim 17, wherein the second electronic controller and the first electronic controller are disposed on different circuit boards.

21. A battery pack for powering a power tool, comprising:

   a housing;
   a cell accommodated in the housing;
   a power tool interface disposed on the housing and configured to be coupled to the power tool and communicate with the power tool;
   a discharging circuit electrically connected to the cell and the power tool interface separately, wherein the discharging circuit is configured to transfer electrical energy to the power tool via the power tool interface; and
   an electronic controller comprising an electronic processor and a memory, wherein the memory comprises a machine learning program for execution by the electronic processor, and the electronic controller is configured to:

      collect operating data from the power tool through the power tool interface;
      process the operating data using the machine learning program; and
      use the machine learning program to generate an output based on the operating data and select a discharging mode and control the discharging circuit based on the generated output.

22. The battery pack for powering a power tool according to claim 21, wherein the discharging mode comprises a performance mode, a power consumption mode, and a balancing mode.

23. The battery pack for powering a power tool according to claim 21, wherein the discharging mode comprises a series mode and a parallel mode.

24. The battery pack for powering a power tool according to claim 21, wherein the machine learning program identifies a type of the power tool according to the operating data.

25. The battery pack for powering a power tool according to claim 21, wherein the machine learning program identifies a use habit of a user of the power tool according to the operating data.

26. The battery pack for powering a power tool according to claim 21, wherein the electronic controller controls power supply from the battery pack to the power tool based on the discharging mode.

27. The battery pack for powering a power tool according to claim 21, wherein the discharging mode is sent to the power tool via the power tool interface, and the power tool controls power consumption of the power tool based on the discharging mode.

28. The battery pack for powering a power tool according to claim 21, further comprising a communication module, wherein a machine learning control program is generated outside the battery pack by being trained on preset sensor data and a related output, and is received by the communication module.

29. The battery pack for powering a power tool according to claim 21, wherein a machine learning control program is generated outside the battery pack by being trained on preset sensor data and a related output, and is sent to the battery pack by the power tool via the power tool interface.

30. The battery pack for powering a power tool according to claim 21, wherein each discharging mode predefines parameter information such as a discharging voltage, a discharging current, a maximum discharging current, and a discharging cutoff voltage, and a combination thereof.

31. A battery pack, comprising:

a housing;
a cell group accommodated in the housing, wherein the cell group comprises a plurality of single cells;
a display apparatus disposed on the housing and configured to indicate a state of the battery pack;
a sensor electrically connected to the cell group, wherein the sensor is configured to generate sensor data indicating an operating parameter of the battery pack;
a circuit board electrically connected to the cell group and the sensor, wherein a plurality of electronic elements are disposed on the circuit board; and
an electronic controller disposed on the circuit board and electrically connected to the sensor, wherein the electronic controller comprises an electronic processor and a memory, the memory comprises a machine learning program for execution by the electronic processor, and the electronic controller is configured to:

receive the sensor data;
process the sensor data using the machine learning program;
use the machine learning program to generate an output based on the sensor data, wherein the generated output indicates failures of the plurality of single cells or failures of the plurality of electronic elements; and
control, according to the generated output, the display apparatus to display an abnormal state.

32. The battery pack according to claim 31, further comprising a communication module, wherein the communication module is configured to be communicatively connected to a remote device, and the electronic controller is further configured to control, according to the generated output, the communication module to send the failures to the remote device.

33. The battery pack according to claim 32, wherein the remote device is at least one selected from the following groups: a server, a smartphone, a tablet computer, and a laptop computer.

34. The battery pack according to claim 32, wherein the communication module comprises at least one device selected from the following groups: Bluetooth, a local area network, a wireless network, and a cellular network.

35. The battery pack according to claim 31, wherein the output comprises cell impedance data, cell temperature data, a life warning, an aging warning, or an installation failure warning.

36. The battery pack according to claim 31, wherein the display apparatus receives a control signal through a device that generates a visual signal or an auditory signal and communicates state information to a user.

37. The battery pack according to claim 34, wherein the display apparatus comprises an indicator light, a buzzer, or a display screen.

38. The battery pack according to claim 31, further comprising a power tool interface, wherein the power tool interface is disposed on the housing and configured to be coupled to the power tool and communicate with the power tool, and the electronic controller is further configured to send the failures to the power tool through the power tool interface according to the generated output.

39. The battery pack according to claim 31, further comprising a power tool interface for charging, wherein the power tool interface for charging is disposed on the housing and configured to be coupled to a charger and cause the charger to charge the battery pack, and the electronic controller is further configured to send the failures to the charger through the power tool interface according to the generated output.

40. The battery pack according to claim 31, wherein the electronic controller predicts lithium plating, folding, and a structural change of a battery by implementing a neural network.

41. A battery pack, comprising:

a housing;
a cell group accommodated in the housing, wherein the cell group comprises a plurality of single cells;
a communication module configured to be communicatively connected to a remote device;
a sensor electrically connected to the cell group, wherein the sensor is configured to generate sensor data indicating an operating parameter of the battery pack;
a circuit board electrically connected to the cell group and the sensor, wherein a plurality of electronic elements are disposed on the circuit board; and
an electronic controller disposed on the circuit board and electrically connected to the sensor, wherein the electronic controller comprises an electronic processor and a memory, the memory comprises a machine learning program for execution by the electronic processor, and the electronic controller is configured to:

receive the sensor data;
process the sensor data using the machine learning program;
use the machine learning program to generate an output based on the sensor data, wherein the generated output indicates failures of the plurality of single cells or failures of the plurality of electronic elements; and
control, according to the generated output, the communication module to send the failures to the remote device.

42. The battery pack according to claim 41, wherein the remote device is at least one selected from the following groups: a server, a smartphone, a tablet computer, and a laptop computer.

43. The battery pack according to claim 41, wherein the communication module comprises at least one device selected from the following groups: Bluetooth, a local area network, a wireless network, and a cellular network.

44. An electronic combination, comprising:
a battery pack which comprises:

a housing;
a cell group accommodated in the housing, wherein the cell group comprises a plurality of single cells; and
a sensor, wherein the sensor is supported by the housing and configured to generate sensor data indicating an operating parameter of the battery pack;
a switching element configured to control an input current of the battery pack or an output current of the battery pack; and
an electronic controller communicatively connected to the sensor, wherein the electronic controller comprises an electronic processor and a memory, the memory comprises a first machine learning program and a second machine learning program for execution by the electronic processor, and the electronic controller is configured to:

receive the sensor data;
process the sensor data using the first machine learning program and generate a first output based on the sensor data;
process the sensor data using the second machine learning program and generate a second output based on the sensor data; and
generate a third output based on the first output and the second output and control the switching element based on the generated third output.

45. The electronic combination according to claim 44, wherein the electronic controller is further configured to adjust a protection threshold based on the first output and determine, based on a comparison result of the second output and the protection threshold, whether to charge the cell group.

46. The electronic combination according to claim 44, wherein the electronic controller is further configured to adjust a protection threshold based on the first output and adjust a charging state of the cell group based on a calculation result of the second output and the protection threshold.

47. The electronic combination according to claim 44, wherein the electronic controller is further configured to adjust a protection threshold based on the first output and determine, based on a comparison result of the second output and the protection threshold, whether to cause the cell group to discharge electricity.

48. The electronic combination according to claim 44, wherein the electronic controller is further configured to adjust a protection threshold based on the first output and adjust a discharging state of the cell group based on a calculation result of the second output and the protection threshold.

49. The electronic combination according to claim 45, wherein the protection threshold is at least one of an overvoltage protection threshold, an undervoltage protection threshold, an overcurrent protection threshold, or an over-temperature protection threshold.

50. The electronic combination according to claim 44, wherein the switching element and the electronic controller are disposed in the battery pack.

51. The electronic combination according to claim 44, wherein the electronic controller is disposed in the battery pack.

52. The electronic combination according to claim 44, wherein the switching element and the electronic controller are disposed outside the battery pack.

53. The electronic combination according to claim 44, wherein the electronic controller is disposed outside the battery pack.

54. A battery management system, comprising:

a wireless communication apparatus configured to support at least one wireless communication protocol;
an electronic controller electrically connected to the wireless communication apparatus, wherein the electronic controller comprises an electronic processor and a memory, and the memory comprises a machine learning program for execution by the electronic processor;
a plurality of groups of cell modules, wherein each group of cell modules comprises at least one cell, a slave controller, a sensor, a wireless communication module, and a bypass circuit;
wherein the slave controller is electrically connected to the sensor and the wireless communication module separately and is configured to:

receive sensor data that is generated by the sensor and indicates an operating parameter of each of the at least one cell and send the sensor data to the electronic controller through the wireless communication module; and
acquire returned information from the electronic controller through the wireless communication module and control the bypass circuit based on the returned information;
wherein the electronic controller is configured to:

receive sensor data of the plurality of groups of cell modules from the plurality of groups of cell modules through the wireless communication apparatus;
process the sensor data of the plurality of groups of cell modules using the machine learning program, wherein the machine learning program is a trained machine learning model;
use the machine learning program to generate the returned information based on the sensor data of the plurality of groups of cell modules; and
send the returned information to the slave controller through the wireless communication apparatus.

55. The battery management system according to claim 54, wherein the bypass circuit is turned on or off such that a current is controlled to pass through a cell module among the plurality of groups of cell modules or not.

56. The battery management system according to claim 54, wherein the wireless communication apparatus and the wireless communication module support a Bluetooth communication protocol, infrared communication, or near-field communication (NFC).

57. The battery management system according to claim 54, wherein the wireless communication apparatus further supports a wireless fidelity (Wi-Fi) network or a cellular network.

**58.** The battery management system according to claim 54, wherein a machine learning control program is trained based on preset sensor data and a related output to be generated outside a battery pack and is received by the wireless communication apparatus.

**59.** The battery management system according to claim 54, wherein the wireless communication apparatus is configured to wirelessly receive a machine learning program update from an external system apparatus, the machine learning program is an adjustable machine learning program, and a machine learning controller is configured to update the machine learning program based on the machine learning program update.

**60.** The battery management system according to claim 54, wherein the wireless communication apparatus, the electronic controller, and the plurality of groups of cell modules are disposed in a housing of a battery pack.

**61.** The battery management system according to claim 54, wherein the wireless communication apparatus and the electronic controller are disposed in a housing of a power tool, the plurality of groups of cell modules are disposed in a housing of a battery pack, and the battery pack powers the power tool.

**62.** The battery management system according to claim 54, wherein the plurality of groups of cell modules are disposed in a housing of a battery pack, the wireless communication apparatus and the electronic controller are disposed in a housing of a charger, and the charger charges the battery pack.

**63.** The battery management system according to claim 54, wherein the plurality of groups of cell modules are disposed in a housing of a battery pack, the wireless communication apparatus and the electronic controller are disposed in an external device, and the external device is communicatively connected to the battery pack.

**64.** A charger, comprising:

a housing;
a battery pack interface disposed on the housing and configured to be coupled to a battery pack;
a charging circuit configured to be electrically connected to the battery pack interface and charge the battery pack; and
an electronic controller comprising an electronic processor and a memory, wherein the memory stores a machine learning program executable by the electronic processor,
and the machine learning program comprises a vector model and a plurality of reference vectors;
wherein the electronic controller is configured to:

record charging data of the battery pack generated when the battery pack is charged by the charging circuit;
vectorize the charging data using the vector model to obtain a charging feature vector of the battery pack;
calculate distances between the charging feature vector and the plurality of reference vectors separately; and
select an aging parameter corresponding to a reference vector with a minimum distance as an aging evaluation value for the battery pack.

**65.** The charger according to claim 64, wherein the charging data comprises at least one of charging time, an ambient temperature, a charging voltage, a charging current, a charging temperature, and a state of charge (SOC) of the battery pack, a cell voltage, a cell voltage mean, a cell voltage standard deviation, a maximum cell voltage, a minimum cell voltage, and a difference between the maximum cell voltage and the minimum cell voltage of each cell in the battery pack, and a measured temperature, a measured temperature mean, a measured temperature standard deviation, a maximum measured temperature, a minimum measured temperature, and a difference between the maximum measured temperature and the minimum measured temperature at each temperature measurement point in the battery pack.

**66.** The charger according to claim 64, wherein the aging parameter is a state of health (SOH) of the battery pack.

**67.** The charger according to claim 66, wherein the electronic controller is further configured to use a mean of a plurality of charging feature vectors in a same SOH interval as a reference vector corresponding to the SOH interval.

**68.** The charger according to claim 64, wherein the aging parameter is a remaining maximum capacity of the battery pack and/or a direct current internal resistance value of the battery pack.

69. The charger according to claim 64, wherein the battery pack interface comprises a positive terminal, a negative terminal, and a communication terminal.

70. The charger according to claim 69, wherein the electronic controller is further configured to transmit the aging evaluation value for the battery pack to the battery pack through the communication terminal.

71. The charger according to claim 64, wherein the battery pack is detachably connected to a power tool and powers the power tool.

72. The charger according to claim 64 or 71, further comprising a communication module communicatively connected to a remote device and electrically connected to the electronic controller, wherein the electronic controller is further configured to transmit the aging evaluation value for the battery pack to the remote device or the power tool through the communication module.

73. The charger according to claim 64, wherein the vector model comprises a Siamese network model.

74. A battery pack for powering a power tool, comprising:

a housing;
a cell accommodated in the housing;
a sensor assembly electrically connected to the cell, wherein the sensor assembly is configured to generate sensor data indicating an operating parameter of the battery pack; and
an electronic controller electrically connected to the sensor assembly and comprising an electronic processor and a memory, wherein the memory stores a machine learning program executable by the electronic processor;
wherein the electronic controller is configured to:

receive the sensor data, wherein the sensor data comprises first-type sensor data and second-type sensor data;
use the machine learning program to generate a predicted temperature change rate of the battery pack based on the first-type sensor data;
calculate a measured temperature change rate of the battery pack based on the second-type sensor data; and
issue an alert of a thermal runaway risk of the battery pack when the measured temperature change rate is greater than the predicted temperature change rate.

75. The battery pack according to claim 74, wherein the electronic controller is configured to issue an alert of a high-level thermal runaway risk of the battery pack when a difference between a real-time temperature change rate and the predicted temperature change rate is greater than or equal to a first temperature difference threshold.

76. The battery pack according to claim 75, wherein the electronic controller is configured to issue an alert of a medium-level thermal runaway risk of the battery pack when the difference between the real-time temperature change rate and the predicted temperature change rate is less than the first temperature difference threshold but greater than or equal to a second temperature difference threshold.

77. The battery pack according to claim 76, wherein the electronic controller is configured to issue an alert of a low-level thermal runaway risk of the battery pack when the difference between the real-time temperature change rate and the predicted temperature change rate is less than the second temperature difference threshold.

78. The battery pack according to claim 74, wherein the first-type sensor data comprises at least one of a voltage, a current, a temperature, and a state of charge (SOC) of the battery pack and an operating state, a running duration, a rotational speed of an electric motor, and output power of the power tool.

79. The battery pack according to claim 74, wherein the second-type sensor data comprises measured temperatures at one or more temperature measurement points in the battery pack.

80. The battery pack according to claim 74, wherein the first-type sensor data is partially coincident with the second-type sensor data.

81. The battery pack according to claim 74, wherein the machine learning program comprises a random forest model.

82. The battery pack according to claim 74, further comprising one or more risk indicator lights, wherein the electronic controller is further electrically connected to the one or more risk indicator lights and is configured to turn on, based on a current thermal runaway risk level of the battery pack, a risk indicator light of the one or more risk indicator lights that corresponds to the current thermal runaway risk level.

83. The battery pack according to claim 74, further comprising a communication module communicatively connected to a remote device and electrically connected to the electronic controller, wherein the electronic controller is further configured to transmit a current thermal runaway risk level of the battery pack to the remote device through the communication module.

84. A method for constructing a failure prediction model for a battery pack, wherein the battery pack is configured to power a power tool, and the method for constructing a failure prediction model for a battery pack comprises:

acquiring data, wherein use data of the battery pack and operating data of the power tool are acquired;
preprocessing the data, wherein at least one of data cleaning, data integration, and data correction is performed on the use data and the operating data so that streaming data based on a time series is obtained;
performing feature extraction, wherein the streaming data is extracted and reprocessed through a sliding window so that corresponding feature data is obtained;
constructing the model, wherein based on a failure prediction target, a corresponding machine learning model is used to establish a corresponding failure prediction model for the battery pack; and
performing training and validation, wherein the failure prediction model for the battery pack is trained with the corresponding feature data, and validation, evaluation, and optimization are performed on the trained failure prediction model for the battery pack.

85. The method according to claim 84, wherein before preprocessing the data, the method further comprises performing data analysis, wherein feature analysis is performed on use data and operating data before and after a battery pack failure occurs to determine a potential factor related to the battery pack failure, and the subsequent data preprocessing and the subsequent feature extraction are performed based on the potential factor.

86. The method according to claim 84, wherein constructing the model comprises using a regression model to establish the failure prediction model for the battery pack in a case where the failure prediction target is to predict a remaining time before a failure of the battery pack occurs.

87. The method according to claim 84, wherein constructing the model comprises using a classification model to establish the failure prediction model for the battery pack in a case where the failure prediction target is to predict a category of a failure of the battery pack that is to occur.

88. The method according to claim 84, wherein constructing the model comprises using a regression model to establish the failure prediction model for the battery pack in a case where the failure prediction target is to predict a probability of a failure of the battery pack that is to occur.

89. The method according to any one of claims 86 to 88, wherein the classification model comprises a logistic regression model, a boosted decision tree, a decision forest, a neural network model, a support vector machine, and a k-nearest neighbor model, and the regression model comprises a Poisson regression model, a boosted decision tree regression model, a decision forest regression model, and a neural network regression model.

90. The method according to claim 84, wherein performing the training and validation comprises using the corresponding feature data to perform cross-validation on the failure prediction model for the battery pack so as to optimize the failure prediction model for the battery pack.

91. The method according to claim 84, wherein performing the training and validation comprises determining accuracy, precision, and a recall rate of each failure prediction model for the battery pack and determining an optimal failure prediction model for the battery pack based on the accuracy, the precision, and the recall rate, so as to subsequently use the optimal failure prediction model for the battery pack.

92. The method according to claim 84, wherein the use data of the battery pack comprises at least one of a voltage, a current, a state of charge (SOC), and a fullcharge voltage difference of the battery pack, a cell voltage of each cell in the battery pack, and a measured temperature at each temperature measurement point in the battery pack.

93. The method according to claim 84, wherein the operating data of the power tool comprises at least one of an operating state, a running duration, a rotational speed of an electric motor, and output power of the power tool.

94. A method for constructing a life evaluation model for a battery pack, wherein the battery pack is configured to power a power tool, and the method for constructing a life evaluation model for a battery pack comprises:

acquiring data, wherein use data of the battery pack is acquired;
preprocessing the data, wherein at least one of data cleaning, data integration, and data correction is performed on the use data;
performing feature engineering processing, wherein the preprocessed use data is extracted and reprocessed through a sliding window so that a related feature sequence is obtained; and
constructing the model, wherein an appropriate machine learning model is used to fit the related feature sequence with a target state of health (SOH), and an evaluation index is created and a current state of health (SOH) and a future state of health (SOH) are predicted.

95. The method according to claim 94, wherein the machine learning model comprises a linear model, a decision tree model, a support vector machine model, a Bayesian model, a clustering model, a neural network model, a dimensionality reduction and metric learning model, an ensemble learning model, a reinforcement learning model, and a deep learning model.

96. The method according to claim 94, wherein the use data of the battery pack comprises at least one of a voltage, a current, and a state of charge (SOC) of the battery pack, a cell voltage of each cell in the battery pack, and a measured temperature at each temperature measurement point in the battery pack.

97. The method according to claim 94, wherein the data cleaning comprises data deduplication, outlier elimination, missing value filling, and noise reduction and conversion.

98. The method according to claim 94, wherein performing the feature engineering processing further comprises: dividing the use data into a plurality of charging processes; calculating a capacity change process of the battery pack in each charging process for a fixed voltage interval by using an ampere-hour integration method; and converting the capacity change process into a change process of the target SOH and determining a correspondence between the use data and the target SOH.

99. The method according to claim 98, wherein constructing the model comprises: using a linear regression model to fit the related feature sequence with the corresponding target SOH to obtain a machine learning model for predicting the current SOH of the battery pack.

100.
The method according to claim 98, wherein constructing the model comprises: determining a historical SOH sequence and a future SOH sequence according to the change process of the target SOH; and using a Long Short-Term Memory (LSTM) model to fit the historical SOH sequence with the future SOH sequence to obtain a machine learning model for predicting the future SOH of the battery pack.

101.
The method according to claim 94, wherein performing the feature engineering processing comprises: generating a temperature difference sequence of a temperature measurement point based on measured temperatures at the same temperature measurement point; generating a temperature difference sequence between temperature measurement points based on measured temperatures at different temperature measurement points; and generating, based on measured temperatures at each temperature measurement point, a temperature increment sequence corresponding to a unit SOC.

102.
The method according to claim 101, wherein constructing the model comprises: using an LSTM model or an XGBoost model to fit at least one of the temperature difference sequence of the temperature measurement point, the temperature difference sequence between the temperature measurement points, and the temperature increment sequence with the target SOH, so as to obtain a machine learning model for predicting the current SOH of the battery pack.

**103.**

The method according to claim 94, further comprising: performing validation, evaluation, and optimization on the life evaluation model for the battery pack based on the evaluation index and at least one of accuracy, precision, and a recall rate of the model.

**104.**

A power tool system, comprising:

a first power tool which comprises:

an electric motor; and
an electronic controller comprising an electronic processor and a memory, wherein the memory comprises a first machine learning control program for execution by the electronic processor, the first machine learning control program is a trained first machine learning model, and the electronic controller is configured to control the electric motor through the first machine learning control program; and
a second power tool which comprises:

an electric motor; and
an electronic controller comprising an electronic processor and a memory, wherein the memory comprises a second machine learning control program for execution by the electronic processor, the second machine learning control program is a trained second machine learning model, and the electronic controller is configured to control the electric motor through the second machine learning control program;
wherein the first machine learning model is trained and generated based on a first data set related to operation of the first power tool, and the second machine learning model is trained and generated based on the first machine learning model and a second data set related to operation of the second power tool.

**105.**

The system according to claim 104, wherein each of the first machine learning model and the second machine learning model is one or a combination of more of a linear model, a decision tree model, a neural network model, a support vector machine model, a Bayesian classification model, an ensemble learning model, a clustering model, a dimensionality reduction and metric learning model, a reinforcement learning model, and a deep learning model.

**106.**

The system according to claim 104, wherein a sample size of the first data set is greater than or equal to N times a sample size of the second data set, wherein N is greater than or equal to 2.

**107.**

The system according to claim 104, wherein action objects of the first power tool and the second power tool are the same.

**108.**

The system according to claim 104, wherein action objects of the first power tool and the second power tool are different.

**109.**

The system according to claim 104, wherein the first power tool is an electric drill, and the second power tool is an electric screwdriver.

**110.**

The system according to claim 104, wherein the first power tool is a handheld sander, and the second power tool is a sanding robot.

**111.** The system according to claim 104, wherein the first power tool is a handheld building construction power tool, and the second power tool is a building construction robot.

**112.**

The system according to claim 104, wherein the first power tool and the second power tool have the same electric motors.

**113.**

The system according to claim 104, wherein the first power tool and the second power tool have different electric motors.

**114.**

A power tool system, comprising:

a first power tool which comprises:

> an electric motor;
> a wireless communication module configured to wirelessly transmit data with another device; and
> an electronic controller comprising an electronic processor and a memory, wherein the memory comprises a first machine learning control program for execution by the electronic processor, and the electronic controller is configured to control the electric motor through the first machine learning control program; and
> a second power tool which comprises:

>> an electric motor;
>> a wireless communication module configured to wirelessly transmit data with another device; and
>> an electronic controller comprising an electronic processor and a memory and at least configured to control the electric motor;
>> wherein the wireless communication module of the first power tool sends the first machine learning control program to the wireless communication module of the second power tool, and the electronic controller of the second power tool is configured to train and generate a second machine learning control program based on a first machine learning model and data related to operation of the second power tool and store the second machine learning control program in the memory.

**115.**

The system according to claim 114, wherein each of the first machine learning model and a second machine learning model is one or a combination of more of a linear model, a decision tree model, a neural network model, a support vector machine model, a Bayesian classification model, an ensemble learning model, a clustering model, a dimensionality reduction and metric learning model, a reinforcement learning model, and a deep learning model.

**116.**

The system according to claim 114, wherein the electronic controller of the second power tool is further configured to control the electric motor through the second machine learning control program.

**117.**

The system according to claim 114, wherein action objects of the first power tool and the second power tool are the same.

**118.**

The system according to claim 114, wherein action objects of the first power tool and the second power tool are different.

**119.**

The system according to claim 114, wherein the first power tool is an electric drill, and the second power tool is an electric screwdriver.

**120.**

The system according to claim 114, wherein the first power tool is a push mower, and the second power tool is a riding mower or a robotic mower.

**121.**

The system according to claim 114, wherein the first power tool is a mower, and the second power tool is a snow thrower.

**122.**

The system according to claim 114, wherein the first power tool and the second power tool have the same electric motors.

**123.**

The system according to claim 114, wherein the first power tool and the second power tool have different electric motors.

**124.**

A control method for a power tool, comprising:

a sampling step in which raw data related to an operating parameter of the power tool is collected through a plurality of sensors while the power tool operates based on an initial machine learning model;
a processing step in which the raw data is cropped or compressed and processed target data is obtained;
a transmission step in which the target data is transmitted to a cloud server so that the initial machine learning model is trained and updated through the cloud server based on the target data; and
an acquisition step in which the updated machine learning model on the cloud server is acquired and the power tool is controlled, based on the updated machine learning model, to operate.

**125.**

The control method according to claim 124, wherein the step in which the raw data related to the operating parameter of the power tool is collected through the plurality of sensors comprises:

determining, according to a current running state of the power tool, a sampling stage corresponding to the plurality of sensors; and
collecting the raw data related to the operating parameter of the power tool through the plurality of sensors in the sampling stage.

**126.**

The control method according to claim 124, wherein the step in which the raw data is cropped or compressed and the processed target data is obtained comprises:

identifying and extracting similar sampled data, sampled data with a missing value, and abnormal sampled data in the raw data;
cropping the similar sampled data, the sampled data with the missing value, and the abnormal sampled data to obtain corresponding candidate data;
identifying and extracting associated sampled data and sampled data whose current byte exceeds a byte threshold in the candidate data; and
compressing the associated sampled data and the sampled data whose current byte exceeds the byte threshold to obtain the corresponding target data.

**127.**

The control method according to claim 124, further comprising:

a monitoring step in which a current error rate of the machine learning model is monitored;
a retraining step in which a model warning alert is issued when the current error rate reaches a first error rate threshold and retraining of the machine learning model is synchronously triggered; and
a switching step in which switching to a new machine learning model is performed when the current error rate reaches a second error rate threshold, wherein the second error rate threshold is greater than the first error rate threshold.

**128.**

The control method according to claim 126, wherein an actual distance difference of the similar sampled data is less than a first distance difference threshold.

**129.**

The control method according to claim 126, wherein a capacity of a main memory of the power tool is at least 16 M bytes.

**130.**

The control method according to claim 124, wherein the machine learning model is a linear model, a decision tree model, a neural network model, a support vector machine model, a Bayesian classification model, an ensemble learning model, a clustering model, a dimensionality reduction and metric learning model, a reinforcement learning model, or a deep learning model.

**131.**

The control method according to claim 124, wherein the plurality of sensors comprise a temperature sensor and a current detection element.

**132.**

The control method according to claim 124, wherein the plurality of sensors comprise an image acquisition apparatus.

**133.**
A control method for a power tool, comprising:

collecting operating data of the power tool to form a training data set;
selecting a machine learning model;
using the training data set to train the machine learning model to generate a machine learning control program;
storing the machine learning control program in a memory of the power tool; and
executing the machine learning control program and controlling an electric motor of the power tool according to an output of the machine learning control program;
wherein an operating condition distribution of data samples in the training data set is consistent with an operating condition proportion actually required by the power tool.

**134.**
The control method according to claim 133, wherein the training data set comprises at least 10,000 samples.

**135.**
The control method according to claim 133, wherein operating modes of the power tool comprise at least a first operating mode and a second operating mode;
wherein the control method further comprises: using data of m dimensions in the training data set to generate a first machine learning control program, wherein the first operating mode is controlled through the first machine learning control program; and using data of n dimensions in the training data set to generate a second machine learning control program, wherein the second operating mode is controlled through the second machine learning control program; wherein m is less than n, and m and n are each positive integers.

**136.**
The control method according to claim 135, wherein in the second operating mode, at least one feature of an operating environment of the power tool is used as an input parameter of the second operating mode.

**137.**
The control method according to claim 136, wherein the at least one feature of the operating environment comprises one of the following selections: humidity, a temperature, and an environmental image.

**138.**
The control method according to claim 135, wherein a penalty coefficient of the first machine learning control program is less than a penalty coefficient of the second machine learning control program.

**139.**
The control method according to claim 135, wherein a model of a penalty coefficient comprises one of the following: a support vector machine (SVM) model, a neural network model, a clustering model, a deep learning model, or a reinforcement learning model.

**140.**
The control method according to claim 135, wherein complexity of the operating condition distribution of the power tool is proportional to a penalty coefficient.

**141.**
The control method according to claim 135, wherein a sample size of the training data set of the power tool is proportional to a penalty coefficient.

**142.**
The control method according to claim 135, wherein complexity of an environment where the power tool is located is proportional to a penalty coefficient.

10

13

14

12

11

FIG. 1

100

10

14

11

12

17 Electronic controller

171 Electronic processor

172 Memory

15

16

Smart device 152

Wireless communication apparatus

Server 151

FIG. 2

FIG. 3

FIG. 4A

30

34

17b

31

12

FIG. 4B

30

14

32

17b

31

FIG. 4C

400

40

41

17c

152

16

Smart device

Wireless communication apparatus

251

Server

17c — Electronic controller

2511 — Processor

2512 — Memory

35

FIG. 5A

40

44

17c

41

12

FIG. 5B

40

14

42

17c

41

FIG. 5C

400

40b

41

17d

152

16

Smart device

Wireless communication apparatus

251

Server

17d — Electronic controller

2511 — Processor

2512 — Memory

35

FIG. 6

500     10

552

17

Smart device

Electronic controller

FIG. 7

400b     40b

17d

FIG. 8

11

111

118

116

114

2P

18a

181

115

117

FIG. 9

112a

1121

FIG. 10

FIG. 11

FIG. 12

11B

FIG. 13

14B'

FIG. 14

FIG. 15

FIG. 16

FIG. 17A

FIG. 17B

1000

Access exemplary sensor data collected by a sensor — 1010

↓

Establish and train a machine learning program — 1020

↓

Store the machine learning program — 1030

↓

Control a power management system according to the machine learning program — 1040

↓

Receive user feedback — 1050

↓

Adjust the machine learning program based on the user feedback — 1060

↓

Control the power management system according to the adjusted machine learning program — 1070

FIG. 18

FIG. 19

FIG. 20

FIG. 21

FIG. 22

FIG. 23

1210

Receive sensor data of
a sensor

1221

Process the sensor data
using a first machine
learning program

1222

Process the sensor data
using a second machine
learning program

1231

Generate a first output

1232

Generate a second output

1240

Generate a third output

1250

Control a switching
element

FIG. 24

181

Sensor

191

Switching
element

17

Electronic
controller

192

Cell or cell unit group

Discharging
circuit

115

Battery pack
positive terminal

116

Battery pack
negative terminal

118

Communication
module

117

Communication
terminal

FIG. 25

181
147
191
17

| | | | |
|---|---|---|---|
| Sensor | Clock module | Switching element | Electronic controller |

194

Cell or cell unit group ↔ Charging circuit → 

```
┌─────────────────────────┐ 115
│  Battery pack           │
│  positive terminal      │
│                         │ 116
│  Battery pack           │
│  negative terminal      │
│                         │ 117
│  Communication          │
│  terminal               │
└─────────────────────────┘
```

318

Communication module ↔ Communication terminal

FIG. 26

1310

Acquire data, where use data of a battery pack is acquired

1320

Preprocess the data, where at least one of data cleaning, data integration, and data correction is performed on the use data

1330

Extract a feature, where the preprocessed use data is extracted and reprocessed through a sliding window so that a related feature sequence is obtained

1340

Use an appropriate model to fit the related feature sequence with a target SOH, and create an evaluation index and predict a current SOH and a future SOH

FIG. 27

1410

Record charging data of a battery pack

1420

Use a vector model to generate a charging feature vector corresponding to the charging data

1430

Calculate the distances between the charging feature vector and reference vectors

1440

Select an aging parameter corresponding to a reference vector with the minimum distance as an aging evaluation value for the battery pack

FIG. 28

15

Remote device

12

Power tool

143

17

Electronic controller

Communication module

11

115

Battery pack positive terminal

1461

Charging positive terminal

116

Battery pack negative terminal

1461

Charging negative terminal

117

Communication terminal

1462

Communication terminal

FIG. 29

1510

Acquire data, where use data of a battery pack and operating data of a power tool are acquired

1520

Preprocess the data, where at least one of data cleaning, data integration, and data correction is performed on the use data and the operating data so that streaming data based on a time series is obtained

1530

Perform feature extraction, where the streaming data is extracted and reprocessed through a sliding window so that corresponding feature data is obtained

1540

Construct a model, where based on a failure prediction target, a corresponding machine learning model is used to establish a corresponding failure prediction model for the battery pack

1550

Perform training and validation, where the failure prediction model for the battery pack is trained with the corresponding feature data, and validation, evaluation, and optimization are performed on the trained failure prediction model for the battery pack

FIG. 30

1610

Receive first-type sensor data and second-type sensor data from a sensor assembly

1621

Use a machine learning program to generate a predicted temperature change rate of a battery pack based on the first-type sensor data

1622

Calculate a measured temperature change rate of the battery pack based on the second-type sensor data

1630

Issue an alert of a thermal runaway risk when the predicted temperature change rate is greater than the measured temperature change rate

FIG. 31

FIG. 32

1c

Power tool system 10c

First power tool 101c

Housing 102c

103c

Electronic controller

Electric motor

Electronic processor 1031c

Memory 1032c

20c

Second power tool 201c

Housing 202c

203c

Electronic controller

Electric motor

Electronic processor 2031c

Memory 2032c

FIG. 33

2c

Power tool system 30c

First power tool 301c

Housing

302c

304c

Electronic controller

Electric motor

Electronic processor 3041c

Memory 3042c

Wireless communication module 303c

40c

Wireless communication module 403c

Second power tool 401c

Housing 402c

404c

Electronic controller

Electric motor

Electronic processor 4041c

Memory 4042c

FIG. 34

First data set → First machine learning model

Second data set → Second machine learning model

FIG. 35

First data set → First machine learning model

First machine learning model → Knowledge → Second machine learning model

Second data set → Second machine learning model

FIG. 36

Collect raw data related to an operating parameter of a power tool through multiple sensors while the power tool operates based on an initial machine learning model ⟩ S310

Crop or compress the raw data and obtain processed target data ⟩ S320

Transmit the target data to a cloud server to train and update the initial machine learning model through the cloud server based on the target data ⟩ S330

Acquire the updated machine learning model on the cloud server and control, based on the updated machine learning model, the power tool to operate ⟩ S340

FIG. 37

Collect operating data of a power tool to form a training data set, where an operating condition distribution of data samples in the training data set is consistent with an operating condition proportion actually required by the power tool ⟩ S410

Select a machine learning model ⟩ S420

Use the training data set to train the machine learning model to generate a machine learning control program ⟩ S430

Store the machine learning control program in a memory of the power tool ⟩ S440

Execute the machine learning control program and control an electric motor of the power tool according to an output of the machine learning control program ⟩ S450

FIG. 38

**EP 4 697 443 A1**

## INTERNATIONAL SEARCH REPORT

| International application No. |
|---|
| **PCT/CN2024/098409** |

| A. | CLASSIFICATION OF SUBJECT MATTER |
|---|---|

H01M10/42(2006.01)i; G06N20/00(2019.01)i

According to International Patent Classification (IPC) or to both national classification and IPC

| B. | FIELDS SEARCHED |
|---|---|

Minimum documentation searched (classification system followed by classification symbols)

IPC: H01M、G06N

Documentation searched other than minimum documentation to the extent that such documents are included in the fields searched

Electronic data base consulted during the international search (name of data base and, where practicable, search terms used)

CNABS: CNTXT; VEN; WOTXT; USTXT; EPTXT; CNKI: 电动工具, 电池, 传感器, 机器学习, 模型, 放电, 充电, 无线通信, power tool, battery, sensor, machine learning, model, discharge, charge, wireless communication

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022232434 A1 (MILWAUKEE ELECTRIC TOOL CORP.) 03 November 2022 (2022-11-03) description, paragraphs 4-7, 49-133, 159-161, and 177-179, and figures 1-8 | 1-142 |
| X | CN 114423568 A (MILWAUKEE ELECTRIC TOOL CORP.) 29 April 2022 (2022-04-29) description, paragraphs 3-23, 57-138, and 183-186, and figures 1-13 and 17 | 1-142 |
| X | WO 2023076955 A1 (MILWAUKEE ELECTRIC TOOL CORP.) 04 May 2023 (2023-05-04) description, paragraphs 3-4 and 27-329, and figures 1-19 | 1-103 |
| X | CN 114675188 A (BEIJING CELLONG TECHNOLOGY CO., LTD.) 28 June 2022 (2022-06-28) description, paragraphs 3-86, and figures 1-4 | 1-20, 31-43, 54-63, 74-83 |
| X | CN 112345952 A (SHANGHAI POWER SHARE INFORMATION TECHNOLOGY CO., LTD.) 09 February 2021 (2021-02-09) description, paragraphs 7-34, and figure 1 | 64-73 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 September 2024** | **27 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

EP 4 697 443 A1

**INTERNATIONAL SEARCH REPORT**
Information on patent family members

International application No.

**PCT/CN2024/098409**

| Patent document cited in search report | | | Publication date (day/month/year) | Patent family member(s) | | | Publication date (day/month/year) |
|---|---|---|---|---|---|---|---|
| WO | 2022232434 | A1 | 03 November 2022 | DE | 112022002395 | T5 | 22 February 2024 |
| | | | | US | 2022347811 | A1 | 03 November 2022 |
| | | | | US | 12005540 | B2 | 11 June 2024 |
| | | | | CN | 117279745 | A | 22 December 2023 |
| CN | 114423568 | A | 29 April 2022 | WO | 2021016437 | A1 | 28 January 2021 |
| | | | | US | 2022299946 | A1 | 22 September 2022 |
| | | | | EP | 4003658 | A1 | 01 June 2022 |
| | | | | AU | 2020316444 | A1 | 17 February 2022 |
| | | | | CA | 3147721 | A1 | 28 January 2021 |
| WO | 2023076955 | A1 | 04 May 2023 | WO | 2023076955 | A9 | 09 November 2023 |
| CN | 114675188 | A | 28 June 2022 | WO | 2023185601 | A1 | 05 October 2023 |
| CN | 112345952 | A | 09 February 2021 | CN | 112345952 | B | 05 July 2024 |

Form PCT/ISA/210 (patent family annex) (July 2022)

**REFERENCES CITED IN THE DESCRIPTION**

**Patent documents cited in the description**

- CN 202310713474X
- CN 202310812819
- CN 202311041440
- CN 202410658068